(19) **Europäisches Patentamt / European Patent Office / Office européen des brevets**

(11) **EP 3 300 360 B1**

(12) **EUROPEAN PATENT SPECIFICATION**

(45) Date of publication and mention
of the grant of the patent:
**08.04.2020  Bulletin 2020/15**

(51) Int Cl.:
***H04N 9/31*** *(2006.01)*   ***G09F 19/22*** *(2006.01)*

(21) Application number: **17188426.5**

(22) Date of filing: **29.08.2017**

(54) **IMAGE PROJECTION SYSTEM AND IMAGE PROJECTION METHOD**

BILDPROJEKTIONSSYSTEM UND BILDPROJEKTIONSVERFAHREN

SYSTÈME ET PROCÉDÉ DE PROJECTION D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2016  JP 2016169178
31.08.2016  JP 2016169180
31.08.2016  JP 2016169181
31.08.2016  JP 2016169183**

(43) Date of publication of application:
**28.03.2018  Bulletin 2018/13**

(73) Proprietor: **Ricoh Company, Ltd.
Tokyo 143-8555 (JP)**

(72) Inventors:
• **SAKAI, Daisuke
Ohta-ku, Tokyo 143-8555 (JP)**

• **MIHIRA, Sachiko
Ohta-ku, Tokyo 143-8555 (JP)**
• **MOTOMURA, Wataru
Ohta-ku, Tokyo 143-8555 (JP)**
• **ARUGA, Ryoh
Ohta-ku, Tokyo 143-8555 (JP)**
• **NAKAMURA, Kazuaki
Ohta-ku, Tokyo 143-8555 (JP)**

(74) Representative: **Watkin, Timothy Lawrence
Harvey
Marks & Clerk LLP
Fletcher House
The Oxford Science Park
Heatley Road
Oxford OX4 4GE (GB)**

(56) References cited:
**WO-A1-2004/086755      WO-A1-2007/065694
KR-A- 20030 022 515      US-A1- 2006 248 768**

**Description**

BACKGROUND

1. Technical Field

The present invention relates to an image projection system and an image projection method.

2. Description of the Related Art

Recently, a digital signage technology has been widely used. According to the digital signage technology, content such as a dynamic image is delivered to an image projection apparatus such as a projector, and the content is projected onto a wide screen installed outdoor, at a shop front, in a public space, or the like. By using the digital signage technology, it is possible to project content suitable to a time or a place in a real-time manner, and therefore, a high advertising effect is expected.

Japanese Laid-Open Patent Application No. 2015-26992 and Japanese Laid-Open Patent Application No. 2016-85435 disclose related arts.

US 2006/248768 A1 describes a system for providing illuminated signage in a public space.

KR 2003 0022515 A describes an indoor advertisement apparatus including a player for regenerating the contents of the advertisement as a moving picture.

WO 2004/086755 A1 describes a method for creating brightness filters used in a projection system.

WO 2007/065694 A1 describes a projection glass element based on transmitted-light or backwall and front light projection in the form of an insulating glass element assembly.

SUMMARY

The invention is defined by the independent claims. The dependent claims define advantageous embodiments. Any "aspect", "example" and "embodiment" of the description not falling within the scope of the claims does not form part of the invention and is provided for illustrative purposes only.

Thus, it is possible to implement a digital signage using a combination of a plurality of surfaces.

Other objects, features, and advantages will become more apparent from the following detailed description when read in conjunction with the accompanying drawings.

BRIEF DESCRIPTION OF THE DRAWINGS

FIG. 1 illustrates an example where an image projection system is used;
FIGs. 2A and 2B illustrate operation of signage apparatuses installed at positions corresponding to windowpanes of a building;
FIG. 3 illustrates one example of a system configuration of the image projection system;
FIG. 4 illustrates one example of a hardware configuration of an information processing apparatus;
FIGs. 5A and 5B illustrate one example of signage medium information;
FIG. 6 illustrates one example of image information;
FIGs. 7A-7C illustrate examples of schedule information;
FIG. 8 is a flowchart illustrating a flow of a signage process;
FIG. 9 illustrates a functional configuration of a calibration unit of the information processing apparatus;
FIG. 10 is a sequence diagram of a first calibration process.
FIG. 11 illustrates one example of a screen page displayed on the information processing apparatus at a time when a first calibration process is carried out;
FIG. 12 illustrates one example of a calibration pattern image projected in the first calibration process;
FIG. 13 illustrates another example of a calibration pattern image projected in the first calibration process;
FIG. 14 is a sequence diagram of a second calibration process;
FIG. 15 illustrates one example of a white image projected in the second calibration process;
FIG. 16 illustrates a functional configuration of an image processing unit of the information processing apparatus;
FIG. 17 illustrates an actual example of image processing;
FIG. 18 is a flowchart of image processing;
FIG. 19 is a flowchart illustrating a flow of a first splitting process;

FIG. 20A and 20B illustrate one example of a first splitting process;

FIG. 21 illustrates a functional configuration of a signage control unit of the information processing apparatus;

FIG. 22 is a flowchart illustrating a flow of a signage control process (for starting);

FIGs. 23A and 23B illustrate examples of required time information and a time to send an instruction to each signage apparatus;

FIG. 24 is a flowchart illustrating a flow of a signage control process (for ending);

FIGs. 25A and 25B illustrate examples of required time information and a time to send an instruction to each signage apparatus;

FIG. 26 illustrates a functional configuration of a monitoring unit of the information processing apparatus;

FIG. 27 is a flowchart illustrating a flow of a monitoring process;

FIG. 28 illustrates an example of schedule information according to a second embodiment;

FIG. 29 is a flowchart illustrating a flow of a signage control process according to the second embodiment;

FIGs. 30A and 30B are flowcharts illustrating details of a start control process and an end control process according to the second embodiment;

FIG. 31 illustrates an actual example of an automatic recovery process and a switching process according to the second embodiment;

FIG. 32 illustrates one example of a functional configuration of a monitoring apparatus according to the second embodiment;

FIG. 33 illustrates one example of monitoring object management information according to the second embodiment;

FIG. 34 is a flowchart illustrating a flow of a monitoring process;

FIG. 35 is a flowchart illustrating a flow of a signage control process according to a third embodiment;

FIG. 36 is a flowchart illustrating a flow of a schedule management process according to the third embodiment;

FIGs. 37A and 37B illustrate examples of a projection schedule screen page and a new-registration screen page according to the third embodiment;

FIGs. 38A and 38B illustrate examples of a projection schedule screen page and a schedule editing screen page according to the third embodiment;

FIG. 39 is a flowchart illustrating a flow of a schedule deletion process according to the third embodiment;

FIGs. 40A and 40B illustrate states where the schedule deletion process is carried out from the projection schedule screen page according to the third embodiment;

FIG. 41 is a flowchart illustrating a flow of a content deletion process according to the third embodiment;

FIGs. 42A and 42B illustrate examples of a projection schedule screen page and an unused content list screen page according to the third embodiment;

FIGs. 43 and 44 are a flowchart illustrating a flow of image processing according to a fourth embodiment;

FIG. 45 is a flowchart illustrating a flow of a generation time calculation process according to the fourth embodiment;

FIG. 46A is a flowchart illustrating a flow of a transmission process according to the fourth embodiment;

FIG. 46B illustrates one example of a time range previously set as a time range in which projection dynamic images can be transmitted, according to the fourth embodiment; and

FIG. 47 is a flowchart according to the variant illustrating a flow of a generation time calculation process according to a variant of the fourth embodiment.

DETAILED DESCRIPTION OF EMBODIMENTS

In order to project content onto a wide screen in digital signage technology, a single flat surface having a given area may be used as a projection medium, and therefore, a medium where the digital signage technology is implemented may be restricted to a previously installed wide screen, an upright wall of a building, or the like.

In this regard, by using a combination of a plurality of surfaces (i.e., light transmission members) included in an area such as windowpanes of a building (especially, a mid-to-high-rise building), it is possible to increase the scope of implementing the digital signage technology.

The present invention has an object to implement a digital signage using a combination of a plurality of surfaces.

Hereinafter, embodiments will be described in detail with reference to the drawings. Note that in the descriptions in the specification and the drawings, the same reference numerals are used for elements having substantially the same functional configurations, and duplicate description will be omitted.

[First Embodiment]

<1. Example of application of image projection system>

First, an application example of an image projection system according to a first embodiment will be described.

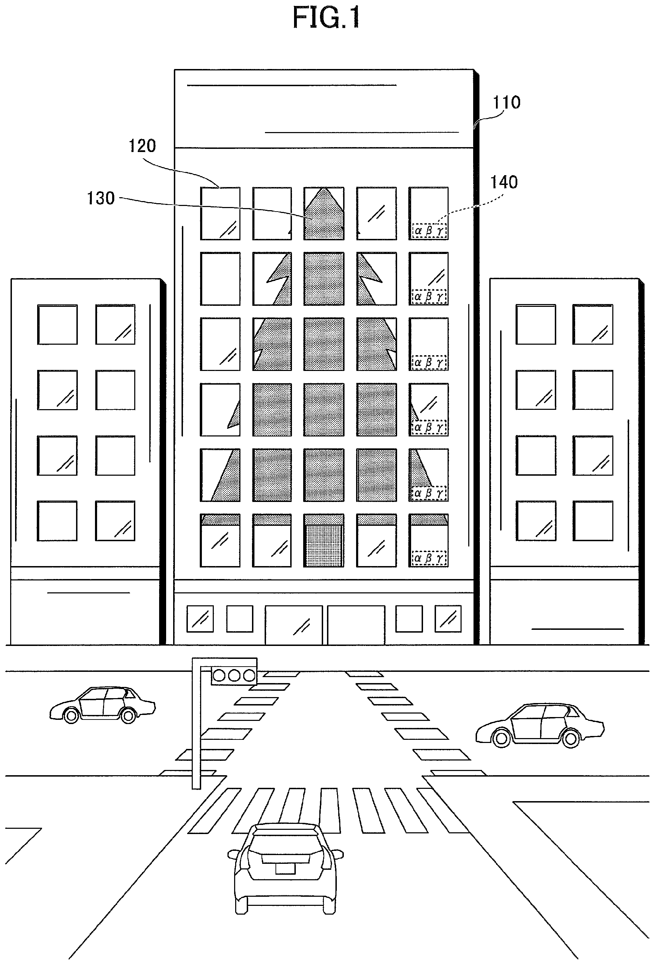

FIG. 1 illustrates an example where the image projection system is applied. In the example of FIG. 1, a large-scale digital signage is implemented by using a combination of windowpanes (light transmission members) installed in an outside surface of a mid-rise building 110.

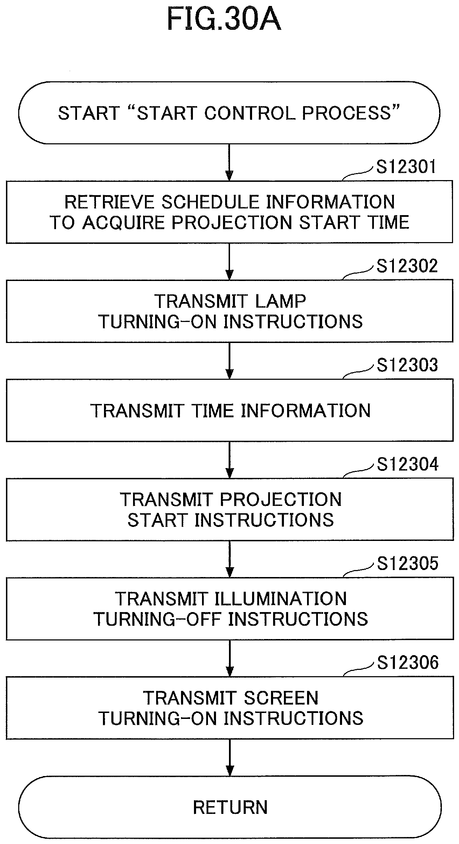

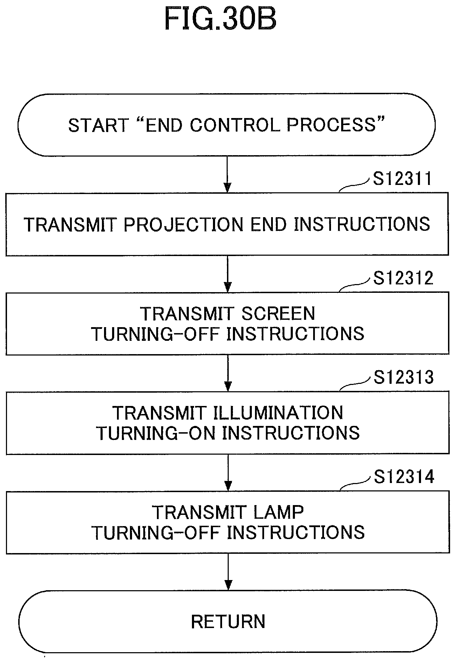

As illustrated in FIG. 1, in an outer wall of the building 110 facing a road, a plurality of windowpanes (in the example of FIG. 1, 30 windowpanes), i.e., a windowpane group 120, are installed at intervals of certain amounts. According to the image projection system in the first embodiment, two of projection dynamic images included in a projection dynamic image group 130 are projected to one of the windowpanes (the windowpane group 120) from the inside of the building 110. Details will be described later.

As a result, according to the image projection system in the first embodiment, it is possible to implement a large-scale digital signage (in the example of FIG. 1, showing a very large tree) using an area including the 30 windowpanes. Also, it is possible to implement the digital signage at a relatively conspicuous place such as an outer wall facing a road. In other words, it is possible to implement digital signage having a high advertising effect.

Also, according to the image projection system in the first embodiment, it is possible to increase the scope of implementing the digital signage technology, in comparison to a case of using a previously installed wide screen, an upright outer wall of a building that does not have windowpanes, or the like.

Further, according to the image projection system in the first embodiment, operations of an illumination apparatus group 140 previously installed at windowpanes are controlled together. As a result, according to the image projection system in the first embodiment, it is possible to control the illumination apparatus group 140 in response to projection dynamic images 130 being projected, and therefore, it is possible to implement a digital signage having a high visual effect. Note that the illumination apparatuses are, for example, illumination signboards.

<2. Operations of signage apparatuses>

Next, operations of each of signage apparatuses included in the image projection system according to the first embodiment will be described. Note that, according to the first embodiment, the signage apparatuses include projectors (i.e., projection apparatuses), motor-driven screens (having surfaces used as projection surfaces), and the illumination apparatuses.

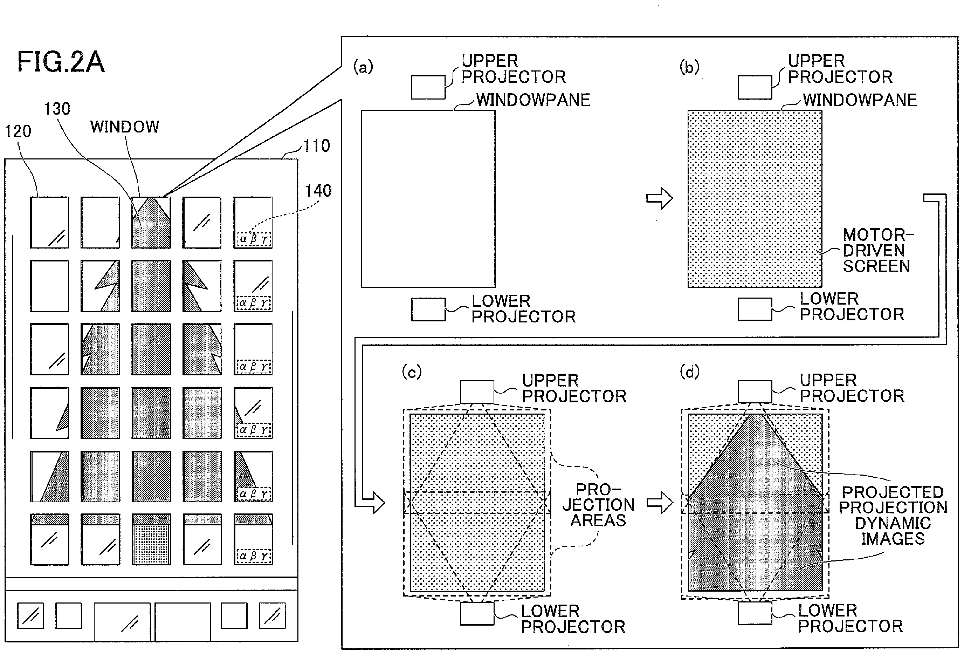

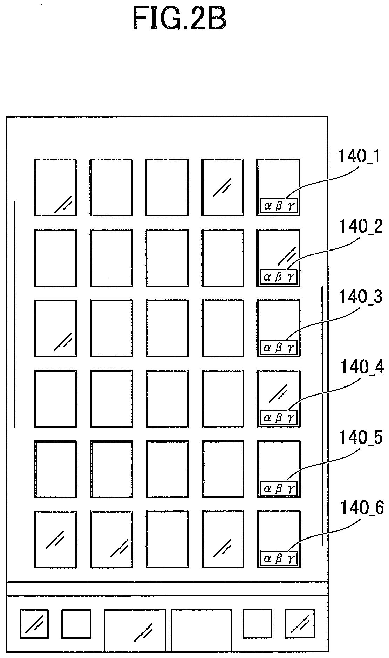

FIGs. 2A and 2B illustrate operation of each of the signage apparatuses placed at positions corresponding to the windowpanes of the building 110. An upper part ((a)-(d)) of FIG. 2A illustrates operations of each of the projectors and each of the motor-driven screens included in the signage apparatuses installed at the inside of the windowpanes of the building 110, respectively.

As illustrated in (a) of FIG. 2A, upper and lower projectors are installed at the top and the bottom at the inside of each of the windowpanes of the building 110. Thus, for each of the windowpanes, the two projectors (including the upper projector and the lower projector) are used to project projection dynamic images. As a result, even if the size of windowpane is large, it is possible to appropriately project the projection dynamic images.

Also, as illustrated in (b) of FIG. 2A, the motor-driven screen is installed at the inside of each windowpane. For projecting projection dynamic images using the projectors, the motor-driven screen is made to enter a turned-on state such that the transmittance of the motor-driven screen is changed and the motor-driven screen becomes translucent, whereby the windowpane becomes translucent. Note that, the motor-driven screen (having a projection surface) and the windowpane (i.e., a projection medium) constitute a light transmission member.

The view (c) of FIG. 2A illustrates a state where, after the motor-driven screen is made to enter a turned-on state, lamps of the upper projector and the lower projector are made to enter turned-on states. The upper projector projects an image onto an upper area of the windowpane, and the lower projector projects an image onto a lower area of the windowpane. Note that the upper projector and the lower projector are adjusted in such a manner that the upper area (i.e., a projection area) of the windowpane onto which the upper projector projects an image overlaps with the lower area (i.e., another projection area) of the windowpane onto which the lower projector projects an image. That is, according to the present embodiment, the two projectors implement projection of projection dynamic images onto areas (i.e., projection areas) corresponding to the size of the windowpane.

The view (d) of FIG. 2A illustrates a state where the upper projector and the lower projector project projection dynamic images. According to the image projection system of the present embodiment, projection dynamic images are projected onto each of the motor-driven screens corresponding to the windowpanes included in the windowpane group 120, and then, as a whole, a single digital signage is implemented. Therefore, upper and lower parts acquired from vertically dividing a projection dynamic image at a part of an original dynamic image (given by an advertiser) are projected onto the motor-driven screen corresponding to each of the windowpanes by the corresponding two projectors.

Note that, as illustrated in FIG. 2B, according to the image projection system of the first embodiment, control is carried out in such a manner that, after the projection of the projection dynamic image group 130 is ended, the illumination apparatus group 140 (including the illumination apparatuses 140_1-140_6) are made to enter turned-on states, and the motor-driven screens are made to enter turned-off states.

Thus, according to the image projection system of the first embodiment, the upper projectors, the lower projectors, the motor-driven screens, and the illumination apparatus group 140 operate in a mutually linked manner.

<3. System configuration of image projection system>

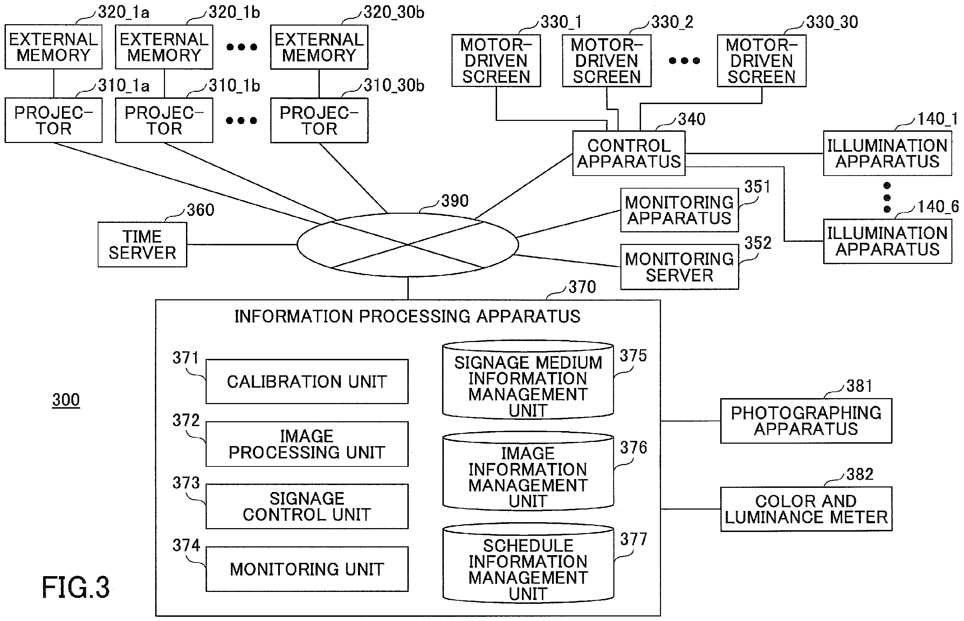

Next, a system configuration of the image projection system according to the first embodiment will be described. FIG. 3 illustrates one example of a system configuration of the image projection system. As illustrated in FIG. 3, the image projection system 300 includes the projectors 310_1a-310_30b, external memories 320_1a-320_30b, the motor-driven screens 330_1-330_30, a control apparatus 340, and the illumination apparatuses 140_1-140_6. Also, the image projection system 300 includes a time server 360, an information processing apparatus 370, a photographing apparatus 381, a color and luminance meter 382, a monitoring apparatus 351, and a monitoring server 352.

Note that, the projectors 310_1a-310_30b, the control apparatus 340, the time server 360, the information processing apparatus 370, the monitoring apparatus 351, and the monitoring server 352 are connected together via a network 390.

The projectors 310_1a-310_30b are installed at the top and at the bottom at the inside of each of the windowpanes included in the windowpane group 120 installed in a given area of an outer surface of the building 110. As described above, the 30 windowpanes are installed in the given area of the outer surface of the building 110, and therefore, according to the present embodiment, the 60 projectors are installed.

Each of the projectors 310_1a-310_30b carries out a first calibration process using a calibration pattern image such that a projection dynamic image will be projected without distortion in a projection area corresponding to the size of the windowpane that is used as a projection medium. Also, each of the projectors 310_1a-310_30b carries out a second calibration process using a white image such that the projection dynamic image will be projected onto the windowpane as the projection medium with proper colors.

Also, the projectors 310_1a-310_30b retrieve specified projection dynamic images from among projection dynamic images stored in the external memories 320_1a-320_30b, respectively, on the basis of a projection start instruction sent from the information processing apparatus 370. Then, the projectors 310_1a-310_30b project the respectively retrieved projection dynamic images onto the motor-driven screens corresponding to the windowpanes to be used as the projection media.

The external memories 320_1a-320_30b are connected to the projectors 310_1a-310_30b, respectively. The external memories 320_1a-320_30b store the projection dynamic images to be projected by the projectors 310_1a-310_30b, respectively. The external memories 320_1a-320_30b may be, for example, USB (Universal Serial Bus) memories, or the like.

The motor-driven screens 330_1-330_30 are installed at the inside of the windowpanes included in the windowpane group 120 installed in the given area of the outer surface of the building 110. As described above, the 30 windowpanes are installed in the given area of the outer surface of the building 110. Therefore, according to the present embodiment, the 30 motor-driven screens 330_1-330_30 are installed.

The motor-driven screens 330_1-330_30 are connected to the control apparatus 340 using power cables, and are controlled by the control apparatus 340 to be turned on and turned off individually. As a result of the motor-driven screens 330_1-330_30 being controlled by the control apparatus 340 to be turned on, their light transmission members have the transmittance reduced, and thus, become translucent. On the other hand, as a result of the motor-driven screens 330_1-330_30 being controlled by the control apparatus 340 to be turned off, their light transmission members have the transmittance increased, and thus, become transparent.

The control apparatus 340 turns on the motor-driven screens 330_1-330_30 on the basis of a screen turning-on instruction sent from the information processing apparatus 370. The control apparatus 340 turns off the motor-driven screens 330_1-330_30 on the basis of a screen turning-off instruction sent from the information processing apparatus 370.

Further, the control apparatus 340 turns on the illumination apparatuses 140_1-140_6 on the basis of an illumination turning-on instruction sent from the information processing apparatus 370. The control apparatus 340 turns off the illumination apparatuses 140_1-140_6 on the basis of an illumination turning-off instruction sent from the information processing apparatus 370.

The illumination apparatuses 140_1-140_6 are connected to the control apparatus 340 using power cables, and are controlled by the control apparatus 340 to be turned on and turned off.

The monitoring apparatus 351 monitors the projectors 310_1a-310_30b, the control apparatus 340, and the information processing apparatus 370 using the network 390. If the monitoring apparatus 315 has detected a trouble, the monitoring apparatus 315 identifies the corresponding monitoring object (that has the trouble), and determines the type of the trouble (i.e., whether it is possible to automatically recover from the trouble). Further, the monitoring apparatus 351 sends information of the identified monitoring object and the determined type of the detected trouble to the information processing apparatus 370 as a monitoring result.

The monitoring server 352 sends an email to a service person when a trouble from which it is not possible to automatically recover has occurred.

The time server 360 sends time information to the information processing apparatus 370 so as to synchronize time between the projectors 310_1a-310_30b and the information processing apparatus 370.

The information processing apparatus 370 controls a signage process in the image projection system 300. The information processing apparatus 370 has a calibration program, an image processing program, a signage control program, and a monitoring program installed therein. As a result of the information processing apparatus 370 executing the programs, the information processing apparatus 370 functions as a calibration unit 371, an image processing unit 372, a signage control unit 373, and a monitoring unit 374.

The calibration unit 371 carries out a first calibration process and a second calibration process together with the projectors 310_1a-310_30b. Also, the calibration unit 371 functions as a calculation means, and, by carrying out the first calibration process, calculates correction parameters to be used at a time of generating the projection dynamic images to be projected by the projectors 310_1a-310_30b.

Further, the calibration unit 371 calculates RGB levels to be set to the projectors 310_1a-310_30b by carrying out the second calibration process together with the projectors 310_1a-310_30b.

The image processing unit 372 is one example of a splitting means. The image processing unit 372 retrieves signage medium information stored in a signage medium information management unit 375 and image information stored in an image information management unit 376, and generates projection dynamic images from an original dynamic image given by an advertiser. The signage medium means the building 110 on which the image projection system 300 implements a large-scale digital signage. The signage medium information includes information of the positions, the sizes, and so forth of the respective windowpanes included in the windowpane group 120 installed in the given area of the outside surface of the building 110. The image information includes information for managing various images, the correction parameters, and so forth, used at a time of generating the projection dynamic images.

Note that, the image processing unit 372 uses the correction parameters calculated by the calibration unit 371 at a time of generating the projection dynamic image.

Also, the image processing unit 372 stores split static images (details will be described later) generated in a process of generating the projection dynamic images, in the image information management unit 376. Further, the image processing unit 372 transmits the projection dynamic images included in the projection dynamic image group to the projectors 310_1a-310_30b, respectively. As a result, the projectors 310_1a-310_30b store the projection dynamic images in the external memories 320_1a-320_30b, respectively.

The signage control unit 373 is one example of a control means. The signage control unit 373 generates schedule information, and stores the generated schedule information in a schedule information management unit 377. The signage control unit 373 carries out a signage control process on the basis of the schedule information. For example, the signage control unit 373 transmits projection start instructions or projection end instructions to the projectors 310_1a-310_30b, respectively, according to a projection start time or a projection end time acquired from the schedule information. Also, the signage control unit 373 transmits screen turning-on instructions or screen turning-off instructions to the motor-driven screens 330_1-330_30, respectively, according to the projection start time or the projection end time acquired from the schedule information. Further, the signage control unit 373 transmits illumination turning-off instructions or illumination turning-on instructions to the illumination apparatuses 140_1-140_6, respectively, according to the projection start time or the projection end time acquired from the schedule information.

When the signage control unit 373 has received a monitoring result from the monitoring apparatus 351, the signage control unit 373 carries out a process depending on the monitoring result.

The monitoring unit 374 monitors the image information stored in the image information management unit 376, and re-generates the projection dynamic image as appropriate.

The photographing apparatus 381 photographs calibration pattern images projected by the projectors 310_1a-310_30b, respectively, and transmits the photographed images to the information processing apparatus 370, at a time when the projectors 310_1a-310_30b carry out the first calibration processes, respectively. Note that the photographing apparatus 381 is connected with the information processing apparatus 370 using, for example, a USB cable.

The color and luminance meter 382 measures the color temperature of the white image projected by each of the projectors 310_1a-310_30b, and transmits the measurement results to the information processing apparatus 370, at a time when the projectors 310_1a-310_30b carry out the second calibration processes, respectively. Note that the color and luminance meter 382 is connected with the information processing apparatus 370 using, for example, a USB cable.

<4. Hardware configuration of information processing apparatus>

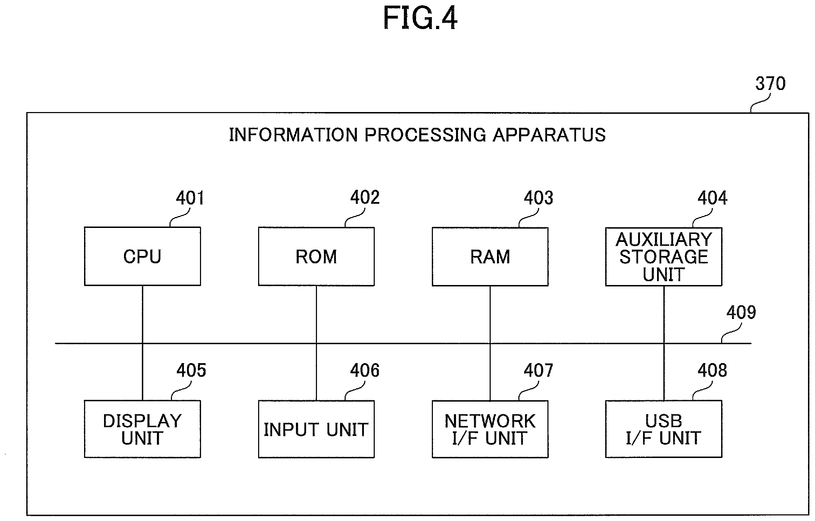

Next, a hardware configuration of the information processing apparatus 370 will be described. FIG. 4 illustrates one example of a hardware configuration of the information processing apparatus.

As illustrated in FIG. 4, the information processing apparatus 370 includes a CPU (Central Processing Unit) 401, a ROM (Read-Only Memory) 402, and a RAM (Random Access Memory) 403. The CPU 401, the ROM 402, and the RAM 403 constitute a computer. Further, the information processing apparatus 370 includes an auxiliary storage unit 404, a display unit 405, an input unit 406, a network I/F (interface) unit 407, and a USB I/F unit 408. Note that these hardware elements of the information processing apparatus 370 are connected together via a bus 409.

The CPU 401 executes various programs (for example, the calibration program, the image processing program, the signage control program, the monitoring program, and so forth) stored in the auxiliary storage unit 404.

The ROM 402 is a nonvolatile main storage. The ROM 402 stores various programs, data, and so forth used when the CPU 401 executes the various programs stored in the auxiliary storage unit 404. More specifically, the ROM 402 stores a boot program such as a BIOS (Basic Input/Output System), an EFI (Extensible Firmware Interface), or the like.

The RAM 403 is a volatile main storage such as a DRAM (Dynamic Random Access Memory), a SRAM (Static Random Access Memory), or the like. The RAM 403 is used as a work area to which the various programs stored in the auxiliary storage unit 404 are written when the various programs are executed by the CPU 401.

The auxiliary storage unit 404 is an auxiliary storage device storing the various programs executed by the CPU 401 and various types of information used when the CPU 401 executes the various programs. The various types of information stored in the auxiliary storage unit 404 includes the signage medium information, the image information, the schedule information, the various types of information managed by the image information, the correction parameters, and so forth. Note that, the signage medium information management unit 375, the image information management unit 376, and the schedule information management unit 377 are implemented by the auxiliary storage unit 404.

The display unit 405 displays various screen pages. The input unit 406 is used for inputting various types of information to the information processing apparatus 370. The network I/F unit 407 is used to connect to the network 390. The information processing apparatus 370 carries out communications with the projectors 310_1a-310_30b, the control apparatus 340, and the time server 360 using the network I/F unit 407.

The USB I/F unit 408 is used to connect a USB cable. The information processing apparatus 370 carries out data transmission and reception with the photographing apparatus 381 and the color and luminance meter 382 using the USB I/F unit 408.

<5. Information stored in management units>

Next, various types of information (the signage medium information, the image information, and the schedule information) stored in the management units (the signage medium information management unit 375, the image information management unit 376, and the schedule information management unit 377) of the information processing apparatus 370 will be described.

(1) Signage medium information

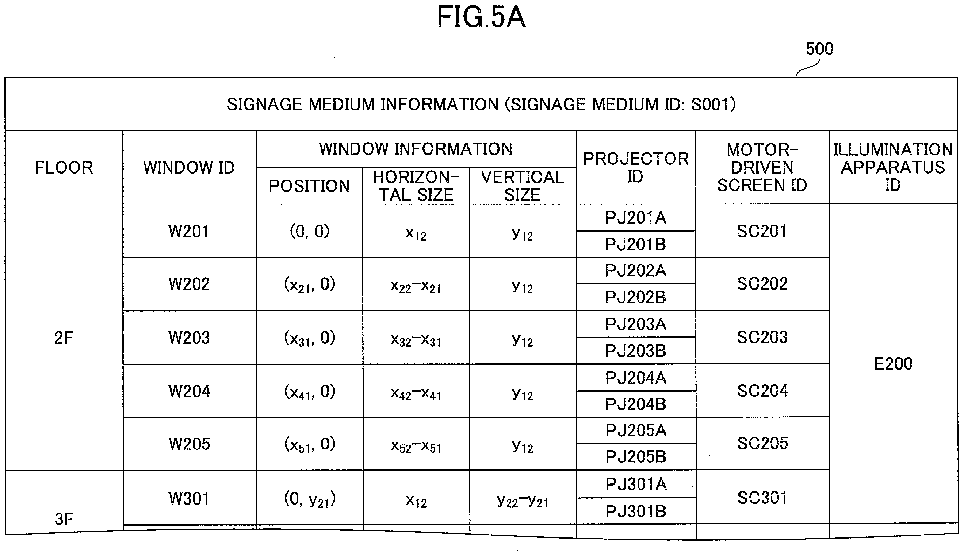

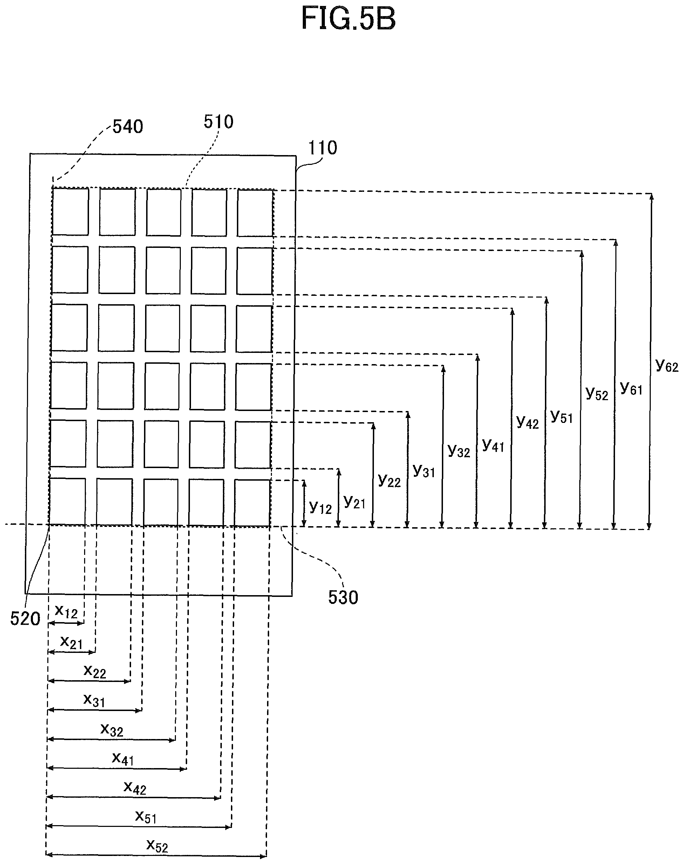

First, the signage medium information stored in the signage medium information management unit 375 will be described. FIGs. 5A and 5B illustrate one example of the signage medium information. As illustrated in FIG. 5A, the signage medium information 500 is generated for each signage medium. According to the present embodiment, a signage medium ID of the building 110 is assumed as "S001".

Also, as illustrated in FIG. 5A, the signage medium information 500 includes, as information items, "floor", "window ID", "window information", "projector ID", "motor-driven screen ID", and "illumination apparatus ID".

For the item "floor", the floor numbers indicating the floors on which the windowpanes included in the windowpane group 120 are installed in the given area of the outside surface of the building 110 are stored.

For the item "window ID", identifiers for identifying the respective windowpanes included in the windowpane group 120 installed in the given area of the outside surface of the building 110 are stored.

The item "window information" further includes information items "position", "horizontal size", and "vertical size". With reference to FIG. 5B, the items "position", "horizontal size", and "vertical size" included in the item "window information" will now be described.

As illustrated in FIG. 5B, the image projection system 300 implements a large-scale digital signage using the given area 510 of the outer surface of the building 110. For this purpose, the image projection system 300 uses a reference point (i.e., an origin) and reference axes (i.e., an x-axis and a y-axis) to determine the coordinates of the windowpanes installed in the given area 510.

In FIG. 5B, the point 520 is the origin in the given area 510. The axis 530 is the x-axis with respect to the origin 520 in the given area 510, and the axis 540 is the y-axis with respect to the origin 520 in the given area 510.

As illustrated in FIG. 5B, by using the given area 510, the origin 520, the x-axis 530, and the y-axis 540, it is possible to uniquely determine a layout (i.e., the position, the horizontal size, and the vertical size) of each windowpane.

Returning to the description of FIG. 5A, for the item "position", the coordinates identifying the bottom-left corner of each windowpane in the given area 510 of the outer surface of the building 110 are stored. In the case of FIG. 5A, the coordinates of the bottom-left corner of the windowpane having the window ID "W201" are the coordinates of the origin (0, 0).

For the item "horizontal size", the horizontal length (the width) of each windowpane is stored. For example, in the case of the windowpane having the window ID "W201", the bottom-left corner has the coordinates (0, 0), and the bottom-right corner has the coordinates $(x_{12}, 0)$. Therefore, the horizontal size is "$x_{12}$". Also, in the case of the windowpane having the window ID "W202", the bottom-left corner has the coordinates $(x_{21}, 0)$, and the bottom-right corner has the coordinates $(x_{22}, 0)$. Therefore, the horizontal size is "$x_{22}$-$x_{21}$".

For the item "vertical size", the vertical length (the height) of each windowpane is stored. For example, in the case of the windowpane having the window ID "W201", the bottom-left corner has the coordinates (0, 0), and the top-left corner has the coordinates $(0, y_{12})$. Therefore, the vertical size is "$y_{12}$". Also, in the case of the windowpane having the window ID "W301", the bottom-left corner has the coordinates $(0, y_{21})$, and the top-left corner has the coordinates $(0, y_{22})$. Therefore, the vertical size is "$y_{22}$-$Y_{21}$".

For the item "projector ID", identifiers for identifying the projectors installed at positions corresponding to each windowpane are stored. According to the example of FIG. 5A, at the positions corresponding to the windowpane identified by the window ID "W201", the projectors having the projector ID "PJ201A" and the projector ID "PJ201B" are installed.

For the item "motor-driven screen ID", an identifier for identifying the motor-driven screen installed at each windowpane is stored. According to the example of FIG. 5A, the motor-driven screen identified by the motor-driven screen ID "SC201" is installed at the windowpane identified by the window ID "W201".

For the item "illumination apparatus ID", an identifier for identifying the illumination apparatus installed at a windowpane on each floor is stored. According to the example of FIG. 5A, the illumination apparatus identified by the illumination apparatus ID "E200" is installed on the floor identified by the floor "2F".

(2) Image information

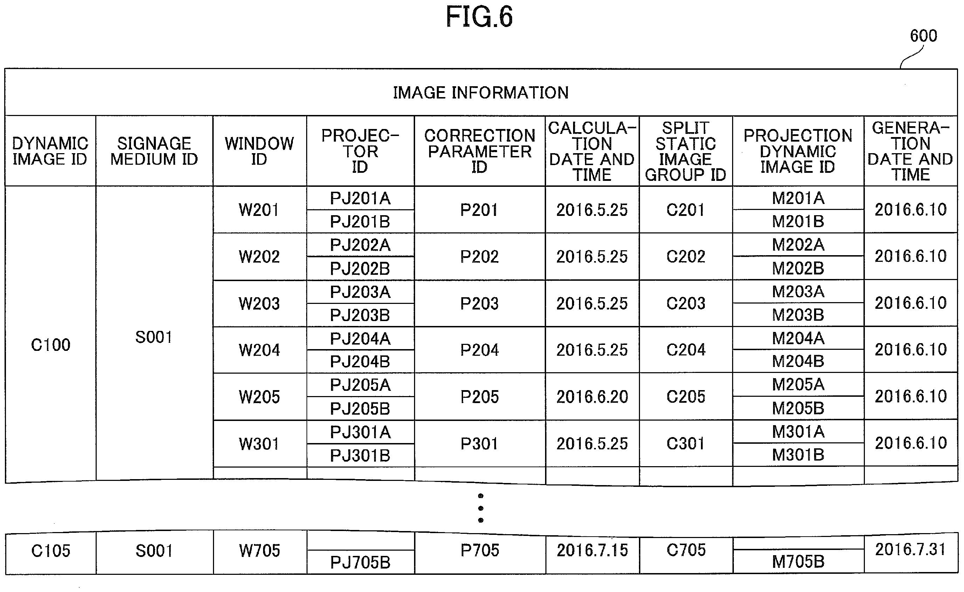

Next, the image information stored in the image information management unit 376 will be described. FIG. 6 illustrates one example of the image information. As illustrated in FIG. 6, the image information 600 includes, as information items, "dynamic image ID", "signage medium ID", "window ID", and "projector ID". Also, the image information 600 includes, as information items, "correction parameter ID", "calculation date and time", "split static image group ID", "projection dynamic image ID", and "generation date and time".

For the item "dynamic image ID", an identifier for identifying an original dynamic image given by an advertiser is stored. According to the example of FIG. 6, dynamic images identified by the dynamic image IDs "C100"-"C105" are stored in the image information management unit 376.

For the item "signage medium ID", an identifier is stored. The identifier is used for identifying the building 110 on which a large-scale digital signage generated on the basis of the original dynamic image given by the advertiser is implemented. The large-scale digital signage is implemented with the use of a projection dynamic image group 130 generated on the basis of the dynamic image given by the advertiser. According to the example of FIG. 6, with the use of a projection dynamic image group 130 generated on the basis of each of the dynamic images identified by the dynamic image IDs "C100"-"C105", a large-scale digital signage is implemented on the building 110 identified by the signage medium ID "S001".

For the item "window ID", an identifier for identifying each windowpane included in the windowpane group 120 installed in the given area 510 of the outer surface of the building 110 identified by the signage medium ID "S001" is stored.

For the item "projector ID", identifiers for identifying the projectors installed at positions corresponding to the windowpane identified by a window ID is stored.

For the item "correction parameter ID", an identifier for identifying a correction parameter calculated by the calibration unit 371 is stored. As described above, as a result of the first calibration process being carried out, the calibration unit 371 calculates a correction parameter for each windowpane, and therefore, a correction parameter ID is stored in a manner of being associated with a window ID. For the item "calculation date and time", date and time at which a correction parameter is calculated are stored.

For the item "split static image group ID", an identifier is stored. The identifier is used for identifying each split static image group generated on the basis of each of the dynamic images identified by the dynamic image IDs "C100"-"C105" in a process of generating the projection dynamic image.

For the item "projection dynamic image ID", an identifier is stored. The identifier is used for identifying each projection dynamic image included in a projection dynamic image group generated on the basis of each of the dynamic images identified by the dynamic image IDs "C100"-"C105".

For the item "generation date and time", date and time at which each projection dynamic image identified by the projection dynamic image ID is generated are stored.

According to the example of FIG. 6, projection dynamic images having the projection dynamic image IDs "M201A", "M201B", ⋯, "M705B" are generated from the dynamic images having the dynamic image IDs "C100"-"C105".

Also, according to FIG. 6, a projection dynamic image having the projection dynamic image ID "M201A" associated with the dynamic image ID "C100" is projected by the projector having the projector ID "PJ201A" installed at a position corresponding to the windowpane identified by the window ID "W201".

Also, according to FIG. 6, a correction parameter (having the correction parameter ID "P201") was calculated at "May 25, 2016" in a process of generating a projection dynamic image having the projection dynamic image ID "M201A" associated with the dynamic image ID "C100".

Also, according to FIG. 6, a split static image group having the split static image group ID "C201" was corrected using the correction parameter (having the correction parameter ID "P201"). Further, according to FIG. 6, projection dynamic images having the projection dynamic image IDs "M201A" and "M201B" are generated at "June 10, 2016" on the basis of a corrected split static image group having the split static image group ID "C201".

Hereinafter, projection dynamic images having the projection dynamic image IDs "M201A"-"M705B" generated on the basis of a dynamic image having the dynamic image ID "C100" will be referred to as "content 100", and are stored in the image information management unit 376.

In the same way, a projection dynamic image group having the projection dynamic image IDs "M201A"-"M705B" generated on the basis of a dynamic image having the dynamic image ID "C101" will be referred to as "content 101", and are stored in the image information management unit 376.

In the same way, a projection dynamic image group having the projection dynamic image IDs "M201A"-"M705B" generated on the basis of a dynamic image having the dynamic image ID "C102" will be referred to as "content 102", and are stored in the image information management unit 376.

In the same way, a projection dynamic image group having the projection dynamic image IDs "M201A"-"M705B" generated on the basis of a dynamic image having the dynamic image ID "C103" will be referred to as "content 103", and are stored in the image information management unit 376.

In the same way, a projection dynamic image group having the projection dynamic image IDs "M201A"-"M705B" generated on the basis of a dynamic image having the dynamic image ID "C104" will be referred to as "content 104", and are stored in the image information management unit 376.

In the same way, a projection dynamic image group having the projection dynamic image IDs "M201A"- "M705B" generated on the basis of a dynamic image having the dynamic image ID "C105" will be referred to as "content 105", and are stored in the image information management unit 376.

In the same way, another projection dynamic image group generated on the basis of another dynamic image having another dynamic image ID may further be stored in the image information management unit 376.

Further, the image information management unit 376 also stores image information 600 concerning the dynamic images having dynamic image IDs "C101"-"C105".

(3) Schedule information

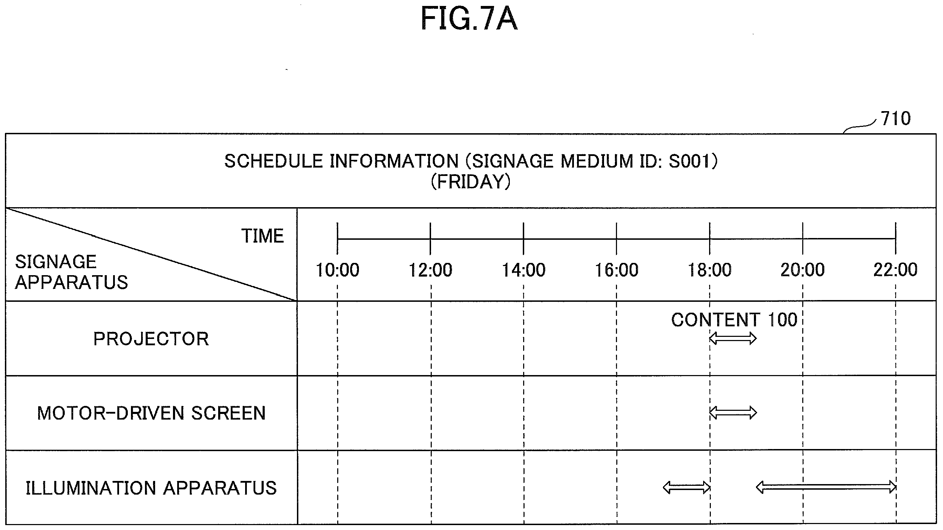

Next, the schedule information stored in the schedule information management unit 377 will be described. FIGs. 7A-7C illustrate examples of the schedule information. As illustrated in FIGs. 7A-7C, the sets of schedule information 710-730 are generated for each day of the week for each signage medium. Note that the sets of schedule information 710-730 are sets of schedule information for "FRIDAY"-"SUNDAY" for the building 110 having the signage medium ID "S001". As illustrated in FIGs. 7A-7C, each of the sets of schedule information 710-730 includes, as information items, "time" and "signage apparatus".

For the item "time", a time range during which the windowpane group 120 can be used for a digital signage in the building 110 identified by the signage medium ID "S001" is stored. According to the example of FIGs. 7A-7C, the windowpane group 120 can be used for a digital signage in the building 110 identified by the signage medium ID "S001" during a time range of 10:00-22:00.

The item "signage apparatus" further includes information items "projector", "motor-driven screen", and "illumination apparatus". For the item "projector", a time range during which the projectors 310_a-310_30b project projection dynamic images is stored.

According to the example of FIG. 7A, a projection dynamic image group (i.e., "content 100") generated on the basis of the dynamic image ID "C100" is projected during the time range 18:00-19:00.

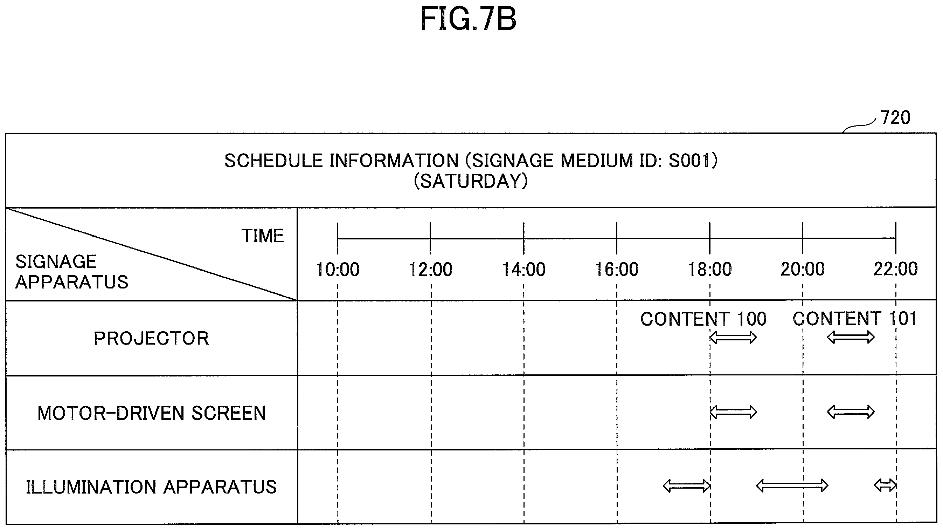

According to the example of FIG. 7B, projection dynamic image groups (i.e., "content 100" and "content 101") generated on the basis of the dynamic image IDs "C100" and "C101" are projected during the time range 18:00-19:00 and the time range 20:30-21:30, respectively.

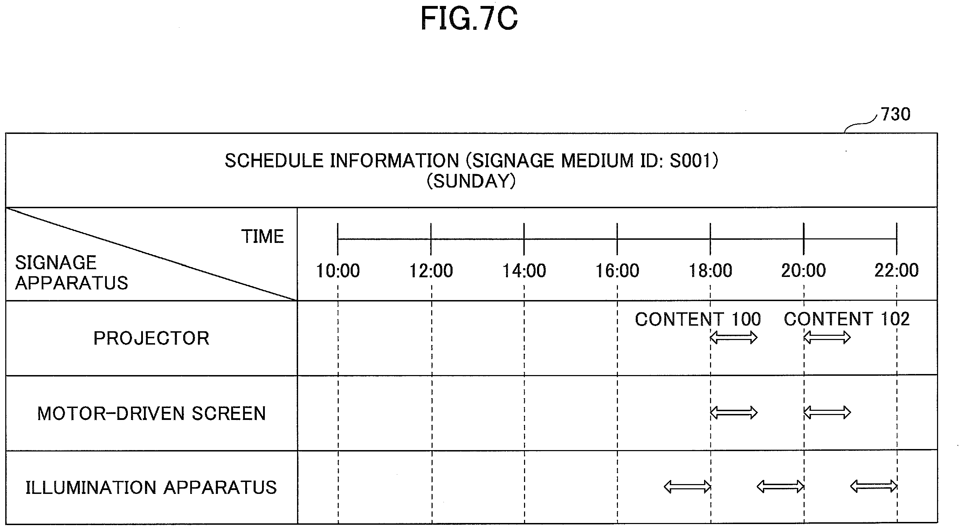

According to the example of FIG. 7C, projection dynamic image groups (i.e., "content 100" and "content 102") generated on the basis of the dynamic image IDs "C100" and "C102" are projected during the time range 18:00-19:00 and the time range 20:00-21:00, respectively.

For the item "motor-driven screen", a time range during which the motor-driven screens 330_1-330_30 are in turned-on states is stored. A time range during which the motor-driven screens 330_1-330_30 are in turned-on states is the same as a time range during which the projectors 310_1a-310_30b project a projection dynamic image group. Therefore, according to the example of FIG. 7A, the motor-driven screens 330_1-330_30 are in turned-on states during the time range 18:00-19:00. According to the example of FIG. 7B, the motor-driven screens 330_1-330_30 are in turned-on states during the time range 18:00-19:00 and the time range 20:30-21:30. According to the example of FIG. 7C, the motor-driven screens 330_1-330_30 are in turned-on states during the time range 18:00-19:00 and the time range 20:00-21:00.

For the item "illumination apparatus", a time range during which the illumination apparatuses 140_1-14-6 are in turned-on states is stored. According to the present embodiment, the illumination apparatuses 140_1-14-6 are in turned-on states in a time range of the evening (according to FIGs. 7A-7C, after 17:00). However, the time ranges during which the projectors 310_1a-310_30b project a projection dynamic image group are excluded from the time ranges during which the illumination apparatuses 140_1-14-6 are in turned-on states, as can be seen from FIGs. 7A-7C.

Thus, each of the sets of schedule information 710-730 includes a schedule for the projectors, a schedule for the motor-driven screens, and a schedule for the illumination apparatuses. Hereinafter, a schedule for operating the projectors will be referred to as a "projection schedule"; a schedule for operating the motor-driven screens will be referred to as a "screen schedule"; and a schedule for operating the illumination apparatuses will be referred to as an "illumination schedule".

<6. Flow of signage process in image projection system>

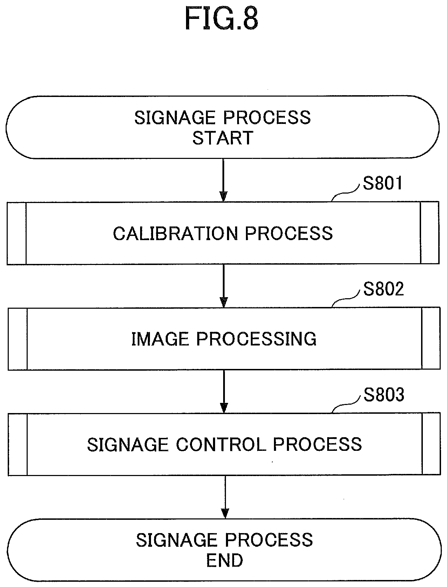

Next, a flow of a signage process carried out in the image projection system 300 will be described. FIG. 8 is a flowchart illustrating a flow of a signage process. In the building 110, after the image projection system 300 is installed, the image projection system 300 carries out a signage process illustrated in FIG. 8.

In step S801, the image projection system 300 carries out the calibration process (the first calibration process, the second calibration process, and so forth) on the projectors 310_1a-310_30b.

In step S802, the image projection system 300 carries out image processing to generate a projection dynamic image group (including projection dynamic images "M201A"-"M705B") for each of the sets of content 100-105, transmits the generated projection dynamic images to the respective projectors 310_1a-310_30b, and so forth.

In step S803, the image projection system 300 carries out a signage control process. More specifically, the image projection system 300 generates the schedule information 710-730. Also, the image projection system 300 carries out control to start projection of the projection dynamic images using the projectors 310_1a-310_30b on the basis of the generated schedule information, and to end the projection. Also, the image projection system 300 carries out control to turn on and to turn off the power supply to the motor-driven screens 330_1-330_30 on the basis of the generated schedule information 710-730. Also, the image projection system 300 carries out control to turn on and to turn off the power supply to the illumination apparatuses 140_1-140_6 on the basis of the generated schedule information 710-730.

Note that the monitoring apparatus 351 carries out the monitoring process during the time in which the signage control process in step S803 of FIG. 8 is carried out.

<7. Details of calibration process>

Next, the calibration process (step S801) carried out by the image projection system 300 will be described in detail.

(1) Functional configuration of calibration unit

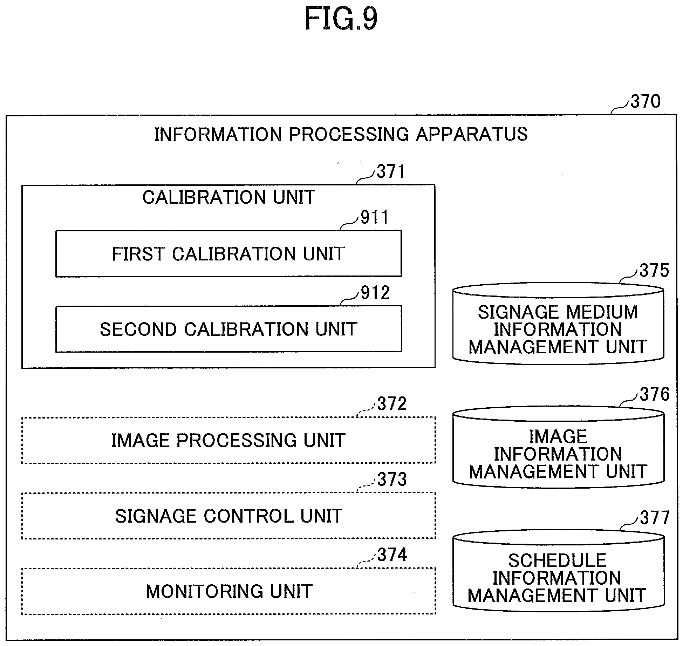

First, a functional configuration of the calibration unit 371 of the information processing apparatus 370 carrying out the calibration process will be described. FIG. 9 illustrates a functional configuration of the calibration unit of the information processing apparatus.

As illustrated in FIG. 9, the calibration unit 371 includes a first calibration unit 911 and a second calibration unit 912. The first calibration unit 911 is started to carry out the first calibration process, and carries out various processes. More specifically, the first calibration unit 911 calculates the correction parameters to be used at a time when the image processing unit 372 generates projection dynamic images. Also, the first calibration unit 911 stores the calculated correction parameters in the image information management unit 376, and also, stores, as the items of the image information 600, the correction parameter IDs identifying the calculated correction parameters and the calculation dates and times in a manner of being associated with the window IDs. By using the correction parameters, the image processing unit 372 can generate the projection dynamic images to be projected with no distortion at a time of being projected by the projectors 310_1a-310_30b.

The second calibration unit 912 is started to carry out the second calibration process, and carries out various processes. More specifically, the second calibration unit 912 calculates RGB levels and sets the RGB levels to the projectors 310_1a-310_30b such that the projection dynamic images will be projected by the projectors 310_1a-310_30b with proper colors.

(2) Flow of first calibration process

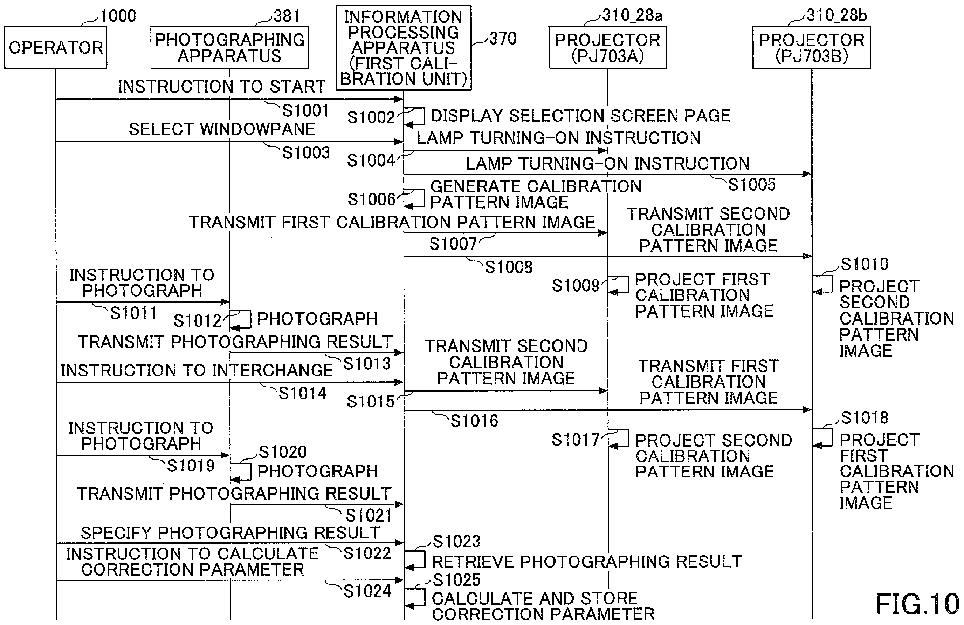

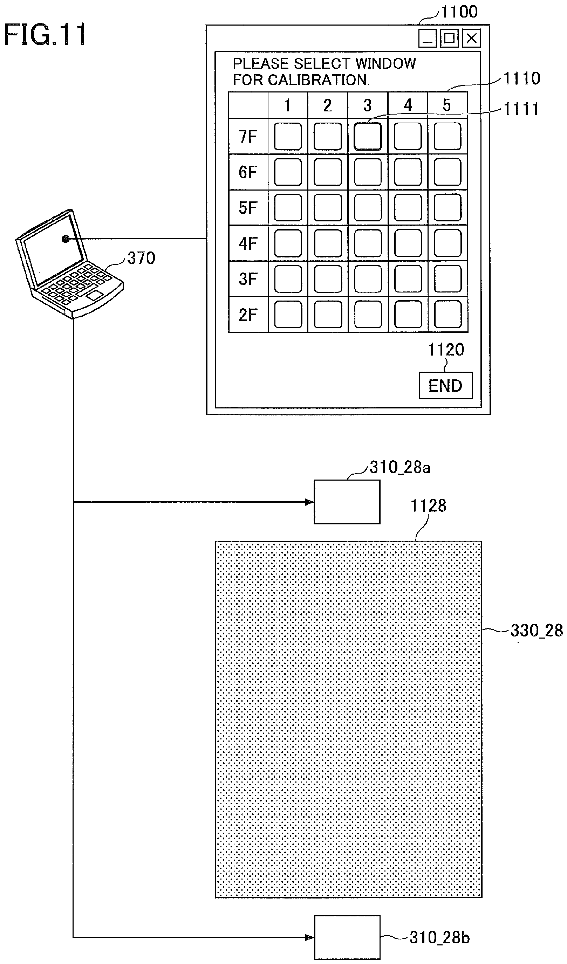

Next, the first calibration process will be described in detail on the basis of a sequence diagram of FIG. 10 with reference to FIGs. 11-13. FIG. 10 is a sequence diagram of the first calibration process.

As illustrated in FIG. 10, in step S1001, an operator 1000 inputs an instruction to the information processing apparatus 370 to start the first calibration unit 911.

In response to the instruction being input by the operator 1000, the first calibration unit 911 starts, and the first calibration unit 911 displays a selection screen page for the operator 1000 to select an object (i.e., a windowpane) on which the first calibration process will be carried out, on the display unit 405 of the information processing apparatus 370, in step S1002.

In step S1003, the operator 1000 selects a windowpane, on which the first calibration process will be carried out, from the selection screen page displayed on the display unit 405.

In response to the windowpane being selected by the operator 1000, the first calibration unit 911 identifies the projectors placed at the position corresponding to the selected windowpane. Then, in steps S1004 and S1005, the first calibration unit 911 transmits lamp turning-on instructions to the identified projectors, respectively.

FIG. 11 illustrates one example of a screen page displayed on the information processing apparatus at a time when the first calibration process will be carried out. After the first calibration unit 911 is started, the display unit 405 of the information processing apparatus 370 displays the selection screen page 1100. As illustrated in FIG. 11, the selection screen page 1100 includes a layout 1110 of the windowpanes 120 in the building 110.

The operator 1000 presses a rectangular button representing a windowpane in the layout 1110, and presses an end button 1120 to select a windowpane on which the first calibration process will be carried out. According to the example of FIG. 11, the rectangular button 1111 is pressed and the end button 1120 is pressed.

The windowpane identified by the rectangular button 1111 is a windowpane 1128 having a window ID "W703". As illustrated at the bottom half of FIG. 11, a projector 310_28a (having a projector ID "PJ703A") and a projector 310_28b (having a projector ID "PJ703B") are placed at positions corresponding to the windowpane 1128.

Therefore, in step S1004, the first calibration unit 911 transmits a lamp turning-on instruction to the projectors 310_28a. Also, in step S1005, the first calibration unit 911 transmits a lamp turning-on instruction to the projectors 310_28b. Note that, it is assumed that, at this time, the motor-driven screen 330_28 (having a motor-driven screen ID "SC703") of the windowpane 1128 has been turned on.

Next, in step S1006, the first calibration unit 911 generates calibration pattern images. The first calibration unit 911 generates, as the calibration pattern images, two different calibration pattern images.

In step S1007, the first calibration unit 911 transmits the first calibration pattern image to the projector 310_28a. In step S1008, the first calibration unit 911 transmits the second calibration pattern image to the projector 310_28b.

In step S1009, the projector 310_28a projects the first calibration pattern image transmitted from the first calibration unit 911. In step S1010, the projector 310_28b projects the second calibration pattern image transmitted from the first calibration unit 911.

In step S1011, the operator 1000 inputs an instruction to the photographing apparatus 381 to photograph the projected first and second calibration pattern images.

In step S1012, the photographing apparatus 381 photographs the projected first and second calibration pattern images, and the photographing apparatus 381 transmits the photographing result to the information processing apparatus 370 in step S1013.

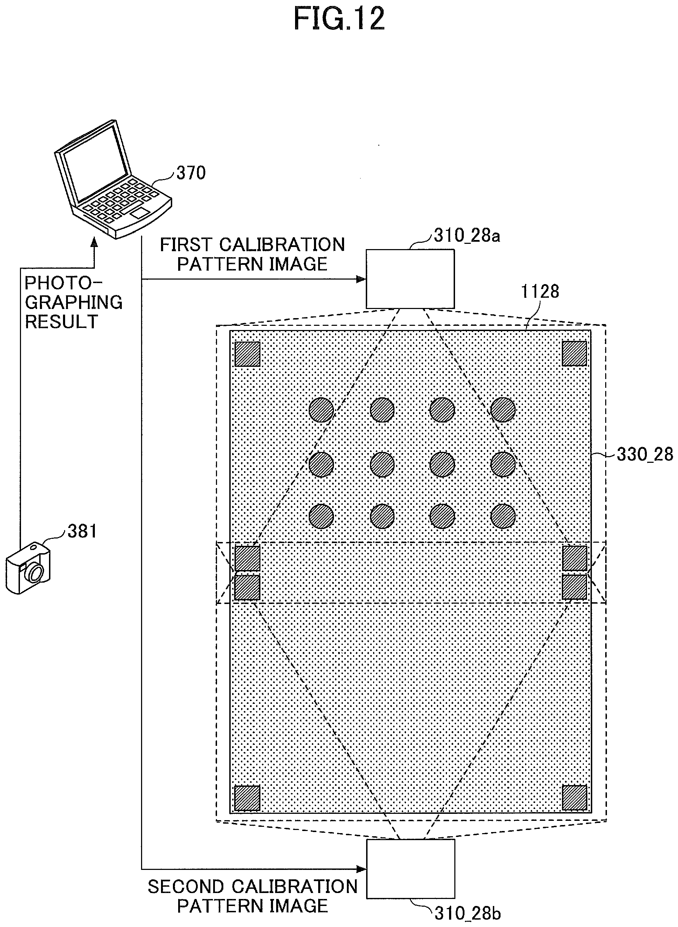

FIG. 12 illustrates one example of calibration pattern images projected in the first calibration process. As illustrated in FIG. 12, the projector 310_28a projects the first calibration pattern image, and the projector 310_28b projects the second calibration pattern image. The operator 1000 photographs the first and second calibration pattern images using the photographing apparatus 381, and transmits the photographing result to the information processing apparatus 370.

Returning to the description of FIG. 10, in step S1014, the operator 1000 inputs an instruction to interchange the first calibration pattern image and the second calibration pattern image.

In step S1015, the first calibration unit 911 responds to the instruction to transmit the second calibration pattern image to the projector 310_28a. In step S1016, the first calibration unit 911 transmits the first calibration pattern image to the projector 310_28b.

In step S1017, the projector 310_28a projects the second calibration pattern image transmitted from the first calibration unit 911. In step S1018, the projector 310_28b projects the first calibration pattern image transmitted from the first calibration unit 911.

In step S1019, the operator 1000 inputs a photographing instruction to the photographing apparatus 381 to photograph the projected second and first calibration pattern images.

In step S1020, the photographing apparatus 381 photographs the projected second and first calibration pattern images, and, in step S1021, the photographing apparatus 381 transmits the photographing result to the information processing apparatus 370.

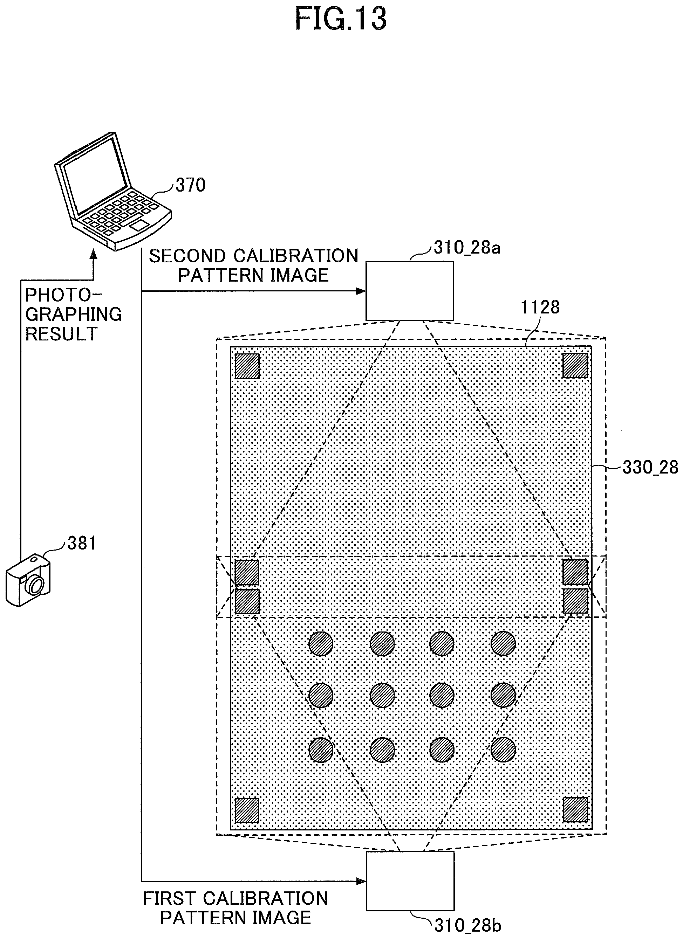

FIG. 13 illustrates one example of calibration pattern images projected in the first calibration process. As illustrated in FIG. 13, the projector 310_28a projects the second calibration pattern image, and the projector 310_28b projects the first calibration pattern image. The operator 1000 photographs the projected second and first calibration pattern images using the photographing apparatus 381, and transmits the photographing result to the information processing apparatus 370.

Returning to the description of FIG. 10, in step S1022, the operator 1000 performs an inputting operation to specify a photographing result to be used to calculate a correction parameter, to the first calibration unit 911. In step S1023, the first calibration unit 911 retrieves the photographing result specified by the operator 1000.

In step S1024, the operator 1000 inputs an instruction to calculate the correction parameter. In step S1025, the first calibration unit 911 calculates the correction parameter on the basis of the retrieved photographing result.

Note that, the correction parameter calculated by the first calibration unit 911 includes a geometric parameter for carrying out various geometric corrections such as a correction for a position adjustment, a correction for a scale adjustment, a distortion correction, and so forth. The geometric parameter varies depending on various factors such as, for example, the positions at which the motor-driven screen and the projection apparatuses are installed, individual differences in optical devices in the projection apparatuses, and so forth. Therefore, the geometric parameter may vary depending on each windowpane (i.e., each of combinations of motor-driven screens and projection apparatuses). The image processing unit 372 that will be described later carries out a correction using the geometric parameter suitable for each windowpane, to avoid a problem of some projection dynamic images included in the projection dynamic image group 130 projected as illustrated in FIG. 1 having distortions.

The first calibration unit 911 stores the calculated correction parameter in the image information management unit 376. Also, the first calibration unit 911 stores a correction parameter ID (for example, "P703") and the calculation date and time (for example, "2016.5.25") as image information 600 in a state of being associated with a window ID (for example, "W703").

(3) Flow of second calibration process

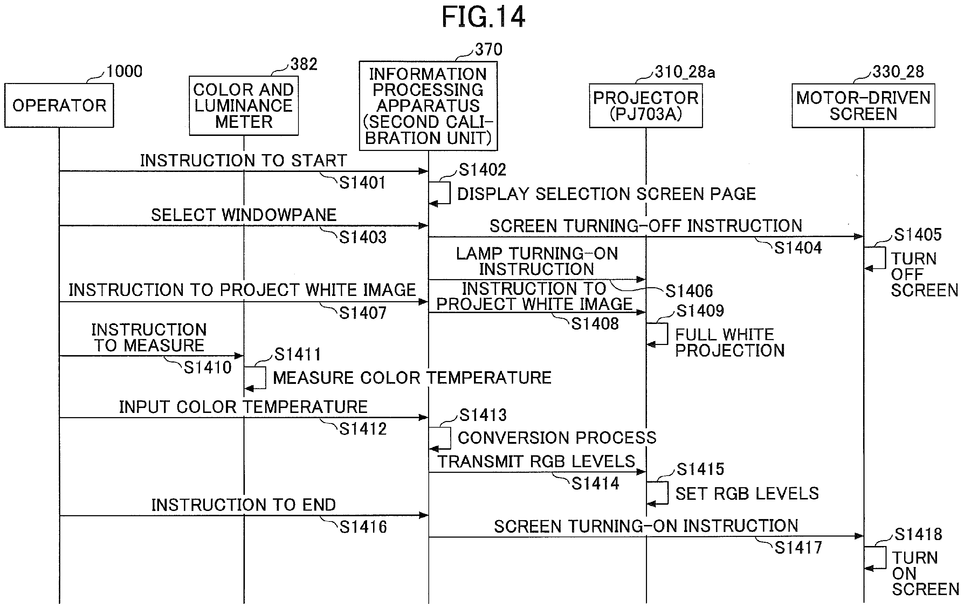

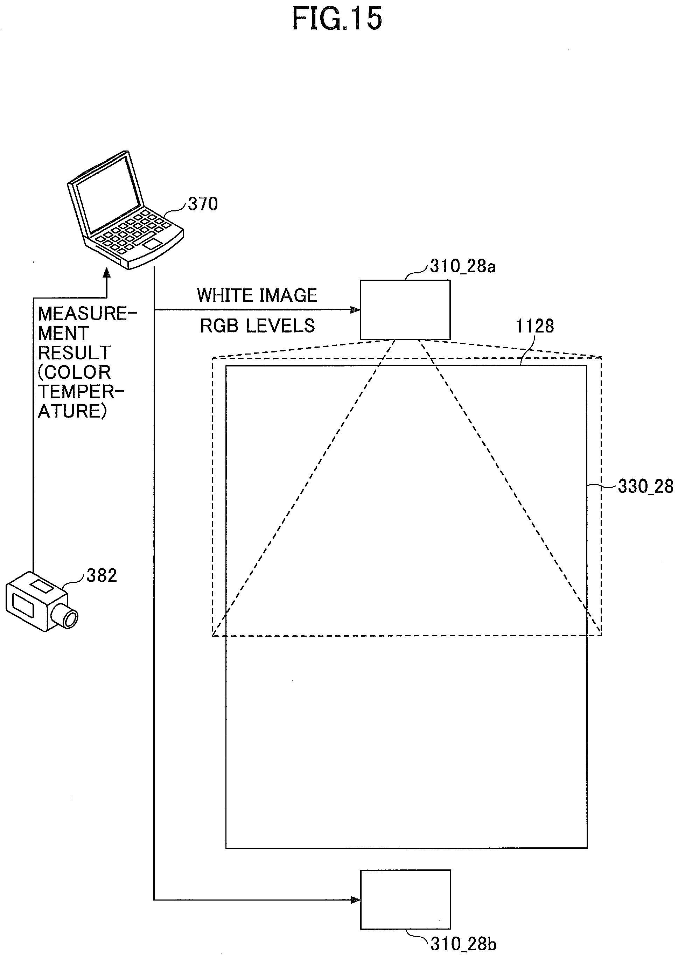

Next, the second calibration process will be described in detail on the basis of a sequence diagram of FIG. 14 with reference to FIG. 15. FIG. 14 is a sequence diagram of the second calibration process.

As illustrated in FIG. 14, in step S1401, an operator 1000 inputs an instruction to start the second calibration unit 912 to the information processing apparatus 370.

In response to the instruction being input by the operator 1000, the second calibration unit 912 starts in step S1402, and the second calibration unit 912 displays a selection screen page on the display unit 405 of the information processing apparatus 370 for the operator 1000 to select an object (a windowpane) on which a second calibration process will be carried out.

In step S1403, the operator 1000 selects a windowpane, on which the second calibration process will be carried out, from the selection screen page displayed on the display unit 405.

In response to the windowpane being selected by the operator 1000, the second calibration unit 912 identifies the motor-driven screen placed at a position corresponding to the selected windowpane, and transmits an instruction to the identified motor-driven screen to turn off the screen in step S1404.

Note that the example of FIG. 14 illustrates a case where, in the same way as the first calibration process, the windowpane 1128 having the window ID "W703" is selected, and the instruction to turn off the screen is transmitted to the corresponding motor-driven screen 330_28.

In response to the instruction to turn off the screen being transmitted by the second calibration unit 912, the power is turned off in the motor-driven screen 330_28 in step S1405.

In step S1406, the second calibration unit 912 transmits an instruction to the projector 310_28a (having the projector ID "PJ703A") placed at the position corresponding to the windowpane 1128 having the window ID "W703" to turn on the lamp. As a result, the lamp of the projector 310_28a is turned on.

In step S1407, the operator 1000 inputs an instruction to the information processing apparatus 370 to project a white image using the projector 310_28a.

In step S1408, the second calibration unit 912 responds to the instruction of the operator 1000, to transmit an instruction to the projector 310_28a to project a white image.

In step S1409, in response to the instruction transmitted by the second calibration unit 912, the projector 310_28a carries out full white projection.

In step S1410, the operator 1000 inputs an instruction to the color and luminance meter 382 to measure the color temperature of the windowpane on which the projector 310_28a carries out the full white projection.

In step S1411, the color and luminance meter 382 measures the color temperature of the windowpane on which the projector 310_28a carries out the full white projection. In step S1412, the operator 1000 inputs the measured color temperature to the information processing apparatus 370.

In step S1413, the second calibration unit 912 converts the color temperature that has been input by the operator 1000 to RGB levels.

In step S1414, the second calibration unit 912 transmits the RGB levels thus acquired through the conversion to the projector 310_28a.

In step S1415, the projector 310_28a sets the RGB levels transmitted by the second calibration unit 912.

FIG. 15 illustrates one example of a white image projected in the second calibration process. As illustrated in FIG. 15, the projector 310_28a projects a white image onto the windowpane 1128 in a state where the motor-driven screen 330_28 has been turned off. The operator 1000 uses the color and luminance meter 382 to measure the color temperature of the windowpane 1128, and inputs the measurement result to the information processing apparatus 370. As a result, the information processing apparatus 370 calculates the RGB levels, and the RGB levels corresponding to the measurement result are set to the projector 310_28a.

Returning to the description of FIG. 14, in step S1416, the operator 1000 inputs an instruction to the information processing apparatus 370 to end the second calibration process. In step S1417, in response to the instruction being input by the operator 1000, the second calibration unit 912 transmits an instruction to the motor-driven screen 330_28 to turn on the screen.

In response to the instruction to turn on the screen being transmitted from the second calibration unit 912, the power is turned on in the motor-driven screen 330_28 in step S1418.

<8. Details of image processing>

Next, image processing (step S802 of FIG. 8) carried out by the image projection system 300 will be described in detail.

(1) Functional configuration of image processing unit

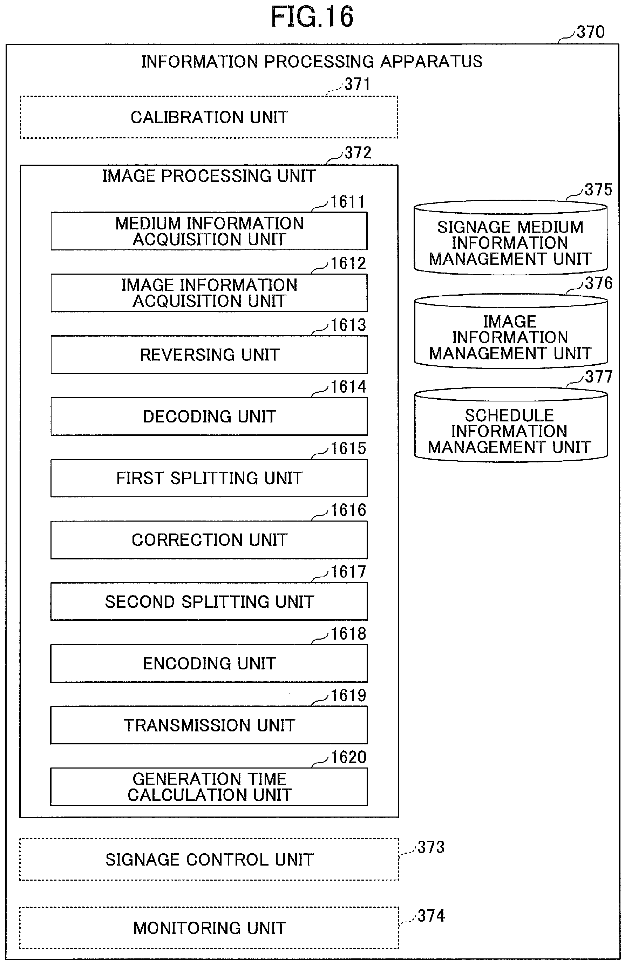

First, a functional configuration of the image processing unit 372 of the information processing apparatus 370 carrying out image processing will be described. FIG. 16 illustrates a functional configuration of the image processing unit 372 of the information processing apparatus 370.

As illustrated in FIG. 16, the image processing unit 372 includes a medium information acquisition unit 1611, an image information acquisition unit 1612, a reversing unit 1613, and a decoding unit 1614. Also, the image processing unit 372 includes a first splitting unit 1615, a correction unit 1616, a second splitting unit 1617, an encoding unit 1618, and a transmission unit 1619. Note that, according to a fourth embodiment that will be described later, the image processing unit 372 further includes a generation time calculation unit 1620 illustrated in FIG. 16 that will be described later concerning the fourth embodiment.

The medium information acquisition unit 1611 retrieves signage medium information stored in the signage medium information management unit 375, and sends the retrieved information to the first splitting unit 1615.

The image information acquisition unit 1612 retrieves a dynamic image given by an advertiser stored in the image information management unit 376, and sends the dynamic image to the reversing unit 1613.

The reversing unit 1613 horizontally reverses (i.e., left-to-right) the dynamic image sent from the image information acquisition unit 1612. According to the image projection system 300, an image is projected onto a transparent or translucent light transmission members (i.e., the windowpane and the motor-driven screen) from the inside, and the projected image is viewed from the outside of the windowpane. Therefore, an image to be projected is previously reversed horizontally. As a result of the reversing unit 1613 carrying out such a reversing process, it is possible to avoid a situation that a viewer views a dynamic image that is horizontally reversed from a dynamic image that an advertiser wishes to display. The reversing unit 1613 sends the reversed dynamic image to the decoding unit 1614.

The decoding unit 1614 decodes the dynamic image having been horizontally reversed, and decomposes the dynamic image in frame units to extract a static image group. The decoding unit 1614 sends the static images included in the static image group to the first splitting unit 1615 sequentially.

The first splitting unit 1615 functions as a first splitting means. The first splitting unit 1615 carries out the first splitting process on each static image sent from the decoding unit 1614 sequentially into a plurality of static images on the basis of the signage medium information 500 sent from the medium information acquisition unit 1611. Thus, the first splitting unit 1615 generates split static images (i.e., split images) in accordance with the sizes and the positions of the windowpanes.

Also, the first splitting unit 1615 functions as a storage means. The first splitting unit 1615 classifies the split static images, acquired from carrying out the first splitting process on all the static images included in the static image group, into split static images belonging to each windowpane, to generate a plurality of split static image groups corresponding to the windowpanes, respectively, and stores the generated split static image groups in the image information management unit 376.

Also, the first splitting unit 1615 attaches split static image group IDs to the generated split static image groups, respectively, and stores the split static image group IDs as image information 600 in a manner of associating the split static image group IDs with the corresponding window IDs, respectively.

Further, the first splitting unit 1615 sends the generated split static image groups to the correction unit 1616 in a manner of associating the split static image groups with the window IDs, respectively.

The correction unit 1616 is one example of a correction means. The correction unit 1616 corrects each of the split static image groups sent from the first splitting unit 1615 using the correction parameter corresponding to the window ID. Also, the correction unit 1616 sends the corrected split static image groups to the second splitting unit 1617.

The second splitting unit 1617 functions as a second splitting means. The second splitting unit 1617 splits each of the corrected split static image groups in projector units. The corrected split static image groups generated by the correction unit 1616 are generated in windowpane units, and therefore, the second splitting unit 1617 splits the split static images in projector units.

The encoding unit 1618 encodes the corrected split static image group for each projector to generate a plurality of projection dynamic images for the respective projectors. The encoding unit 1618 stores projection dynamic image IDs for identifying the generated projection dynamic images and the generation dates and times as image information 600 in a manner of associating the projection dynamic image IDs and the generation dates and times with the projector IDs, respectively.

The transmission unit 1619 is one example of a transmission means, and transmits the projection dynamic images generated by the encoding unit 1618 to the corresponding projectors, respectively. As a result of the transmission unit 1619 previously transmitting the projection dynamic images to the corresponding projectors, what will be carried out by the signage control unit 373 at a time of actually starting projection is to transmit projection start instructions. As a result, in comparison to a method of transmitting projection dynamic images to the projectors at a time of actually starting projection, it is possible to reduce a likelihood of a delay otherwise occurring during projection of dynamic images.

(2) Actual example of image processing

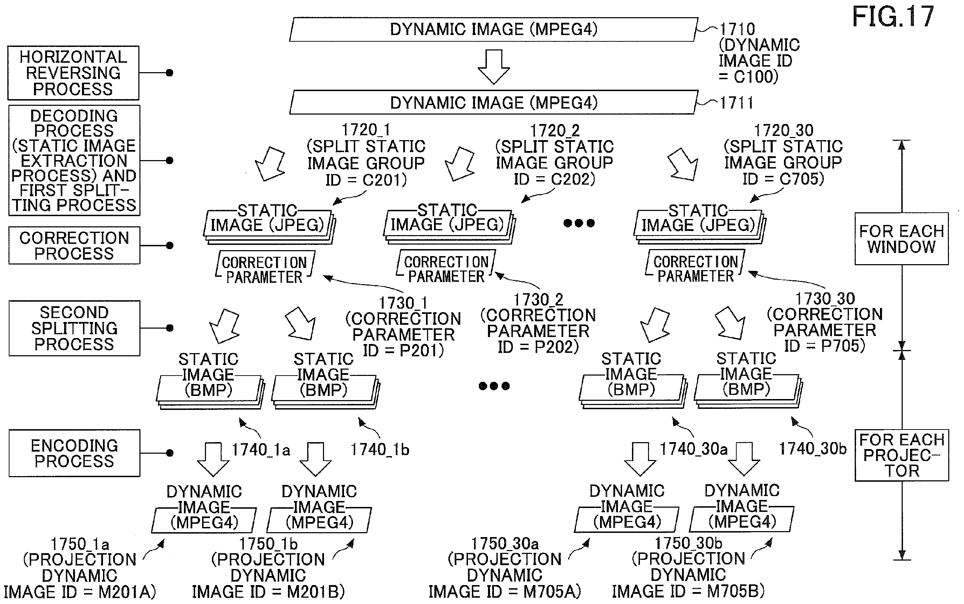

Next, an actual example of image processing (step S802) carried out by the image processing unit 372 will be described. FIG. 17 illustrates an actual example of image processing. Hereinafter, image processing to generate the "content 100" will be described.

In FIG. 17, a dynamic image 1710 is given by an advertiser, has a dynamic image ID "C100", and is stored in the image information management unit 376 in a MPEG4 format. The image information acquisition unit 1612 retrieves the dynamic image 1710, and sends the retrieved image to the reversing unit 1613. Then, the reversing unit 1613 horizontally reverses the dynamic image 1710 to generate a reversed dynamic image 1711.

The reversed dynamic image 1711 is decoded by the decoding unit 1614. Thus, a static image group including static images is extracted. The first splitting unit 1615 then carries out the first splitting process on the basis of the signage medium information 500 on the extracted static image group, to generate a plurality of split static image groups corresponding to the respective windowpanes.

Split static image group IDs C201, C202, ···, and C705 are attached to the generated split static image groups 1720_1, 1720_2, ···, and 1720_30, respectively, and are stored in the image information management unit 376. The split static image group IDs are stored as image information 600 in a manner of being associated with the window IDs, respectively.

The correction unit 1616 corrects the split static image groups 1720_1, 1720_2, ···, and 1720_30 using the corresponding correction parameters, respectively. For example, the correction unit 1616 corrects the split static image group 1720_1 using the correction parameter 1730_1 (having the correction parameter ID "P201"). The correction unit 1616 corrects the split static image group 1720_2 using the correction parameter 1730_2 (having the correction parameter ID "P202"). The correction unit 1616 corrects the split static image group 1720_30 using the correction parameter 1730_30 (having the correction parameter ID "P705").

Each of the split static image groups 1720_1, 1720_2, ···, and 1720_30 corrected with the corresponding correction parameters is split by the second splitting unit 1617 in projector units. For example, the corrected split static image group 1720_1 is split in projector units so that split static image group 1740_1a for the projector 310_1a and split static image group 1740_1b for the projector 310_1b are generated.

In the same way, the corrected split static image group 1720_30 is split in projector units so that split static image group 1740_30a for the projector 310_30a and split static image group 1740_30b for the projector 310_30b are generated.

The corrected split static image groups 1740_1a-1740_30b split in projector units by the second splitting unit 1617 are encoded by the encoding unit 1618. As a result, the encoding unit 1618 generates projection dynamic images in MPEG4 format.

For example, the encoding unit 1618 encodes the split static image group 1740_1a for the projector 310_1a to generate a projection dynamic image 1750_1a. The encoding unit 1618 encodes the split static image group 1740_1b for the projector 310_1b to generate a projection dynamic image 1750_1b. The encoding unit 1618 encodes the split static image group 1740_30a for the projector 310_30a and the split static image group 1740_30b for the projector 310_30b to generate a projection dynamic image 1750_30a and a projection dynamic image 1750_30b, respectively. Thus, the "content 100" is generated.

The encoding unit 1618 stores projection dynamic image IDs (M201A, M201B, ···, M705A, and M705B) for identifying the generated projection dynamic images 1750_1a-1750_30b and the corresponding generation dates and times as image information 600 in a manner of associating the projection dynamic image IDs and the dates and times with the corresponding projector IDs, respectively.

The transmission unit 1619 transmits the generated projection dynamic images 1750_1a-1750_30b to the corresponding projectors, respectively. For example, the transmission unit 1619 transmits the projection dynamic image 1750_1a to the projector 310_1a. The transmission unit 1619 transmits the projection dynamic image 1750_1b to the projector 310_1b. The transmission unit 1619 transmits the projection dynamic image 1750_30a to the projector 310_30a. The transmission unit 1619 transmits the projection dynamic image 1750_30b to the projector 310_30b.

(3) Flow of image processing

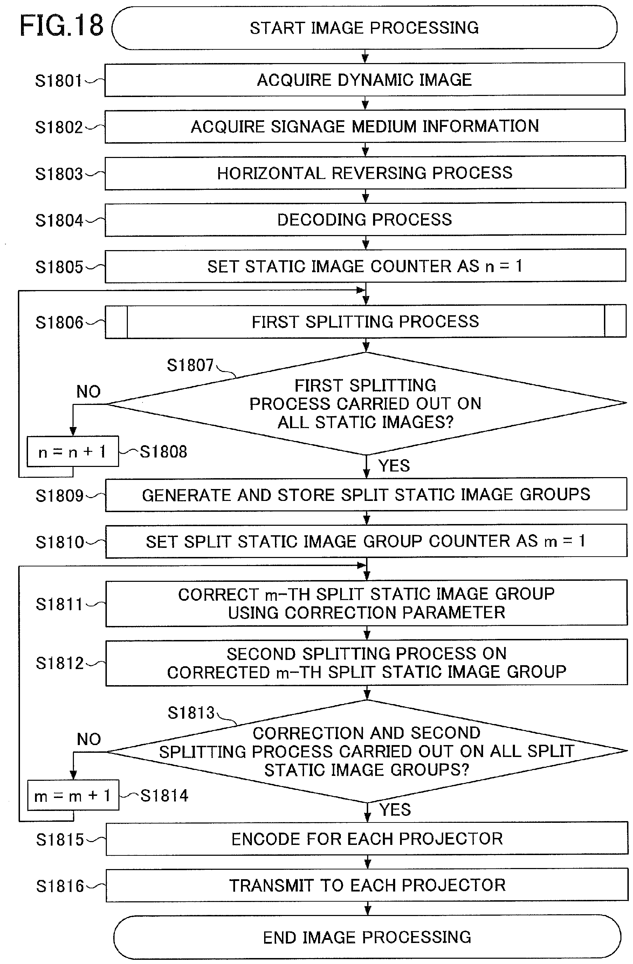

Next, a flow of image processing (step S802) will be described on the basis of a flowchart of FIG. 18. FIG. 18 is a flowchart of image processing.

In step S1801, the image information acquisition unit 1612 acquires a dynamic image from the image information management unit 376.

In step S1802, the medium information acquisition unit 1611 acquires signage medium information 500 from the signage medium information management unit 375.

In step S1803, the reversing unit 1613 carries out horizontal reversing on the dynamic image acquired in step S1801.

In step S1804, the decoding unit 1614 decodes the reversed dynamic image, to extract a static image group.

In step S1805, the first splitting unit 1615 substitutes 1 for a static image counter n.

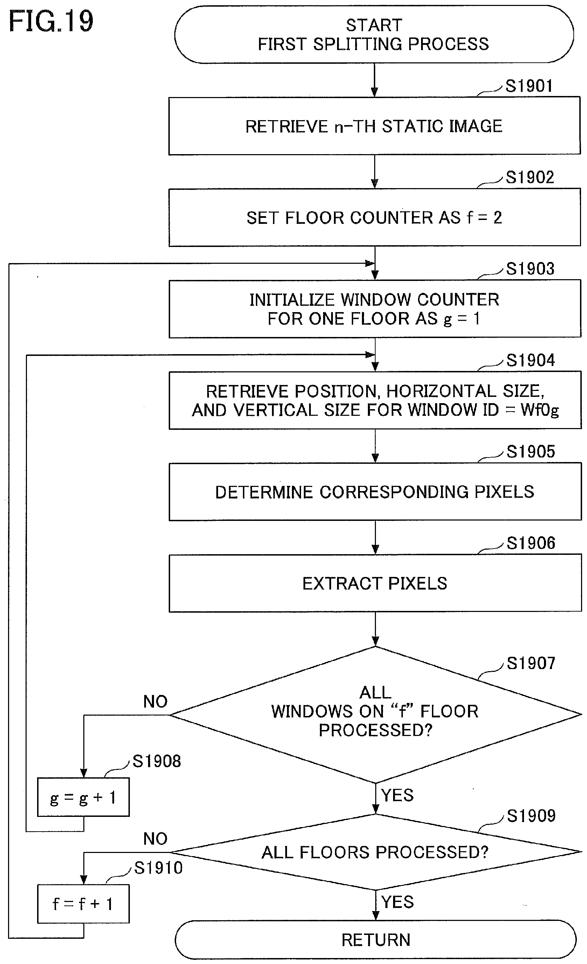

In step S1806, the first splitting unit 1615 carries out the first splitting process on the n-th static image. Note that, a flow of the first splitting process will be described later with reference to FIG. 19.

In step S1807, the first splitting unit 1615 determines whether the first splitting unit 1615 has processed all the static images. In step S1807, if the first splitting unit 1615 determines that static images are left unprocessed (No in step S1807), the first splitting unit 1615 proceeds to step S1808. In step S1808, the first splitting unit 1615 increments the static image counter n by one, and returns to step S1806.

On the other hand, in step S1807, if the first splitting unit 1615 determines that the first splitting unit 1615 has carried out the first splitting process on all the static images, the first splitting unit 1615 proceeds to step S1809.

In step S1809, the first splitting unit 1615 classifies the split static images generated from each static image as split static image groups in windowpane units, to acquire the number of the split static image groups corresponding to the number of the windowpanes, and stores the acquired split static image groups in the image information management unit 376. The first splitting unit 1615 assigns split static image group IDs to the generated split static image groups, respectively, and stores the split static image group IDs as image information 600 in a state of being associated with corresponding window IDs, respectively.

In step S1810, the correction unit 1616 substitutes 1 for a split static image group counter m.

In step S1811, the correction unit 1616 corrects the m-th split static image group from among the split static image groups generated in step S1809, using the corresponding correction parameter.

In step S1812, the second splitting unit 1617 carries out the second splitting process on the m-th corrected split static image group.

In step S1813, the second splitting unit 1617 determines whether the second splitting unit 1617 has processed all the static image groups acquired in step S1809.

In step S1813, if the second splitting unit 1617 determines that static image groups are left unprocessed (No in step S1813), the second splitting unit 1617 proceeds to step S1814.

In step S1814, the second splitting unit 1617 increments the split static image group counter m by one, and returns to step S1811.

On the other hand, in step S1813, if the second splitting unit 1617 determines that the second splitting unit 1617 has carried out the correction and the second splitting process on all the split static image groups (Yes in step S1813), the process proceeds to step S1815.

In step S1815, the encoding unit 1618 encodes the split static image groups, on which the second splitting process has been carried out, in projector units, to generate projection dynamic images (i.e., a projection dynamic image group (i.e., content)) respectively corresponding to the projectors. The encoding unit 1618 stores, for the generated projection dynamic images included in the projection dynamic image group (i.e., the content), the corresponding generation date and time as image information 600.

In step S1816, the transmission unit 1619 transmits the generated projection dynamic images to the corresponding projectors, respectively.

(4) Details of first splitting process

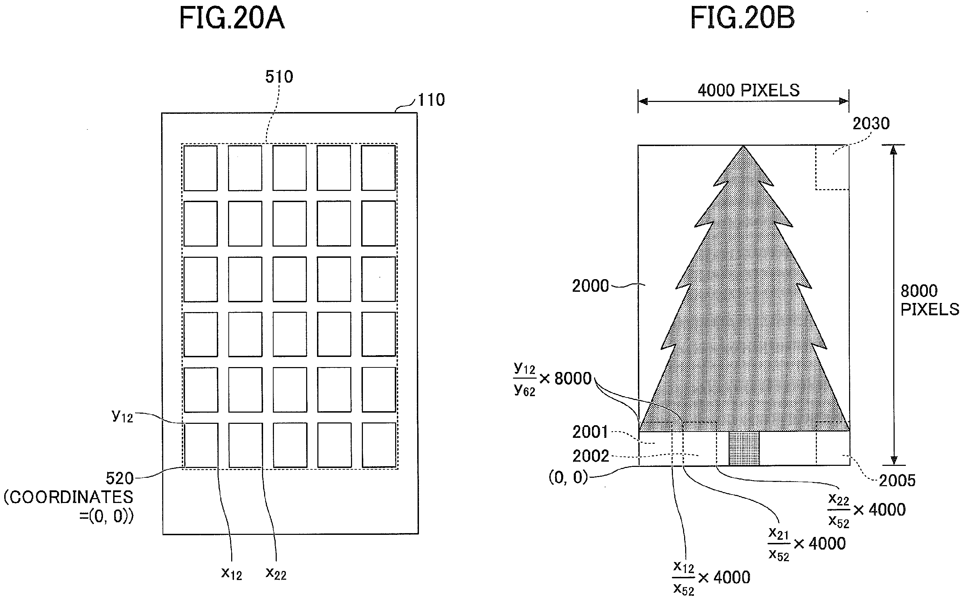

Next, the first splitting process (step S1806 of FIG. 18) will be described in detail using FIGs. 19, 20A, and 20B. FIG. 19 is a flowchart illustrating a flow of the first splitting process. FIGs. 20A and 20B illustrate one example of the first splitting process.

In step S1901, the first splitting unit 1615 retrieves the n-th static image. In FIGs. 20A and 20B, it is assumed that the static image 2000 is the n-th static image retrieved by the first splitting unit 1615.

In step S1902, the first splitting unit 1615 substitutes "2" for a floor counter f.

In step S1903, the first splitting unit 1615 substitutes "1" for a window counter g that is a counter for counting the number of windowpanes for each floor.

In step S1904, the first splitting unit 1615 retrieves, from the signage medium information 500, the "position", the "horizontal size", and the "vertical size" having the window ID "Wf0g". As mentioned above, "2" is substituted for "f", and "1" is substituted for "g". Therefore, the position (0, 0), the horizontal size ($x_{12}$), and the vertical size ($y_{12}$) having the window ID "W201" are retrieved in step S1904.

In step S1905, the first splitting unit 1615 converts the position, the horizontal size, and the vertical size retrieved in step S1904 to the corresponding pixels according to a comparison between the static image 2000 and the given area 510.

As illustrated in FIG. 20B, according to the present embodiment, the static image 2000 is formed by pixels in a size of 4000 pixels (i.e., a horizontal size) by 8000 pixels (i.e., a vertical size). In this case, the pixel having the position (0, 0) in the static image 2000 corresponds to the position (0, 0).

In the same way, the pixel in the static image 2000 corresponding to the horizontal size ($x_{12}$) is calculated by $(x_{12}/x_{52}) \times 4000$. The pixel in the static image 2000 corresponding to the vertical size ($y_{12}$) is calculated by $(y_{12}/y_{62}) \times 8000$.

In step S1906, the first splitting unit 1615 extracts the rectangular area 2001 defined by the pixels calculated in step S1905 from the static image 2000, to acquire the corresponding split static image.

In step S1907, the first splitting unit 1615 determines whether the first splitting unit 1615 has carried out the first splitting process on all the windowpanes on the "f" floor. In step S1907, if the first splitting unit 1615 determines that windowpanes are still left unprocessed (No in step S1907), the first splitting unit 1615 proceeds to step S1908.

In step S1908, the first splitting unit 1615 increments the window counter g by one, and returns to step S1904. This results in "g = 2".

In step S1904, the first splitting unit 1615 retrieves, from the signage medium information 500, the position ($x_{21}$, 0), the horizontal size ($x_{22}$-$x_{21}$), and the vertical size ($y_{12}$) having the window ID "W202".

In step S1905, the first splitting unit 1615 converts the position, the horizontal size, and the vertical size retrieved in step S1904 to the corresponding pixels in the static image 2000.

As illustrated in FIGs. 20A and 20B, the pixel having the position ($x_{21}$, 0) in the static image 2000 is calculated by $(x_{21}/x_{52}) \times 4000$. In the same way, the pixel in the static image 2000 corresponding to the horizontal size ($x_{22}$-$x_{12}$) is calculated by $(x_{22}/X_{52}) \times 4000$. The pixel in the static image 2000 corresponding to the vertical size ($y_{12}$) is calculated by $(y_{12}/y_{62}) \times 8000$.

In step S1906, the first splitting unit 1615 extracts the rectangular area 2002 defined by the pixels calculated in step S1905 from the static image 2000, to acquire the corresponding split static image.

In step S1907, the first splitting unit 1615 determines whether the first splitting unit 1615 has carried out the first splitting process on all the windowpanes on the "f" floor. In step S1907, if the first splitting unit 1615 determines that windowpanes are still left unprocessed (No in step S1907), the first splitting unit 1615 proceeds to step S1908. Thereafter, steps S1904-S1906 will be repeated until the rectangular area 2005 is extracted in step S1906.

In step S1907, if the first splitting unit 1615 determines that the first splitting unit 1615 has carried out the first splitting process on all the windowpanes on the "f" floor (Yes in step S1907), the first splitting unit 1615 proceeds to step S1909.

In step S1909, the first splitting unit 1615 determines whether the first splitting unit 1615 has carried out the first splitting process on all the floors. In step S1909, if the first splitting unit 1615 determines that floors are left unprocessed (No in step S1909), the first splitting unit 1615 proceeds to step S1910.

In step S1910, the first splitting unit 1615 increments the floor counter "f" by one, and returns to step S1903. Thereafter, the first splitting unit 1615 repeats steps S1904-S1907 until the rectangular area 2030 for the floor counter "f = 7" is extracted.

In step S1909, if the first splitting unit 1615 determines that the first splitting unit 1615 has carried out the first splitting process on all the floors (Yes in step S1909), the first splitting unit 1615 returns to step S1807 of FIG. 18.

<9. Details of signage control process>

Next, a signage control process (step S803) carried out by the image projection system 300 will be described in detail.

(1) Functional configuration of signage control unit

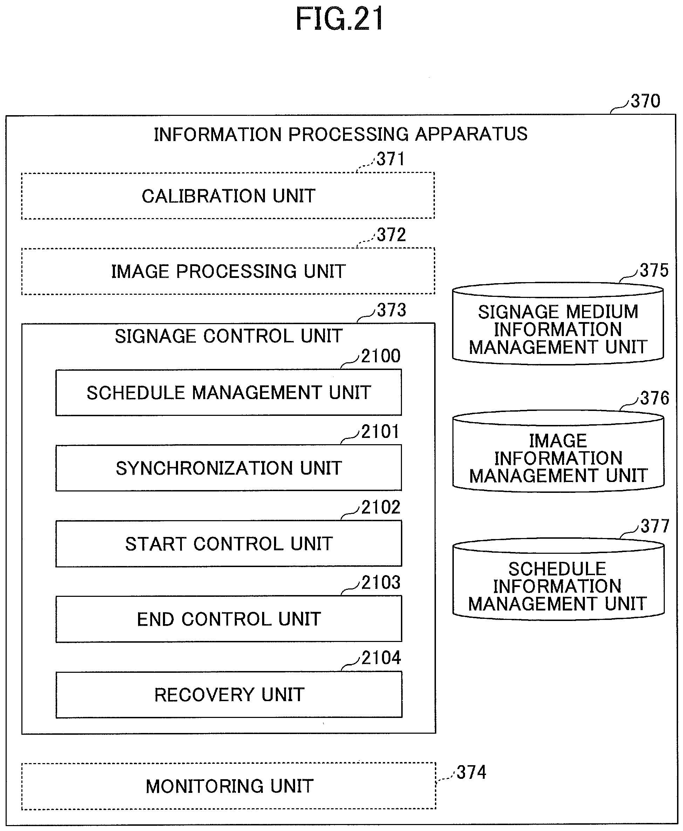

First, a functional configuration of the signage control unit 373 of the information processing apparatus 370 carrying out the signage control process will be described. FIG. 21 illustrates a functional configuration of the signage control unit 373 of the information processing apparatus 370.

As illustrated in FIG. 21, the signage control unit 373 includes a schedule management unit 2100, a synchronization unit 2101, a start control unit 2102, an end control unit 2103, and a recovery unit 2104.

The schedule management unit 2100 functions as an operation means for a user to operate a schedule and content (i.e., a projection dynamic image group), and carries out a schedule management process.

More specifically, the schedule management unit 2100 generates schedule information, and stores the schedule information in the schedule information management unit 377. Also, the schedule management unit 2100 edits and deletes generated schedule information if it is appropriate to do so.

Also, the schedule management unit 2100 transmits an instruction to delete projection dynamic images included in a projection dynamic image group identified by selected content to the projectors 310_1a-310_30b. Further, after projection dynamic images for which the schedule management unit 2100 has sent an instruction to delete are deleted by the projectors 310_1a-310_30b, the schedule management unit 2100 updates image information 600 concerning the deleted projection dynamic images accordingly.

The synchronization unit 2101 outputs time information. Also, the synchronization unit 2101 carries out synchronization of time between the projectors 310_1a-310_30b and the information processing apparatus 370. More specifically, the synchronization unit 2101 receives time information from the time server 360, corrects time information accordingly, and transmits the corrected time information to the projectors 310_1a-310_30b. After the projectors 310_1a-310_30b receive the time information from the synchronization unit 2101, each of the projectors 310_1a-310_30b corrects time information managed internally. Thus, the synchronization unit 2101 synchronizes time between the projectors 310_1a-310_30b and the information processing apparatus 370 on the basis of the precise time information.

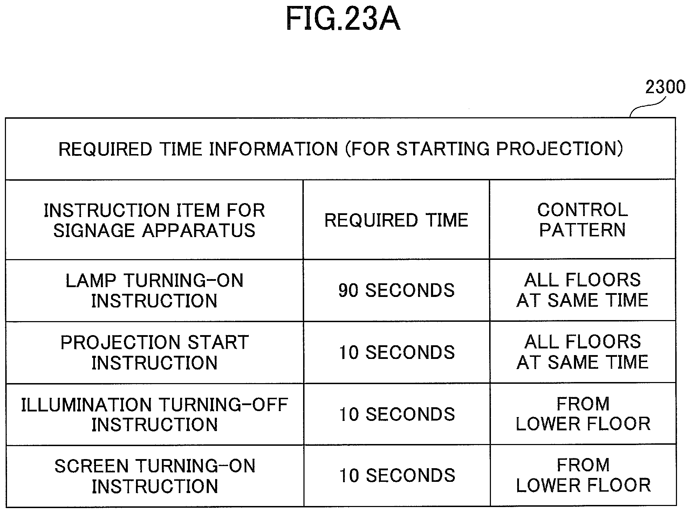

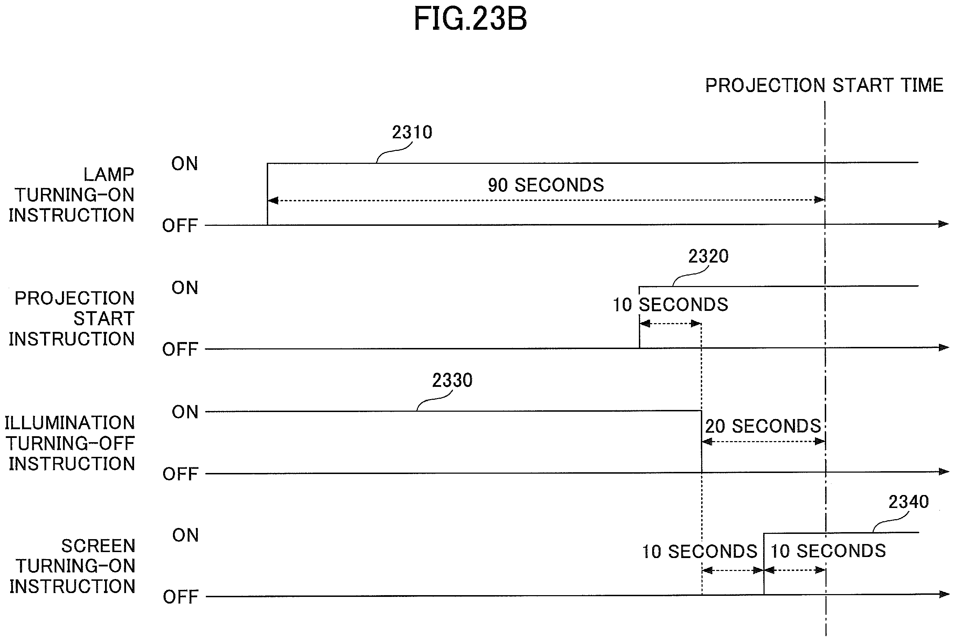

The start control unit 2102 retrieves schedule information stored in the schedule information management unit 377, and acquires the projection start time from the retrieved schedule information. The start control unit 2102 then calculates a time to send an instruction to each signage apparatus on the basis of information concerning a required time of the signage apparatus, and, at the calculated time to send an instruction, transmits the instruction to the signage apparatus concerning an operation at a time of starting projection. Thus, the signage control unit 373 carries out control in consideration of the required time of each signage apparatus, at a time of starting projection. The term "required time" will be described later with reference to FIGs. 23A and 23B, for example.

The end control unit 2103 retrieves the schedule information stored in the schedule information management unit 377, and acquires the projection end time from the retrieved schedule information. The end control unit 2103 then calculates a time to send an instruction to each signage apparatus on the basis of information concerning a required time of the signage apparatus, and, at the calculated time to send an instruction, transmits an instruction to the signage apparatus concerning an operation at a time of ending projection. Thus, the signage control unit 373 carries out control in consideration of the required time of each signage apparatus, at a time of ending projection.

The recovery unit 2104 transmits a projection end instruction to the projectors 310_1a-310_30b if the recovery unit 2104 has received a monitoring result (including a monitoring object having a trouble, the type of the trouble, and so forth) from the monitoring apparatus 351. Also, the recovery unit 2104 functions as a determination means, and determines whether the type of the trouble is such that it is possible to automatically recover from the trouble, to determine whether to continue using the windowpane group 120 as the projection medium.

Further, if the recovery unit 2104 has determined to continue using the windowpane group 120 as the projection medium, the recovery unit 2104 carries out an automatic recovery process. On the other hand, if the recovery unit 2104 has determined not to continue using the windowpane group 120 as the projection medium, the recovery unit 2104 determines to use the windowpane group 120 as ordinary windowpanes. If the recovery unit 2104 thus determines to use the windowpane group 120 as ordinary windowpanes, the recovery unit 2104 carries out a switching process to switch the use of the windowpane group 120 into use as ordinary windowpanes.

(2) Flow of signage control process (for starting)

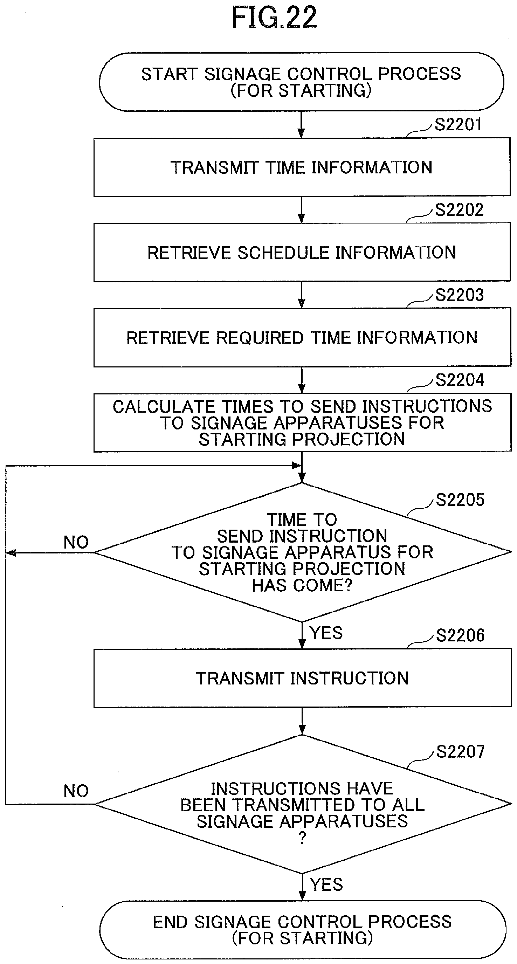

Next, the signage control process (for starting) carried out by the signage control unit 373 will be described on the basis of a flowchart of FIG. 22. FIG. 22 is a flowchart illustrating a flow of the signage control process (for starting).
In step S2201, the synchronization unit 2101 receives time information from the time server 360, corrects time information managed in the information processing apparatus 370, and transmits the corrected time information to the projectors 310_1a-310_30b.
In step S2202, the start control unit 2102 retrieves schedule information stored in the schedule information management unit 377, and acquires the projection start time from the retrieved schedule information.
In step S2203, the start control unit 2102 retrieves required time information (details will be described later) stored in the schedule information management unit 377. Note that, it is assumed that the required time information is stored in the schedule information management unit 377 in a state of being associated with the schedule information 710-730.
In step S2204, the start control unit 2102 calculates a time at which the start control unit 2102 sends an instruction for starting projection to each signage apparatus, on the basis of the projection start time acquired in step S2202 and the required time information retrieved in step S2203.
FIGs. 23A and 23B illustrate one example of the required time information, and times to send instructions for starting projection to the signage apparatuses. As illustrated in FIG. 23A, the required time information 2300 includes, as information items, "instruction item for signage apparatus", "required time", and "control pattern".
For the information item "instruction item for signage apparatus", instruction items to be sent to the signage apparatuses (including the projectors, the illumination apparatuses and the motor-driven screens) for starting projection are stored. For the information item "required time", a time required for an operation of each signage apparatus for starting projection is stored. For the information item "control pattern", information concerning operation sequences of the signage apparatuses for starting projection is stored.
According to the example of FIG. 23A, 90 seconds are required until a lamp turned-on state of a projector is stabilized from when a lamp turning-on instruction is transmitted to the projector. Also, according to the example of FIG. 23A, for starting projection, lamp turning-on instructions are transmitted to the projectors on all the floors together at the same time.
Also, according to the example of FIG. 23A, 10 seconds are required, from when projection start instructions are transmitted to all the projectors on the floors, until all the projectors start projecting projection dynamic images. Also, according to the example of FIG. 23A, for starting projection, the projection start instructions are transmitted to the projectors on all the floors together at the same time.
Also, according to the example of FIG. 23A, for turning off the illumination apparatuses in the order from the lower floor, 10 seconds are required for ultimately turning off the illumination apparatuses on all the floors.
Further, according to the example of FIG. 23A, for turning on the motor-driven screens in the order from the lower floor, 10 seconds are required for ultimately turning on the motor-driven screens on all the floors.
Therefore, as illustrated in the graph 2310 of FIG. 23B, the start control unit 2102 transmits the lamp turning-on instructions to the projectors 310_1a-310_30b together at the same time, 90 seconds before the projection start time.
Also, as illustrated in the graph 2320 of FIG. 23B, the start control unit 2102 transmits the projection start instructions to start projection of dynamic images to the projectors 310_1a-310_30b together at the same time, 10 seconds before transmission of the illumination turning-off instructions to the illumination apparatus on the lowest floor.
Also, as illustrated in the graph 2330 of FIG. 23B, the start control unit 2102 transmits the illumination turning-off instruction to the illumination apparatus on the lowest floor, 20 seconds before the projection start time (i.e., 10 seconds before transmission of the screen turning-on instructions to the motor-driven screens on the lowest floor).
Also, as illustrated in the graph 2340 of FIG. 23B, the start control unit 2102 transmits the screen turning-on instructions to the motor-driven screens on the lowest floor, 10 seconds before the projection start time.
Returning to the description of FIG. 22, in step S2205, the start control unit 2102 determines whether the time at which the start control unit 2102 sends the instruction for starting projection to any signage apparatus as calculated in step S2204 has come.
In step S2205, if the start control unit 2102 determines that the time at which the start control unit 2102 sends the instruction for starting projection to any signage apparatus has not yet come (No in step S2205), the start control unit 2102 waits for when the start control unit 2102 determines that the time at which the start control unit 2102 sends the instruction for starting projection to any signage apparatus has come (Yes in step S2205).
If the start control unit 2102 determines that the time at which the start control unit 2102 sends the instruction for starting projection to any signage apparatus has come (Yes in step S2205), the start control unit 2102 proceeds to step S2206.

In step S2206, the start control unit 2102 transmits the instruction to the signage apparatus for which the start control unit 2102 determines in step S2205 that the time to send the instruction has come.

In step S2207, the start control unit 2102 determines whether the start control unit 2102 has transmitted the instructions to all the signage apparatuses. In step S2207, if the start control unit 2102 determines that there still are signage apparatuses to which the start control unit 2102 has not yet transmitted the instructions (No in step S2207), the start control unit 2102 returns to step S2205.

On the other hand, in step S2207, if the start control unit 2102 determines that the start control unit 2102 has transmitted the instructions to all the signage apparatuses (Yes in step S2207), the start control unit 2102 ends the signage control process (for starting).

(3) Flow of signage control process (for ending)

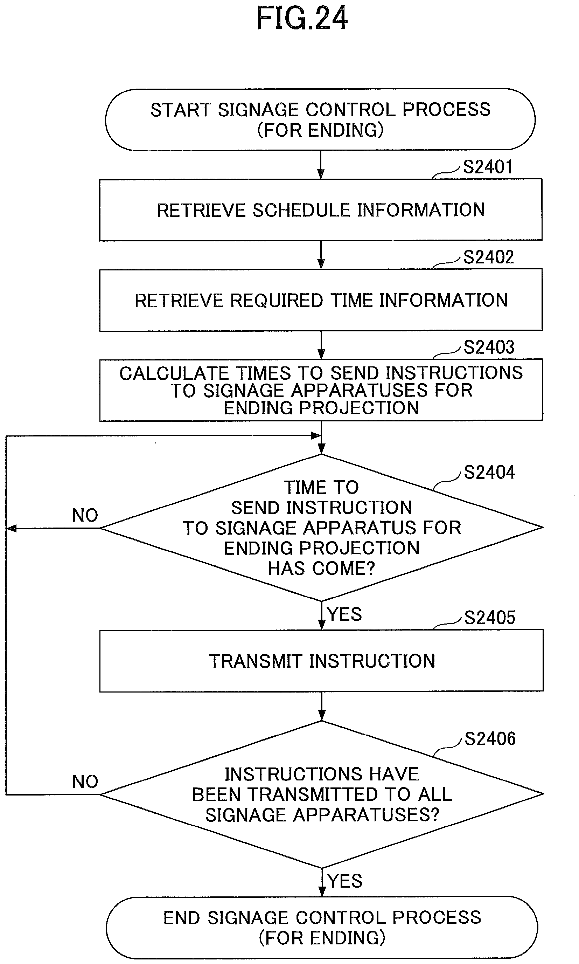

Next, the signage control process (for ending) will be described on the basis of a flowchart of FIG. 24. FIG. 24 is a flowchart illustrating a flow of the signage control process (for ending).

In step S2401, the end control unit 2103 retrieves schedule information stored in the schedule information management unit 377, and acquires the projection end time.

In step S2402, the end control unit 2103 retrieves required time information (details will be described later) stored in the schedule information management unit 377. Note that it is assumed that the required time information is stored in the schedule information management unit 377 in a state of being associated with the schedule information 710-730.

In step S2403, the end control unit 2103 calculates a time at which the end control unit 2103 sends an instruction for ending projection to each signage apparatus, on the basis of the projection end time acquired in step S2401 and the required time information retrieved in step S2402.

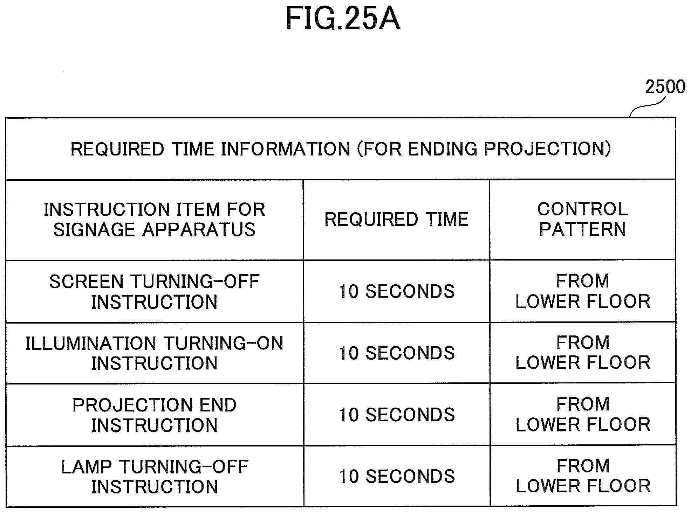

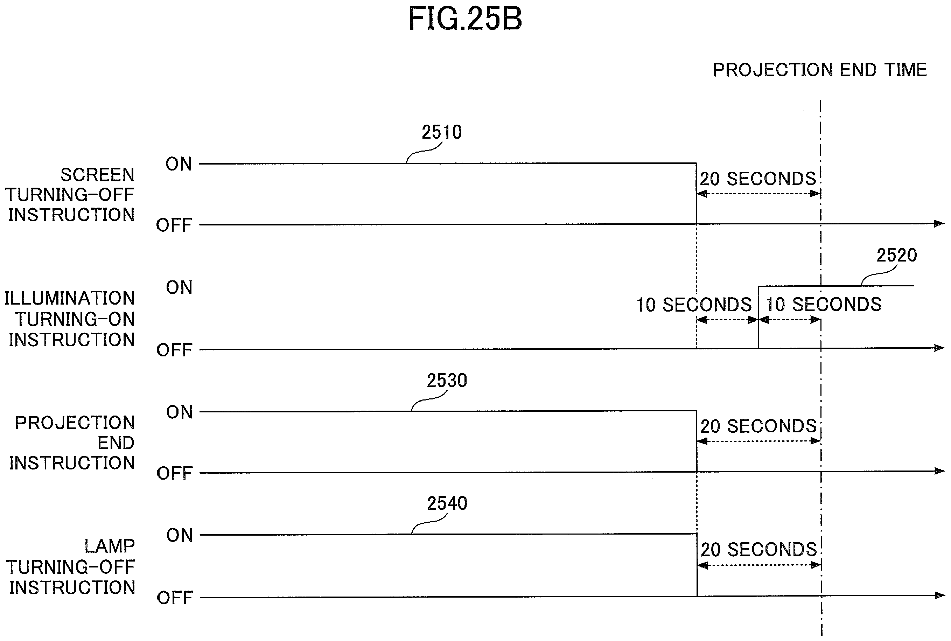

FIGs. 25A and 25B illustrate one example of the required time information, and times to send instructions for ending projection to the signage apparatuses. As illustrated in FIG. 25A, the information items of the required time information 2500 are the same as the information items illustrated in FIG. 23A, and therefore, duplicate description will be omitted.

According to the example of FIG. 25A, for turning off the motor-driven screens in the order from the lower floor, 10 seconds are required for ultimately turning off the motor-driven screens on all the floors.

Also, according to the example of FIG. 25A, for turning on the illumination apparatuses in the order from the lower floor, 10 seconds are required for ultimately turning on the illumination apparatuses on all the floors.

Also, according to the example of FIG. 25A, for ending the projection of the projection dynamic images in the order from the lower floor, 10 seconds are required for ultimately ending the projection of the projection dynamic images on all the floors.

Further, according to the example of FIG. 25A, for turning off the lamps of the projectors in the order from the lower floor, 10 seconds are required for ultimately turning off the lamps of the projectors on all the floors.

Therefore, as illustrated in the graph 2510 of FIG. 25B, the end control unit 2103 transmits the screen turning-off instructions to the motor-driven screens on the lowest floor, 20 seconds before the projection end time (i.e., 10 seconds before transmission of the illumination turning-on instructions to the illumination apparatus on the lowest floor).

Also, as illustrated in the graph 2520 of FIG. 25B, the end control unit 2103 transmits the illumination turning-on instruction to the illumination apparatus on the lowest floor, 10 seconds before the projection end time.

Also, as illustrated in the graph 2530 of FIG. 25B, the end control unit 2103 transmits the projection end instructions to the projectors on the lowest floor, at the same time as the time of the transmission of the screen turning-off instructions to the motor-driven screens on the lowest floor.

Further, as illustrated in the graph 2540 of FIG. 25B, the end control unit 2103 transmits the lamp turning-off instructions to the projectors on the lowest floor, at the same time as the time of the transmission of the screen turning-off instructions to the motor-driven screens on the lowest floor.

Returning to the description of FIG. 24, in step S2404, the end control unit 2103 determines whether the time at which the end control unit 2103 sends the instruction for ending projection to any signage apparatus calculated in step S2403 has come.

In step S2404, if the end control unit 2103 determines that the time at which the end control unit 2103 sends the instruction for ending projection to any signage apparatus has not yet come (No in step S2404), the end control unit 2103 waits for when the end control unit 2103 determines that the time at which the end control unit 2103 sends the instruction for ending projection to any signage apparatus has come.

If the end control unit 2103 determines that the time at which the end control unit 2103 sends the instruction for ending projection to any signage apparatus has come (Yes in step S2404), the end control unit 2103 proceeds to step S2404.

In step S2405, the end control unit 2103 transmits the instruction to the signage apparatus for which the end control unit 2103 determines in step S2404 that the time to send the instruction has come.

In step S2406, the end control unit 2103 determines whether the end control unit 2103 has transmitted the instructions to all the signage apparatuses. In step S2406, if the end control unit 2103 determines that there still are signage apparatuses to which the end control unit 2103 has not yet transmitted the instructions (No in step S2406), the end control unit 2103 returns to step S2404.

On the other hand, in step S2406, if the end control unit 2103 determines that the end control unit 2103 has transmitted the instructions to all the signage apparatuses (Yes in step S2406), the end control unit 2103 ends the signage control process (for ending).

<10. Details of monitoring process>

Next, the monitoring process carried out in the image projection system 300 will be described in detail. Note that, as described above, the image projection system 300 carries out the monitoring process in parallel with the signage process illustrated in FIG. 8.

(1) Functional configuration of monitoring unit

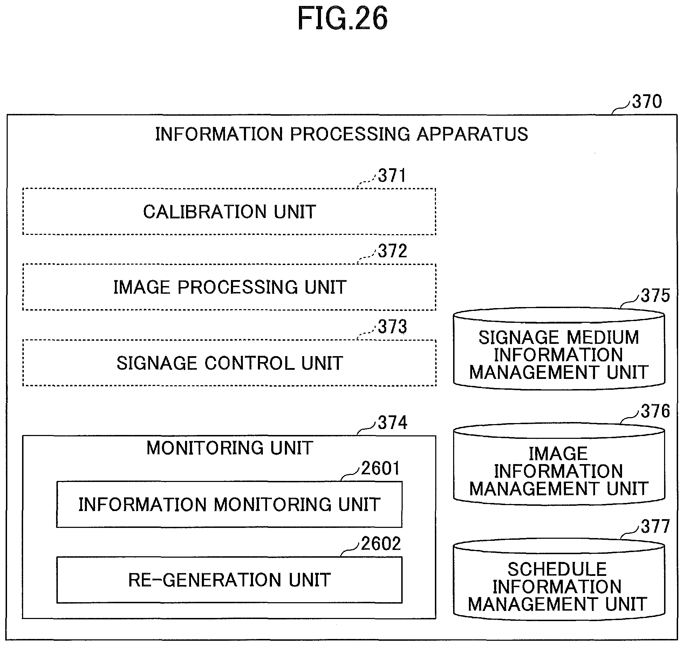

First, a functional configuration of the monitoring unit 374 of the information processing apparatus 370 carrying out the monitoring process will be described. FIG. 26 illustrates a functional configuration of the monitoring unit 374 of the information processing apparatus 370.

As illustrated in FIG. 26, the monitoring unit 374 includes an information monitoring unit 2601 and a re-generation unit 2602.

The information monitoring unit 2601 monitors the image information 600 to determine, for each window ID, the relationship in time between the "calculation date and time" at which the correction parameter is calculated and the "generation date and time" at which the projection dynamic image is generated as a result of being corrected with the correction parameter. If the information monitoring unit 2601 determines that the "calculation date and time" is later than the "generation date and time" for a window ID, the information monitoring unit 2601 sends information of the window ID to the re-generation unit 2602.

The re-generation unit 2602 is one example of a re-generation means. In response to the re-generation unit 2602 receiving the information of the window ID from the information monitoring unit 2601, the re-generation unit 2602 corrects the split static image group identified by the window ID with the new correction parameter to re-generate a projection dynamic image. Also, the re-generation unit 2602 stores the re-generated projection dynamic image in the image information management unit 376, and updates the corresponding "generation date and time" in the image information 600.

(2) Flow of monitoring process

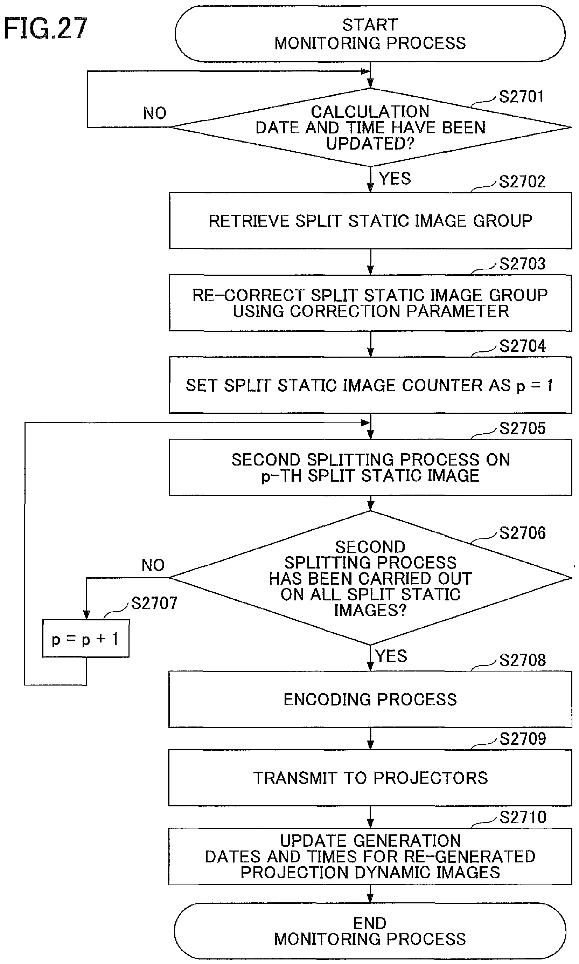

Next, the monitoring process will be described on the basis of a flowchart of FIG. 27. FIG. 27 is a flowchart illustrating a flow of the monitoring process.

In step S2701, the information monitoring unit 2601 monitors the image information 600 stored by the image information management unit 376, and determines whether "calculation date and time" have been updated. In step S2701, if the information monitoring unit 2601 determines that "calculation date and time" have not been updated (No in step S2701), the information monitoring unit 2601 waits until "calculation date and time" have been updated (Yes in step S2701) .

In step S2701, if the information monitoring unit 2601 determines that "calculation date and time" have been updated (Yes in step S2701), the information monitoring unit 2601 proceeds to step S2702. It will now be assumed that the correction parameter having the correction parameter ID "P205" has been updated.

In step S2702, the information monitoring unit 2601 sends the window ID associated with the correction parameter for which it is determined in step S2701 that "calculation date and time" have been updated, to the re-generation unit 2602. The re-generation unit 2602 retrieves the split static image group (in the example, having the split static image group ID "C205") associated with the sent window ID, from the image information management unit 376.

In step S2703, the re-generation unit 2602 carries out the correction process on the split static image group (in the example, having the split static image group ID "C205") retrieved in step S2702 using the correction parameter for which "calculation date and time" have been updated. In the example, the correction process is carried out using the correction parameter having the correction parameter ID "P205".

In step S2704, the re-generation unit 2602 substitutes "1" for the split static image counter "p".

In step S2705, the re-generation unit 2602 carries out the second splitting process on the p-th split static image included in split static image group (having the split static image group ID "C205") re-corrected in step S2703.

In step S2706, the re-generation unit 2602 determines whether the second splitting process has been carried out on all of the split static images included in the re-corrected split static image group (having the split static image group ID "C205"). In step S2706, if the re-generation unit 2602 determines that the second splitting process has not been carried out on some of the split static images included in the re-corrected split static image group (No in step S2706), the re-generation unit 2602 proceeds to step S2707.

In step S2707, the re-generation unit 2602 increments the split static image counter "p" by one, and returns to step S2705.

On the other hand, in step S2706, if the re-generation unit 2602 determines that the second splitting process has been carried out on all of the split static images included in the re-corrected split static image group (Yes in step S2706), the re-generation unit 2602 proceeds to step S2708.

In step S2708, the re-generation unit 2602 regenerates projection dynamic images (having projection dynamic image IDs "M205A" and "M205B") by carrying out, for each projector, the encoding process on the split static image group on which the second splitting process has been carried out.

In step S2709, the re-generation unit 2602 transmits the re-generated projection dynamic images (having the projection dynamic image IDs "M205A" and "M205B") to the corresponding projectors (having the projector IDs "PJ205A" and "PJ205B"), respectively.

In step S2710, the re-generation unit 2602 updates, in the image information 600, the "generation date and time" of the re-generated projection dynamic images (having the projection dynamic image IDs "M205A" and "M205B").

Thus, by using the monitoring unit 374, even if the correction parameter is changed after a projection dynamic image is generated, it is possible to re-generate a projection dynamic image reflecting the changed correction parameter. As a result, it is possible to project distortion-free projection dynamic images, even onto a motor-driven screen corresponding to a windowpane for which the correction parameter has been changed.

<11. Summary of first embodiment>

As can be seen from the above description, the image projection system 300 according to the present embodiment has the following features.

- The image projection system 300 reverses a dynamic image given by an advertiser and splits a static image at each frame of the reversed dynamic image on the basis of the positions and the sizes of a plurality of windowpanes included in a given area of an outside surface of a building, to generate a plurality of split static image from the static image.
- The image projection system 300 generates the number of split static image groups, the number being equal to the number of the windowpanes, using the split static images corresponding to each windowpane at the respective frames, and stores the generated split static image groups in the image information management unit.
- The image projection system 300 corrects each of the split static image groups using the corresponding correction parameter generated from carrying out a calibration process on projectors installed at positions corresponding to each of the windowpanes included in the given area of the outside surface of the building.
- The image projection system 300 further splits each of the corrected split static image groups according to the number of projectors installed at positions corresponding to each windowpane, and encodes the thus-acquired split static images, to generate projection dynamic image groups in projector units.
- The image projection system 300 projects the respective projection dynamic images included in the generated projection dynamic image group using the corresponding projectors onto the motor-driven screens corresponding to the windowpanes.

As a result, it is possible to implement the digital signage combining the plurality of light transmission members.

Also, the image projection system 300 according to the present embodiment further has the following features.

- The image projection system 300 previously transmits the projection dynamic images included in the generated projection dynamic image group to the projectors, respectively, and projects the projection dynamic images onto the motor-driven screens corresponding to the windowpanes, respectively, at a time calculated on the basis of schedule information that defines a time for projection.
- The image projection system 300 controls operations of the motor-driven screens and the illumination apparatuses at times calculated on the basis of the schedule information.

As a result, in comparison to a case where projection dynamic images are transmitted at the same time of starting projection, it is possible to reduce likelihood of a delay otherwise occurring in projection of projection dynamic images, and it is possible to implement a digital signage having high visual effect.

[First variant]

According to the first embodiment described above, in the signage control process, the projectors 310_1a-310_30b are controlled individually. However, an actual method of controlling the projectors 310_1a-310_30b is not limited to this method. It is also possible to control the projectors 310_1a-310_30b for on a per-floor basis.

For example, in a signage control process, it is possible that common lamp turning-on instructions and projection start instructions are used to control the projectors 310_1a-projector 310_5b (installed on 2F).

Alternatively, it is also possible that the projectors 310_1a-310_30b are collectively controlled. For example, in a signage control process, it is possible that common lamp turning-on instructions and projection start instructions are used to control all the projectors 310_1a-310_30b (installed on 2F-7F).

According to the first embodiment described above, in the signage control process, the motor-driven screens 330_1-330_30 are controlled individually. However, an actual method of controlling the motor-driven screens 330_1-330_30 is not limited to this method. It is also possible to control the motor-driven screens 330_1-330_30 on a per-floor basis. For example, in a signage control process, it is possible that the control apparatus 340 controls the motor-driven screens 330_1-330_5 (installed on 2F) using a common power strip, to implement control on a per-floor basis.

Alternatively, it is also possible that the motor-driven screens 330_1-330_30 are collectively controlled. For example, it is possible that the control apparatus 340 uses a common power strip for all the motor-driven screens 330_1-330_30 (installed on 2F-7F), to implement the same control throughout all the floors.

Thus, it is possible that the windowpane group installed in the given area of the outside surface of the building 110 are classified into a plurality of groups (for example, a group for each floor), and the signage apparatuses belonging to each group are controlled collectively.

[Second variant]

According to the above-described first embodiment, in the second calibration process, the settings in the projectors are changed on the basis of the RGB levels converted on the basis of the measured color temperatures. However, it is also possible that, for example, the color temperature is previously measured for each of a different time range, weather, and brightness in the building. Then, the settings in the projectors will be changed on the basis of the RGB levels corresponding to the previously measured color temperatures according to the actual time range, weather, and brightness in the building.

[Other variants]

According to the above-described first embodiment, two projectors are installed at each windowpane. However, the number of projectors at each windowpane is not limited to two. For example, it is also possible that one projector is installed at each windowpane. In this case, the second splitting process is not carried out. It is also possible that three or more projectors are installed at each windowpane. In this case, in the second splitting process, each split static image included in a split static image group generated in the first splitting process is split to the number of split static images corresponding to the number of projectors at each windowpane.

Note that, it is also possible that the number of projectors at each windowpane is different for each windowpane. In this case, in the second splitting process, the number of split static images generated from a split static image is changed for each windowpane.

Also, according to the above-described first embodiment, the shape of each windowpane is rectangular and planar. However, the shape of each windowpane is not limited to a rectangle. Also, each windowpane may have a curved shape. In this case, the calibration unit 371 calculates the correction parameters on the basis of the curved shapes of the respective windowpanes, and the image processing unit 372 corrects the split static image groups using the calculated correction parameters.

Also, according to the above-described first embodiment, the size of each windowpane is the same. However, it is possible that the size of each windowpane is not the same. In a case where the size of each windowpane is different, the projection area of each projector is adjusted according to the size of each windowpane, and the first splitting process is carried out according to the sizes of the respective windowpanes.

Also, according to the above-described first embodiment, the projection dynamic images are generated on the basis of the given dynamic image. However, it is also possible that projection static images are generated on the basis of a given static image.

Also, according to the above-described first embodiment, the information processing apparatus 370 includes the calibration unit 371, the image processing unit 372, the signage control unit 373, and the monitoring unit 374. However, it is also possible that one or more of these units are implemented by one or more signage apparatuses.

Also, according to the above-described first embodiment, the windowpanes installed in the given area of the outside surface of the building are used as the projection media. However, the projection media are not limited to windowpanes, and can be other light transmission members. Also, the light transmission members can be, instead of light transmission members installed in a given area of the outside surface of the building 110, light transmission members that are installed in a given area inside the building 110, light transmission members that are installed on something other than a building, or the like.

According to the first embodiment, it is possible to implement a digital signage using a combination of a plurality of surfaces.

[Second Embodiment]

An image projection system according to a second embodiment will now be described. For the elements having substantially the same functional configurations as those of the first embodiment, the same reference numerals are given, and duplicate description will be omitted.

As mentioned above for the first embodiment, by implementing a single digital signage using a combination of a plurality of surfaces such as those of windowpanes included in a given area of a building, it is possible to increase the application range of a digital signage. Especially, by using a mid-to-high-rise building having many windowpanes, it is possible to implement a digital signage of a larger scale.

However, if the number of image projection apparatuses increases as the scale of a digital signage is increased, a likelihood that the image projection apparatuses have a trouble may increase.

If image projection apparatuses used to implement a digital signage using windowpanes have a trouble, and a considerable time may be taken for recovery from the trouble, it is desirable to end the use of the windowpanes as the projection media, to use the windowpanes as ordinary windowpanes to improve the use efficiency of the windowpanes, for example.

The second embodiment has been devised for solving the above-mentioned problem, and an object of the second embodiment is enabling an efficient use of a plurality of surfaces that are used as projection media for a digital signage.

<1. Example of application of image projection system>

According to an image projection system in the second embodiment, a plurality of windowpanes are used as projection medium to project projection dynamic image group 130. When a projection dynamic image group 130 are not projected onto the windowpanes, the windowpanes are used as ordinary windowpanes. Also, if the windowpanes have a trouble for being used to project the projection dynamic image group 130 and a time will be taken for recovery from the trouble, the use of the windowpanes as the projection media is immediately interrupted, and the use of the windowpanes will be switched into use as ordinary windowpanes.

Thus, according to the image projection system in the second embodiment, it is possible to efficiently use the plurality of windowpanes.

<2. Operations of signage apparatuses>

Operations of the signage apparatuses are the same as or similar to the operations of the signage apparatuses according to the first embodiment described above, and duplicate description will be omitted.

<3. System configuration of image projection system>

A system configuration of the image projection system is the same as or similar to the system configuration of the image projection system according to the first embodiment described above, and duplicate description will be omitted.

<4. Hardware configuration of information processing apparatus>

A hardware configuration of the information processing apparatus 370 is the same as or similar to the hardware configuration of the information processing apparatus 370 according to the first embodiment described above, and duplicate description will be omitted.

<5. Information stored in management units>

Next, various types of information (the signage medium information, the image information, and the schedule information) stored in the management units (the signage medium information management unit 375, the image information management unit 376, and the schedule information management unit 377) of the information processing apparatus 370 will be described.

The signage medium information and the image information are the same as or similar to the signage medium information and the image information in the first embodiment described above, and duplicate description will be omitted.

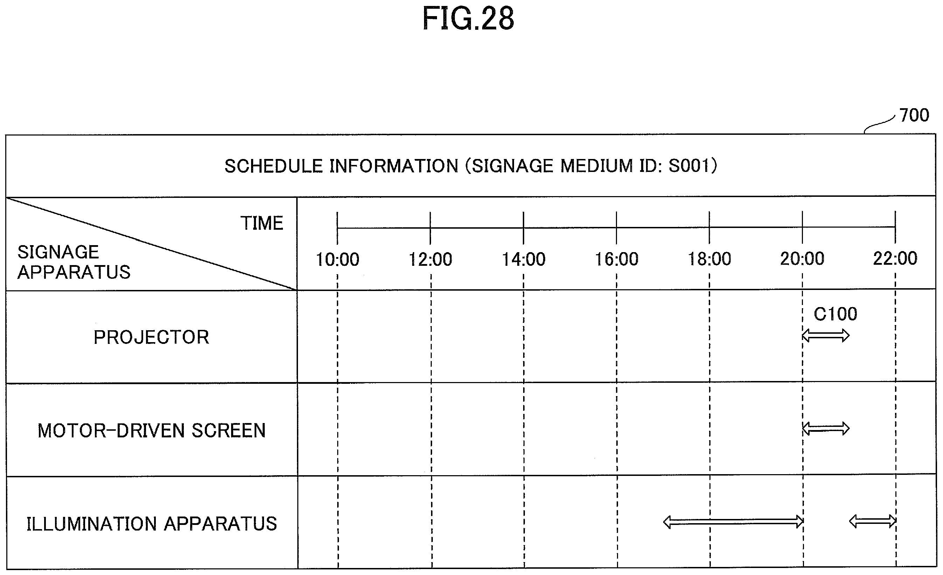

Schedule information stored in the schedule information management unit 377 according to the second embodiment will now be described. FIG. 28 illustrates an example of the schedule information according to the second embodiment. As illustrated in FIG. 28, schedule information 700 is generated for each day of the week for each signage medium. As illustrated in FIG. 28, the schedule information 700 includes, as information items, "time", and "signage apparatus".

For the item "time", a time range during which the windowpane group 120 can be used for a digital signage in the building 110 identified by the signage medium ID "S001" is stored. According to the example of FIG. 28, the windowpane group 120 can be used for a digital signage in the building 110 identified by the signage medium ID "S001" during a time range of 10:00-22:00.

The item "signage apparatus" further includes information items "projector", "motor-driven screen", and "illumination apparatus". For the item "projector", a time range during which the projectors 310_a-310_30b project projection dynamic images is stored. According to the example of FIG. 28, a projection dynamic image group generated on the basis of the dynamic image ID "C100" is projected during the time range 20:00-21:00.

For the item "motor-driven screen", a time range during which the motor-driven screens 330_1-330_30 are in turned-on states is stored. A time range during which the motor-driven screens 330_1-330_30 are in turned-on states is the same as the time range 20:00-21:00 during which the projectors 310_1a-310_30b project the projection dynamic image group.

For the item "illumination apparatus", a time range during which the illumination apparatuses 140_1-14 are in turned-on states is stored. According to the present embodiment, the illumination apparatuses 140_1-14 are in turned-on states in a time range of the evening (according to FIG. 28, after 17:00). However, the time range (20:00-21:00) during which the projectors 310_1a-310_30b project the projection dynamic image group is excluded from the time range during which the illumination apparatuses 140_1-14 are in turned-on states.

<6. Flow of signage process in image projection system>

A flow of a signage process carried out in the image projection system 300 is generally the same as the flow of the signage process carried out in the image projection system 300 according to the first embodiment.

Also according to the second embodiment, in step S803 of FIG. 8 described above for the first embodiment, the image projection system 300 carries out the signage control process.

In the signage control process, the image projection system 300 carries out control to start and end projecting the projection dynamic images using the projectors 310_1a-310_30b, carries out control to turn on and turn off the power supply to the motor-driven screens 330_1-330_30, and carries out control to turn on and turn off the power supply to the illumination apparatuses 140_1-140_6.

During the signage control process in step S803, according to the second embodiment, the monitoring apparatus 351 carries out a monitoring process to detect, if any, a trouble occurring in a monitoring object. The monitoring process to detect a trouble occurring in a monitoring object according to the second embodiment will be described later in detail.

<7. Details of calibration process>

The calibration process (step S801 of FIG. 8) carried out by the image projection system 300 is the same as or similar to the calibration process according to the first embodiment, and duplicate description will be omitted.

<8. Details of image processing>

The image processing (step S802 of FIG. 8) carried out by the image projection system 300 is the same as or similar to image processing according to the first embodiment, and duplicate description will be omitted.

<9. Details of signage control process>

Next, the signage control process (step S803 of FIG. 8) carried out by the image projection system 300 will be described in detail.

(1) Functional configuration of signage control unit

First, a functional configuration of the signage control unit 373 of the information processing apparatus 370 carrying out the signage control process will now be described.

The functions of the signage control unit 373 are generally the same as those of the signage control unit 373 according to the first embodiment described above with reference to FIG. 21, and duplicate description will be omitted.

The start control unit 2102 retrieves schedule information stored in the schedule information management unit 377, and acquires the projection start time. The start control unit 2102 transmits an instruction for operations at a time of starting projection on the basis of the acquired projection start time to each signage apparatus.

The end control unit 2103 retrieves the schedule information stored in the schedule information management unit 377, and acquires the projection end time. The end control unit 2103 transmits an instruction for operations at a time of ending projection on the basis of the acquired projection end time to each signage apparatus.

(2) Flow of signage control process

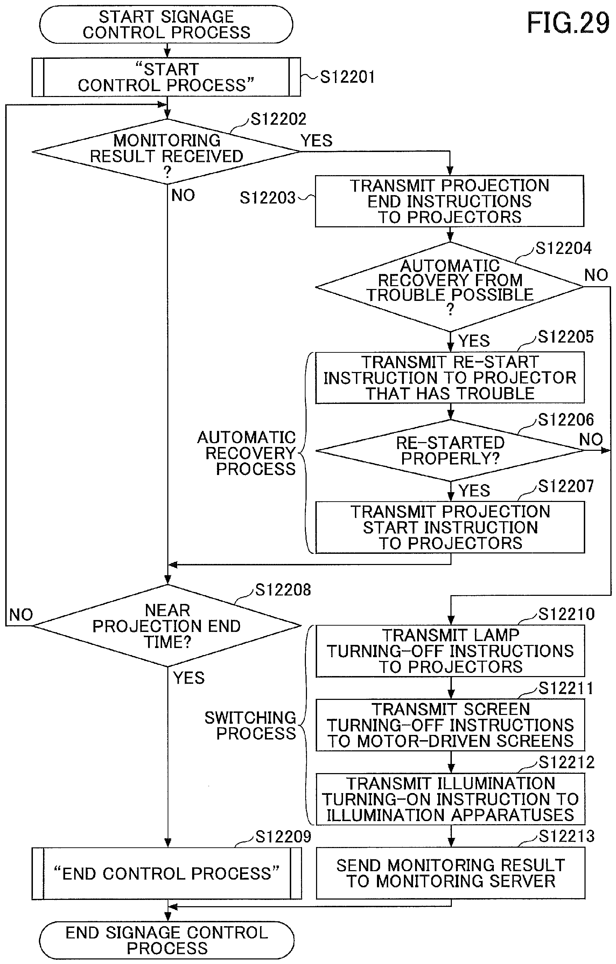

Next, a flow of the signage control process carried out by the signage control unit 373 will be described. FIG. 29 is a flowchart illustrating a flow of the signage control process. When the image processing by the image processing unit 372 has been completed, the signage control process illustrated in FIG. 29 is started.

In step S12201, the synchronization unit 2101 and the start control unit 2102 start a start control process to start projection of the projection dynamic images. The start control process (step S12201) will be described later in detail.

In step S12202, the recovery unit 2104 determines whether the recovery unit 2104 has received a monitoring result (the monitoring object having a trouble, the trouble type, and so forth) from the monitoring apparatus 351. In step S12202, in a case of having determined that the recovery unit 2104 has received a monitoring result (Yes in step S12202), the recovery unit 2104 proceeds to step S12203.

In step S12203, the recovery unit 2104 transmits a projection end instruction to the projectors 310_1a-310_30b. Thus, it is possible to avoid a situation of continuation of the projection of the projection dynamic image group 130 in a state where the projection dynamic image group 130 includes a blank.

In step S12204, the recovery unit 2104 determines whether it is possible to automatically recover from the trouble on the basis of the trouble type included in the monitoring result. In step S12204, in a case of having determined that it is possible to automatically recover from the trouble (Yes in step S12204), the recovery unit 2104 determines to continue using the windowpane group 120 as the projection media, and carries out the automatic recovery process (steps S12205-S12207).

More specifically, in step S12205, the recovery unit 2104 transmits a re-start instruction to a projector that is the monitoring object (i.e., the monitoring object having the trouble) included in the monitoring result. Thus, the power supply to the projector that is the monitoring object is re-started after the power supply was once turned off. Thus, the recovery unit 2104 causes the projector that is the monitoring object to automatically recover from the trouble.

In step S12206, the recovery unit 2104 determines whether the projector that is the monitoring object has actually re-started properly. In a case of having determined in step S12206 that the projector that is the monitoring object has actually re-started properly (Yes in step S12206), the recovery unit 2104 proceeds to step S12207.

In step S12207, the recovery unit 2104 transmits projection start instructions to the projectors 310_1a-310_30b. Thus, the projection of the projection dynamic image group 130 is automatically re-started, and the automatic recovery process is thus completed.

On the other hand, in step S12204, in a case of having determined that it is not possible to automatically recover from the trouble (No in step S12204), the recovery unit 2104 interrupts using the windowpane group 120 as the projection media, and determines to switch the use of the windowpane group 120 into use as ordinary windowpanes.

In a case of having determined in step S12206 that the projector has not actually re-started properly (No in step S12206), the recovery unit 2104 interrupts using the windowpane group 120 as the projection media, and determines to switch the use of the windowpane group 120 into use as ordinary windowpanes.

In a case of having determined to switch the use of the windowpane group 120 into use as ordinary windowpanes, the recovery unit 2104 carries out a switching process (steps S12210-S12212).

More specifically, in step S12210, the recovery unit 2104 transmits lamp turning-off instructions to the projectors 310_1a-310_30b. Thus, the lamps of the projectors 310_1a-310_30b are turned off.

In step S12211, the recovery unit 2104 transmits screen turning-off instructions to the motor-driven screens 330_1-330_30. Thus, the motor-driven screens 330_1-330_30 are turned off, and their light transmission members have become transparent.

In step S12212, the recovery unit 2104 transmits illumination turning-on instructions to the illumination apparatuses 140_1-140_6. Thus, the illumination apparatuses 140_1-140_6 are turned on. As a result, it is possible to use the windowpane group 120, having been used as the projection media, as ordinary windowpanes, and thus, the switching process is finished.

In step S12213, the recovery unit 2104 sends the monitoring result received in step S12202 to the monitoring server 352. Then, the monitoring server 352 sends an email including the sent monitoring result (the monitoring object having the trouble, the trouble type, and so forth) to a service person. As a result, for the trouble from which it is not possible to automatically recover, the service person will handle the trouble for recovery.

On the other hand, in step S12202, in a case of having determined that the recovery unit 2104 has not received a monitoring result, step S12208 will then be carried out. In step S12208, the end control unit 2103 determines whether it is near the projection end time. The end control unit 2103 acquires the projection end time from the schedule information 700, and compares the acquired projection end time with the current time that is output by the synchronization unit 2101, to determine whether it is near the projection end time.

In step S12208, in a case of having determined that it is not near the projection end time (No in step S12208), the end control unit 2103 returns to step S12202. On the other hand, in step S12208, in a case of having determined that it is near the projection end time (Yes in step S12208), the end control unit 2103 proceeds to step S12209.

In step S12209, the end control unit 2103 carries out an end control process and ends the signage control process. Note that the end control process (step S12209) will be described later in detail.

(3) Details of start control process and end control process

Next, the start control process (step S12201 of FIG. 29) and the end control process (step S12209) will be described in detail.

FIGs. 30A and 30B are flowcharts illustrating details of the start control process and the end control process. As illustrated in FIG. 30A, in step S12301, the start control unit 2102 retrieves the schedule information 700 stored in the schedule information management unit 377. The start control unit 2102 acquires the projection start time on the basis of the retrieved schedule information 700.

In step S12302, the start control unit 2102 transmits lamp turning-on instructions to the projectors 310_1a-310_30b at times corresponding to the acquired projection start time. Thus, the respective lamps of the projectors 310_1a-310_30b are turned on.

In step S12303, the synchronization unit 2101 receives the time information from the time server 360, to correct the time information managed in the information processing apparatus 370, and transmits the corrected time information to the projectors 310_1a-310_30b.

In step S12304, the start control unit 2102 transmits projection start instructions to the projectors 310_1a-310_30b at times corresponding to the acquired projection start time. Thus, each of the projectors 310_1a-310_30b carries out a process to start projection of the projection dynamic image.

In step S12305, the start control unit 2102 transmits illumination turning-off instructions to the illumination apparatuses 140_1-140_6 at times corresponding to the acquired projection start time. Thus, each of the illumination apparatuses 140_1-140_6 is turned off.

In step S12306, the start control unit 2102 transmits screen turning-on instructions to the motor-driven screens 330_1-330_30 at times corresponding to the acquired projection start time. Thus, each of the motor-driven screens 330_1-330_30 is turned on, and the light transmission members of the motor-driven screens become translucent.

Then, the start control process in step S12201 of FIG. 29 by the synchronization unit 2101 and the start control unit 2102 ends, and then, the process proceeds to step S12202 of FIG. 29.

Next, a flow of the end control process (step S12209 of FIG. 29) will be described. As illustrated in FIG. 30B, in step S12311, the end control unit 2103 transmits projection end instructions to the projectors 310_1a-310_30b at times corresponding to the acquired projection end time. Thus, the projectors 310_1a-310_30b end projection of the projection dynamic images.

In step S12312, the end control unit 2103 transmits screen turning-off instructions to the motor-driven screens 330_1-330_30 at times corresponding to the acquired projection end time. Thereby, each of the motor-driven screens 330_1-330_30 is turned off, and the light transmission members of the motor-driven screens become transparent.

In step S12313, the end control unit 2103 transmits illumination turning-on instructions to the illumination apparatuses 140_1-140_6 at times corresponding to the acquired projection start time. Thus, the illumination apparatuses 140_1-140_6 are turned on.

In step S12315, the end control unit 2103 transmits lamp turning-off instructions to the projectors 310_1a-310_30b. Thus, the lamp of each of the projectors 310_1a-310_30b is turned off.

Then, the end control process by the end control unit 2103 ends, and the signage control process of FIG. 29 ends.

(4) Actual example of automatic recovery process and switching process

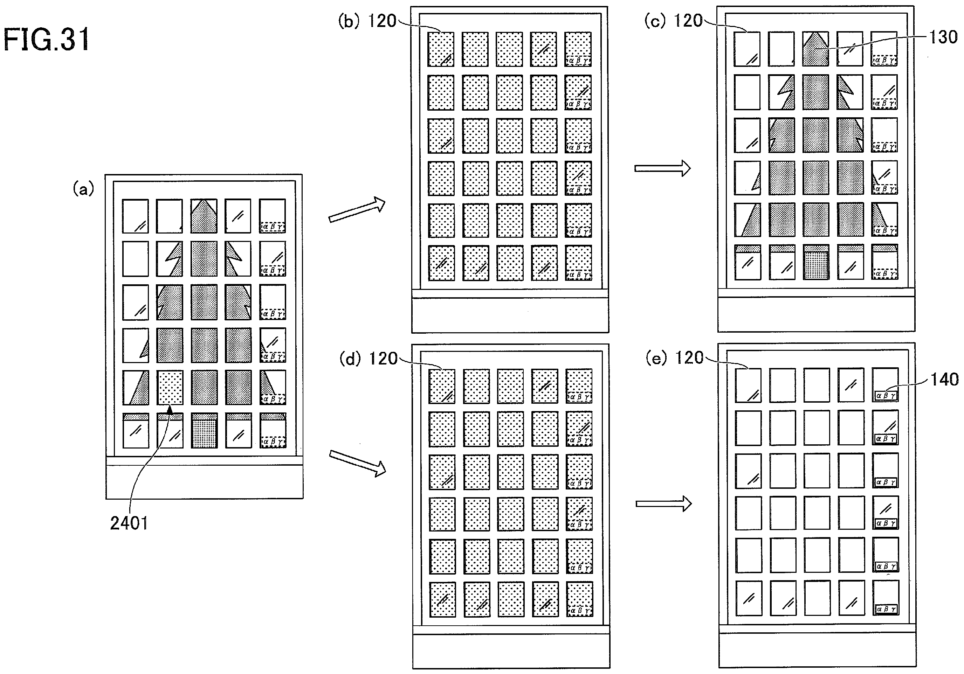

Next, an actual example of the automatic recovery process and the switching process in the signage control process (FIG. 29) will be described. FIG. 31 illustrates an actual example of the automatic recovery process and the switching process.

A view (a) of FIG. 31 illustrates a state where, after the start control process (step S12201) is carried out in the signage control process, the monitoring apparatus 351 has received a monitoring result. According to the example of the view (a) of FIG. 31, troubles have occurred in the projectors having IDs "PJ302A"and "PJ302B" (see the reference numeral 2401).

After the recovery unit 2104 receives the monitoring result, the recovery unit 2104 transmits projection end instructions to the projectors 310_1a-310_30b regardless of the trouble type. Views (b) and (d) of FIG. 31 illustrate states where the recovery unit 2104 has transmitted the projection end instructions to the projectors 310_1a-310_30b.

The recovery unit 2104 then determines whether the trouble type included in the monitoring result is a trouble type from which it is possible to automatically recover. If the recovery unit 2104 determines that the trouble type is a trouble type from which it is possible to automatically recover, the recovery unit 2104 determines to continue using the windowpane group 120 as the projection media, and carries out the automatic recovery process.

More specifically, if the recovery unit 2104 determines that, in response to re-start instructions transmitted to the projectors having the projector IDs "PJ302A" and "PJ302B", the projectors actually have re-started properly, the recovery unit 2104 transmits projection start instructions to the projectors 310_1a-310_30b. Thus, as illustrated in a view (c) of FIG. 31, the projection dynamic image group 130 is again projected onto the windowpane group 120.

On the other hand, if the recovery unit 2104 determines that the trouble type is a trouble type from which it is not possible to automatically recover, the recovery unit 2104 interrupts using the windowpane group 120 as the projection media, and carries out the switching process to switch the use of the windowpane group 120 into use as ordinary windowpanes.

More specifically, the recovery unit 2104 transmits lamp turning-off instructions to the projectors 310_1a-310_30b. Also, the recovery unit 2104 transmits screen turning-off instructions to the motor-driven screens 330_1-330_30, and transmits illumination turning-on instructions to the illumination apparatus group 140 (140_1-140_6). Thus, as illustrated in a view (e) of FIG. 31, the windowpane group 120 becomes transparent, and the illumination apparatus group 140 (140_1-140_6) is turned on (i.e., the windowpane group 120 comes to be used as ordinary windowpanes).

<10. Description of monitoring apparatus>

Next, the monitoring apparatus 351 will be described. Note that a hardware configuration of the monitoring apparatus 351 is the same as or similar to the hardware configuration of the information processing apparatus 370 (see FIG. 4), and therefore, duplicate description will be omitted. Hereinafter, a functional configuration of the monitoring apparatus 351 and a flow of the monitoring process will be described.

(1) Functional configuration of monitoring apparatus

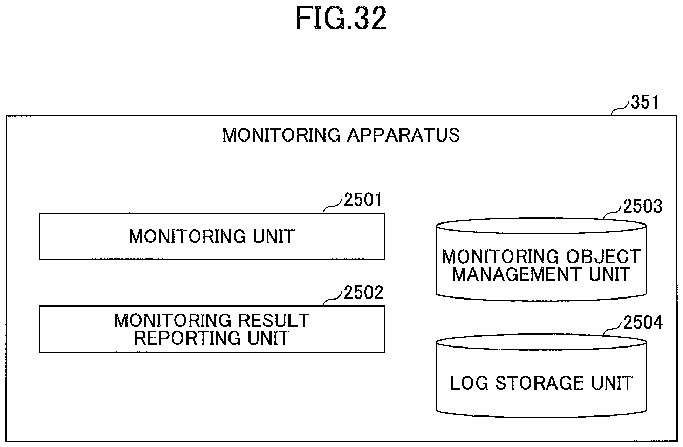

FIG. 32 illustrates one example of a functional configuration of the monitoring apparatus. In the monitoring apparatus 351, a monitoring program and a monitoring result reporting program are installed. As a result of these programs being executed, the monitoring apparatus 351 functions as a monitoring unit 2501 and a monitoring result reporting unit 2502.

The monitoring unit 2501 monitors states of the projectors 310_1-310_30b, the control apparatus 340, and the information processing apparatus 370 at each predetermined period, and, functions as a detection means to detect an occurrence of a trouble, if any, concerning projection of the projection dynamic images. In a case of having detected an occurrence of a trouble, the monitoring unit 2501 identifies the monitoring object having the trouble, and determines the trouble type by reading monitoring object management information stored in a monitoring object management unit 2503.

In a case where the monitoring unit 2501 has detected a trouble, the monitoring result reporting unit 2502 sends information indicating the monitoring object having the trouble and the trouble type as a monitoring result to the information processing apparatus 370. The monitoring result reporting unit 2502 stores the monitoring result that has been sent, in a log storage unit 2504, as log information.

(2) Monitoring object management information

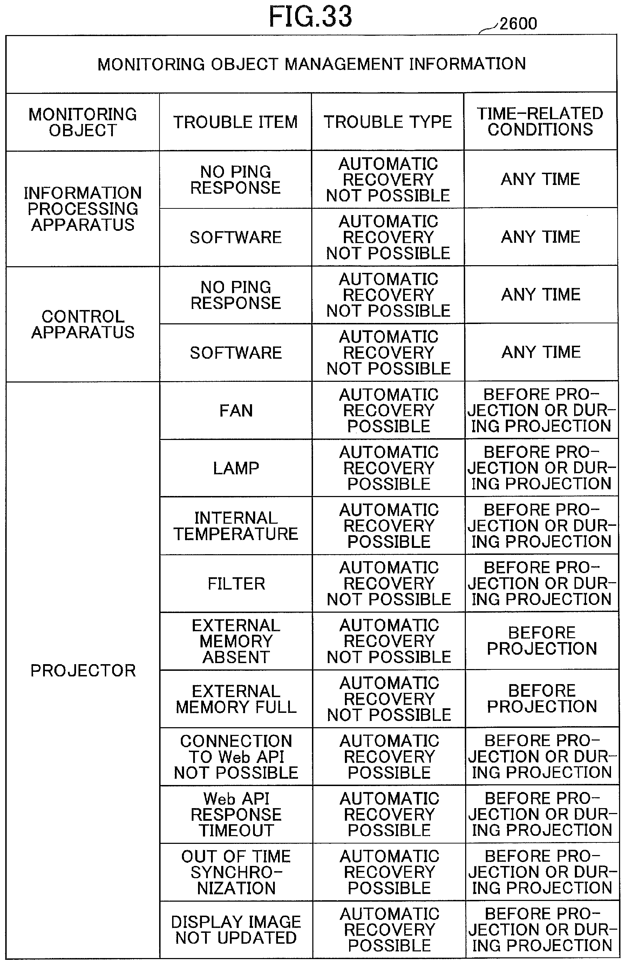

Next, the monitoring object management information stored in the monitoring object management unit 2503 will be described. FIG. 33 illustrates one example of the monitoring object management information. As illustrated in FIG. 33, the monitoring object management information 2600 has, as information items, "monitoring object", "trouble item", "trouble type", and "time-related conditions".

For the item "monitoring object", information of an apparatus as an object for which the monitoring unit 2501 monitors as to whether a trouble occurs is stored. According to the second embodiment, the monitoring unit 2501 monitors states of the projectors 310_1a-310_30b, the control apparatus 340, and the information processing apparatus 370, and therefore, for the item "monitoring object", information for "projector", "control apparatus", and "information processing apparatus" is stored.

For the item "trouble item", information of all troubles concerning projection of projection dynamic images to be detected by the monitoring unit 2501 is stored. Note that, as a "trouble item", "display image not updated" means a state where projection by the projectors has been frozen. The monitoring unit 2501 acquires information concerning the frame position at which the projection is currently being carried out from the projection dynamic images, and determines that the trouble item "display image not updated" has occurred, if the condition defined by the following formula is satisfied:

$$\text{current time} > \text{projection start time} + \text{time taken for}$$
$$\text{reproducing up to the acquired frame position} + \alpha$$

Note that "$\alpha$" is, for example, one minute.

For the item "trouble type", the detected trouble type is stored. According to the second embodiment, the monitoring unit 2501 classifies the detected trouble as a trouble from which it is possible to recover automatically or a trouble from which it is not possible to recover automatically. Thus, for the item "trouble type", "automatic recovery possible" or "automatic recovery not possible" is stored.

For the item "time-related conditions", information concerning a time-related conditions for monitoring the "trouble item" is stored. That is, the monitoring unit 2501 monitors the monitoring object as to whether a trouble has occurred for a time satisfying the "time-related conditions".

For example, the monitoring unit 2501 monitors the monitoring object "information processing apparatus" for the trouble item "no ping response" regardless of whether projection dynamic images are projected. Then, if the monitoring unit 2501 has detected the trouble item "no ping response" as a result, the monitoring unit 2501 determines that an "automatic recovery not possible" trouble has occurred.

The monitoring unit 2501 monitors the monitoring object "projector" for the trouble item "fan" before projection of projection dynamic images and during projection of projection dynamic images. If the monitoring unit 2501 has detected the trouble item "fan" as a result, the monitoring unit 2501 determines that an "automatic recovery possible" trouble has occurred.

(3) Flow of monitoring process

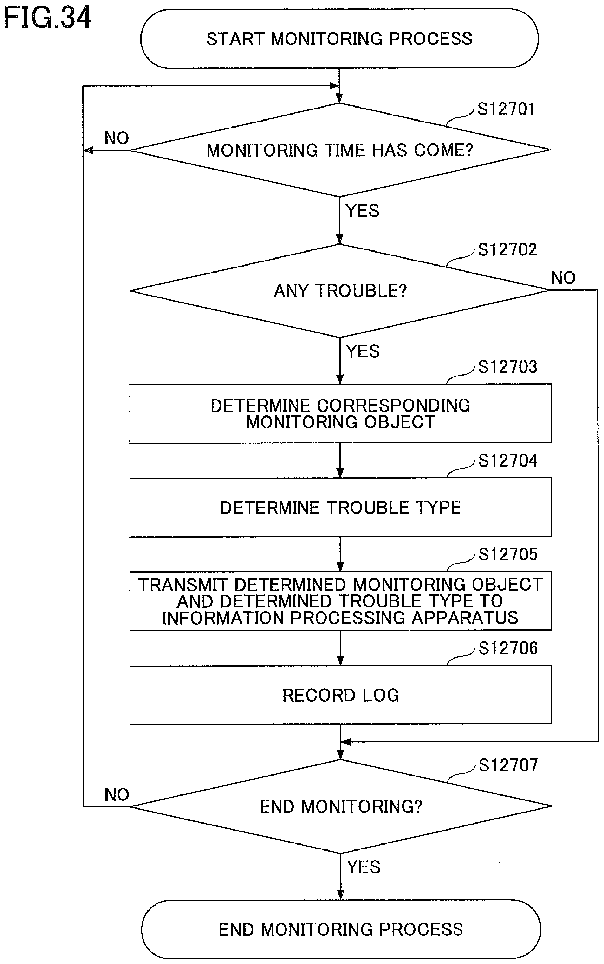

Next, a flow of the monitoring process of the monitoring apparatus 351 will be described. FIG. 34 is a flowchart illustrating a flow of the monitoring process.

In step S12701, the monitoring unit 2501 determines whether a time satisfying the "time-related conditions" has come for any "trouble item" stored in the monitoring object management information 2600. If, in step S12701, the monitoring unit 2501 determines that a time satisfying the "time-related conditions" has not yet come for any "trouble item" (No in step S12701), the monitoring unit 2501 waits for a determination that a time satisfying the "time-related conditions" has come for any "trouble item".

On the other hand, if, in step S12701, the monitoring unit 2501 determines that a time satisfying the "time-related conditions" has come for any "trouble item" (Yes in step S12701), the monitoring unit 2501 proceeds to step S12702. In step S12702, the monitoring unit 2501 determines whether the "trouble item" for which a time satisfying the corresponding time-related conditions has come has occurred. If, in step S12702, the monitoring unit 2501 determines that the "trouble item" for which a time satisfying the corresponding time-related conditions has come has not occurred, the monitoring unit 2501 determines that a trouble has not occurred (No in step S12702), and the monitoring unit 2501 proceeds to step S12707.

On the other hand, if, in step S12702, the monitoring unit 2501 determines that the "trouble item" for which a time satisfying the corresponding time-related conditions has come has occurred, the monitoring unit 2501 determines that a trouble has occurred (Yes in step S12702), and the monitoring unit 2501 proceeds to step S12703. In step S12703, the monitoring unit 2501 determines the monitoring object having the trouble.

In step S12704, the monitoring unit 2501 determines the trouble type on the basis of the monitoring object management information 2600.

In step S12705, the monitoring result reporting unit 2502 sends a monitoring result including the monitoring object determined in step S12703, and the trouble type determined in step S12704 to the information processing apparatus 370.

In step S12706, the monitoring result reporting unit 2502 records the monitoring result in the log storage unit 2504 in a manner of associating the monitoring result with the time information.

In step S12707, the monitoring unit 2501 determines whether to end the monitoring process. If, in step S12707, the monitoring unit 2501 determines not to end the monitoring process (No in step S12707), the monitoring unit 2501 returns to step S12701. On the other hand, if, in step S12707, the monitoring unit 2501 determines to end the monitoring process (Yes in step S12707), the monitoring unit 2501 ends the monitoring process.

<11. Summary of second embodiment>

As can be seen from the above description, the image projection system 300 according to the present embodiment has the following features.

- The image projection system 300 reverses a dynamic image given by an advertiser, and splits a static image at each frame of the reversed dynamic image on the basis of the positions and the sizes of a plurality of windowpanes included in a given area of the outside surface of a building, to generate a plurality of split static images from each static image.
- The image projection system 300 generates the number of split static image groups, the number being equal to the number of the windowpanes, using the split static images corresponding to each windowpane at each frame, and stores the generated split static image groups in the image information management unit.
- The image projection system 300 corrects each of the split static image groups using the corresponding correction parameter generated from carrying out a calibration process on projectors installed at positions corresponding to each of the windowpanes included in the given area of the outside surface of the building.
- The image projection system 300 further splits each split static image included in each of the corrected split static image groups according to the number of projectors installed at positions corresponding to each windowpane, and encodes the thus-acquired split static images to generate projection dynamic image groups in projector units.
- The image projection system 300 projects the respective projection dynamic images included in the generated projection dynamic image group using the corresponding projectors onto the motor-driven screens corresponding to the windowpanes.

As a result, it is possible to implement a digital signage combining the plurality of light transmission members.

Also, the image projection system 300 according to the present embodiment further has the following features.

- The image projection system 300 detects an occurrence of a trouble of a monitoring object, and determines whether the trouble is a trouble from which it is possible to automatically recover or a trouble from which it is not possible to automatically recover.
- In a case of having determined that the trouble is a trouble from which it is possible to automatically recover, the projection system 300 determines to continue using the windowpanes as the projection media. In a case of having determined that the trouble is a trouble from which it is not possible to automatically recover, the projection system 300 determines not to continue using the windowpanes as the projection media, and carries out a switching process to enable use of the windowpanes as ordinary windowpanes.

Thus, it is possible to efficiently use the plurality of surfaces that are used for a digital signage.

[Other variants of second embodiment]

According to the above-mentioned second embodiment, the monitoring apparatus 351 determines the trouble type. However, it is also possible that the monitoring apparatus 351 sends information of a trouble item to the information processing apparatus 370, and the information processing apparatus 370 determines the trouble type.

Also, according to the above-mentioned second embodiment, the monitoring apparatus 351 detects a trouble of a projector and sends the information to the information processing apparatus 370, and the information processing apparatus 370 sends the monitoring result to the monitoring server 352. However, the order of sending information is not limited to this order. For example, it is also possible that the information processing apparatus 370 detects a trouble of a projector and sends the information to the monitoring apparatus 351, and the monitoring apparatus 351 sends the monitoring result to the monitoring server 352.

Also, according to the above-mentioned second embodiment, troubles of the motor-driven screens and the illumination apparatuses have not particularly been mentioned. However, the order of sending information concerning troubles of the motor-driven screens and the illumination apparatuses can also be any order. For example, it is possible that a motor-driven screen or an illumination apparatus sends information directly to the monitoring apparatus 351, and the monitoring apparatus 351 sends the monitoring result to the monitoring server 352. Alternatively, it is also possible that a motor-driven screen or an illumination apparatus sends information to the monitoring apparatus 351 via the control apparatus 340, and the monitoring apparatus 351 sends the monitoring result to the monitoring server 352.

Also, according to the above-mentioned second embodiment, the monitoring apparatus 351 is a separate entity from the information processing apparatus 370. However, some or all the functions of the monitoring apparatus 351 can be implemented in the information processing apparatus 370. Further, it is also possible that some functions of the recovery unit 2104 of the information processing apparatus 370 are implemented in the monitoring apparatus 351.

Also, according to the above-mentioned second embodiment, in the switching process, the lamp turning-off instructions, the screen turning-off instructions, and the illumination turning-on instructions are transmitted in the stated order. However, the order of transmitting the instructions can be any order.

Also, according to the above-mentioned second embodiment, in the automatic recovery process, a position from which projection is re-started has not particularly been mentioned. The position from which projection is re-started can be any position. For example, projection can be re-started from the first frames of the projection dynamic images, and also, projection can be re-started from the frames subsequent to the frames that were projected when the projection end instruction was transmitted.

Also, according to the above-mentioned second embodiment, the information processing apparatus 370 has the calibration unit 371, the image processing unit 372, and the signage control unit 373. However, some of these units can be implemented in another signage apparatus.

Also, according to the above-mentioned second embodiment, the given area is defined on the building 110, and the single digital signage is implemented there. However, it is also possible that the windowpane group 120 of the building 110 is divided into two areas of windowpanes, and two digital signages are implemented in the two areas, respectively. In this case, if a trouble of a monitoring object is detected, it is determined which of the two areas the signage apparatus having the trouble belongs to, and the automatic recovery process or the switching process is carried out on the signage apparatuses belonging to the area to which the signage apparatus having the trouble belongs to. Thus, it is possible to continue the digital signage for the area other than the area in which the trouble has occurred.

Also, according to the above-mentioned second embodiment, the windowpanes installed in the outer surface of the building 110 in the given area are used as the projection media. However, the projection media are not limited to windowpanes, and another plurality of surfaces can be used as the projection media. Also, a plurality of surfaces used as the projection media are not limited to a plurality of surfaces installed in the outer surface of the building 110 in the given area. It is also possible to use a plurality of surfaces installed inside the building 110 in a given area. Also, it is also possible to use a plurality of surfaces installed in a body other than buildings as the projection media.

Also, according to the above-mentioned second embodiment, the signage apparatuses include the projectors (the projection apparatuses), the motor-driven screens, and the illumination apparatuses. However, the signage apparatuses are not limited to these. For example, the signage apparatuses can include any apparatuses/devices/things that are already installed in the building 110 such as lighting equipment installed inside the building 110, lighting equipment that emits light to a wall or a signboard of the building 110 from the outside, objects or signboards installed in the building 110, and so forth.

According to the second embodiment, it is possible to efficiently use the plurality of surfaces that are used for a digital signage.

[Third Embodiment]

An image projection system according to a third embodiment will now be described. For the elements having substantially the same functional configurations as those of the first or second embodiment, the same reference numerals are given, and duplicate description will be omitted.

In order to implement a digital signage using a combination of a plurality of windowpanes, for example, image projection apparatuses installed at positions corresponding to the windowpanes, respectively, project projection dynamic images corresponding to the respective positions. For this purpose, a large number of the projection dynamic images are generated. Therefore, high operability is desired to handle (i.e., perform various operations such as delivering, projecting, deleting, and so forth) the projection dynamic images. Also, a certain time may be taken for generating the projection dynamic images. Therefore, if a user erroneously deletes the projection dynamic images, a certain time will be again taken for re-generating the projection dynamic images. As a result, the digital signage is interrupted for a certain time.

Therefore, concerning management of projection dynamic images, it is desired to be able to prevent such an erroneous operation of erroneously deleting projection dynamic images while maintaining high operability.

The third embodiment has been devised in consideration of this point, and an object of the third embodiment is to prevent an erroneous operation in a digital signage using a combination of a plurality of surfaces.

<1. Example of application of image projection system>

An example of an application of an image projection system according to the third embodiment is the same as or similar to the application of an image projection system according to the first or second embodiment described above, and duplicate description will be omitted.

<2. Operations of signage apparatuses>

Operations of the signage apparatuses are the same as or similar to the operations of the signage apparatuses according to the first or the second embodiment described above, and duplicate description will be omitted.

<3. System configuration of image projection system>

A system configuration of the image projection system is the same as or similar to the system configuration of the image projection system according to the first or second embodiment described above, and duplicate description will be omitted.

<4. Hardware configuration of information processing apparatus>

A hardware configuration of the information processing apparatus 370 is the same as or similar to the hardware configuration of the information processing apparatus 370 according to the first or second embodiment described above, and duplicate description will be omitted.

<5. Information stored in management units>

Information stored in the management units is the same as or similar to the information stored in the management units according to the first or second embodiment described above, and duplicate description will be omitted.

<6. Flow of signage process in image projection system>

A flow of the signage process carried out in the image projection system 300 is the same as or similar to the flow of the signage process carried out in the image projection system 300 according to the first or second embodiment, and duplicate description will be omitted.

<7. Details of calibration process>

The calibration process (step S801 of FIG. 8) carried out by the image projection system 300 is the same as or similar to the calibration process according to the first or second embodiment, and duplicate description will be omitted.

<8. Details of image processing>

Image processing (step S802 of FIG. 8) carried out by the image projection system 300 is the same as or similar to image processing in the first or second embodiment, and duplicate description will be omitted.

<9. Details of signage control process>

Next, the signage control process (step S803 of FIG. 8) carried out by the image projection system 300 will be described in detail.

(1) Functional configuration of signage control unit

The functions of the signage control unit 373 of the information processing apparatus 370 are the same as or similar to those of the signage control unit 373 according to the first or second embodiment. Therefore, duplicate description will be omitted.

(2) Flow of signage control process

Next, a flow of the signage control process (step S803) by the signage control unit 373 will be described. FIG.

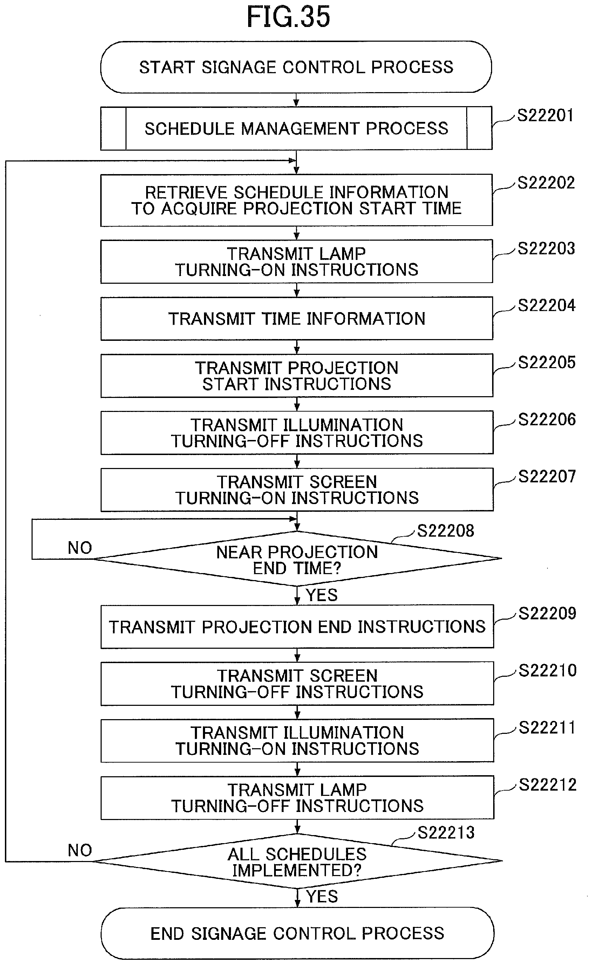

35 is a flowchart illustrating a flow of the signage control process. In response to the completion of the image processing by the image processing unit 372, the signage control process will be started. In this regard, it is assumed that before the start of the signage control process of FIG. 35, the schedule information 710-730 has been stored in the schedule information management unit 377.

In step S22201, the schedule management unit 2100 carries out a schedule management process that includes generation, editing, or deletion of schedule information, deletion of content, or the like. Note that, the schedule management process (step S22201) will be described later in detail.

In step S22202, the start control unit 2102 retrieves schedule information (for example, schedule information 710) that is stored in the schedule information management unit 377 through the schedule management process, and acquires the projection start time.

In step S22203, the start control unit 2102 transmits lamp turning-on instructions to the projectors 310_1a-310_30b at times corresponding to the acquired projection start time. Thus, the lamp of each of the projectors 310_1a-310_30b is turned on.

In step S22204, the synchronization unit 2101 receives the time information from the time server 360, corrects the time information managed in the information processing apparatus 370, and transmits the corrected time information to the projectors 310_1a-310_30b.

In step S22205, the start control unit 2102 transmits transmission start instructions specifying the dynamic images of the content specified by the schedule information to the projectors 310_1a-310_30b at times corresponding to the acquired projection start time. Thus, the projectors 310_1a-310_30b carry out processes to start projection of the specified projection dynamic images.

In step S22206, the start control unit 2102 transmits illumination turning-off instructions to the illumination apparatuses 140_1-140_6 at times corresponding to the acquired projection start time. Thus, the illumination apparatuses 140_1-140_6 are turned off.

In step S22207, the start control unit 2102 transmits screen turning-on instructions to the motor-driven screens 330_1-330_30 at times corresponding to the acquired projection start time. Thus, each of the motor-driven screens 330_1-330_30 is turned on, and the light transmission members of the motor-driven screens become translucent. Thus, a digital signage is started corresponding to the set of schedule information.

After the projection is thus started, in step S22208, the end control unit 2103 retrieves the schedule information (for example, the schedule information 710) from the schedule information management unit 377. Also, the end control unit 2103 acquires the projection end time from the retrieved schedule information, to determine whether the current time is near the projection end time.

In step S22208, if the end control unit 2103 determines that the current time is not near the projection end time (No in step S22208), the end control unit 2103 waits for when the current time becomes near the projection end time.

On the other hand, in step S22208, if the end control unit 2103 determines that the current time is near the projection end time (Yes in step S22208), the end control unit 2103 proceeds to step S22209.

In step S22209, the end control unit 2103 transmits projection end instructions to the projectors 310_1a-310_30b at times corresponding to the acquired projection end time. Thus, the projectors 310_1a-310_30b end the projection of the projection dynamic images.

In step S22210, the end control unit 2103 transmits screen turning-off instructions to the motor-driven screens 330_1-330_30 at times corresponding to the acquired projection end time. Thus, each of the motor-driven screens 330_1-330_30 is turned off, and their light transmission members become transparent.

In step S22211, the end control unit 2103 transmits illumination turning-on instructions to the illumination apparatuses 140_1-140_6 at times corresponding to the acquired projection end time. Thus, the illumination apparatuses 140_1-140_6 are turned on.

In step S22212, the end control unit 2103 transmits lamp turning-off instructions to the projectors 310_1a-310_30b at times corresponding to the acquired projection end time. Thus, the lamp of each of the projectors 310_1a-310_30b is turned off. Thus, the digital signage according to the set of schedule information is ended.

In step S22213, the end control unit 2103 determines whether steps S22202-S22212 have been carried out for all the schedule information stored in the schedule information management unit 377. In step S22213, if the start control unit 2102 determines that there are any sets of the schedule for which steps S22202-S22212 have not yet been carried out (No in step S22213), the start control unit returns to step S22202.

On the other hand, in step S22213, if the end control unit 2103 determines that steps S22202-S22212 have been carried out for all the schedule information stored in the schedule information management unit 377 (Yes in step S22213), the end control unit 2103 ends the signage control process.

(3) Details of schedule management process

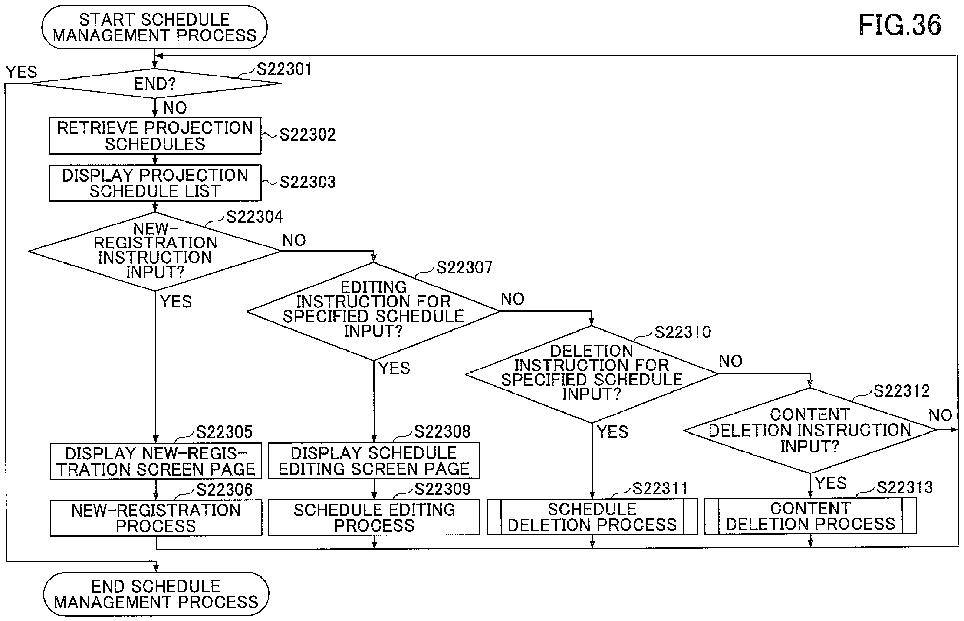

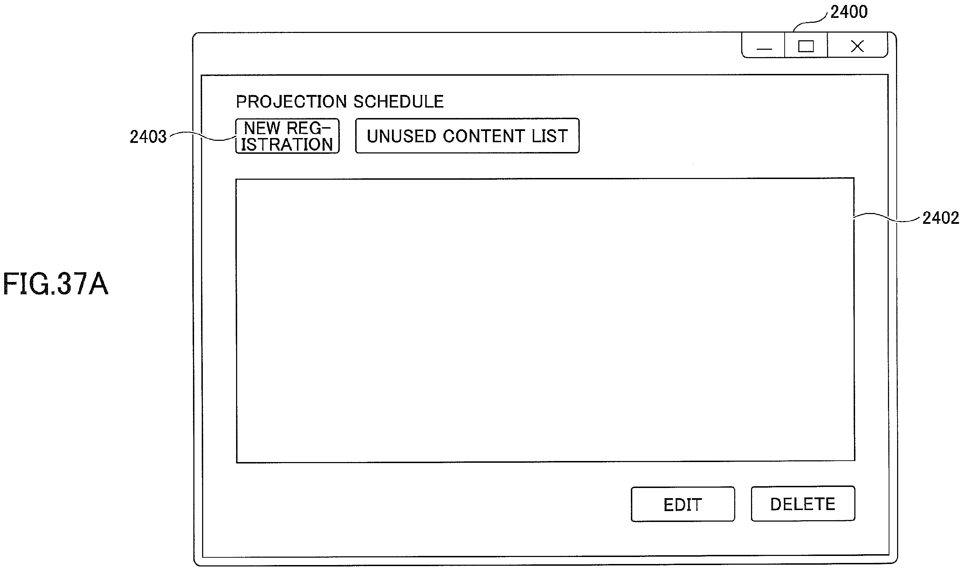

Next, the schedule management process (step S22201 of FIG. 35) will be described in detail using FIG. 36 with reference to FIGs. 37A-38B. Note that, below, a schedule management process mainly for a schedule (projection schedule) of projection by the projectors 310_1a-310_30b, out of the schedule information stored in the schedule information management unit 377, will be described.

FIG. 36 is a flowchart illustrating a flow of the schedule management process. In response to an instruction being input by an operator 1000 to start the schedule management unit 2100 concerning the projection schedule, the flowchart of FIG. 36 is carried out.

In step S22301, the schedule management unit 2100 determines whether the operator 1000 has input an instruction to stop the schedule management unit 2100 concerning the projection schedule. If the schedule management unit 2100 determines in step S22301 that the operator 1000 has not input an instruction to stop the schedule management unit 2100 (No in step S22301), the schedule management unit 2100 proceeds to step S22302.

In step S22302, the schedule management unit 2100 retrieves an identifier (for example, a file name) for identifying each of projection schedules included in the schedule information 710-730 and so forth stored in the schedule information management unit 377.

In step S22303, the schedule management unit 2100 displays a projection schedule screen page on the display unit 405, and displays a list of file names of the retrieved projection schedules.

In step S22304, the schedule management unit 2100 determines whether the operator 1000 has input a new-registration instruction. If the schedule management unit 2100 determines in step S22304 that the operator 1000 has input a new-registration instruction (Yes in step S22304), the schedule management unit 2100 proceeds to step S22305.

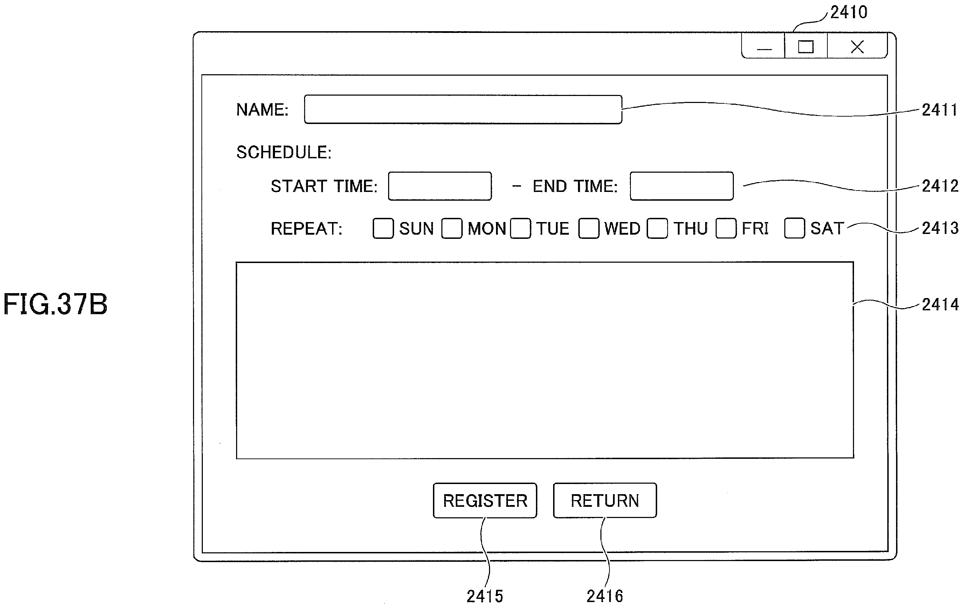

In step S22305, the schedule management unit 2100 displays a new-registration screen page on the display unit 405. FIGs. 37A and 37B illustrate an example of a projection schedule screen page and of the new-registration screen page.

As illustrated in FIG. 37A, the projection schedule screen page 2400 includes a new-registration button 2403 and a projection schedule list 2402. According to the example of FIG. 37A, the schedule information 710-730 and so forth have not yet been stored in the schedule information management unit 377. Therefore, nothing is displayed in the projection schedule list 2402.

In response to the operator 1000 pressing the new-registration button 2403 in the projection schedule screen page 2400, a new-registration instruction is input, and therefore, on the display unit 405, the new-registration screen page 2410 illustrated in FIG. 37B is displayed.

As illustrated in FIG. 37B, in the new-registration screen page 2410, a name input field 2411, start time and end time input fields 2412, day of week input fields 2413, and a content display field 2414 are included.

In the name input field 2411, the file name of a projection schedule is input. In the start time and end time input fields 2412, the projection start time at which the projectors 310_1a-310_30b start projection of projection dynamic images and the projection end time at which the projectors 310_1a-310_30b end projection of projection dynamic images are input. In the day of week input fields 2413, a day of week on which projection dynamic images are projected is input. In the content display field 2414, the content name of content for identifying projection dynamic images to be projected by the projectors 310_1a-310_30b is input.

In a state where the new-registration screen page 2410 is displayed, the operator 1000 inputs information to each of the name input field 2411, the start time and end time input fields 2412, the day of week input fields 2413, and the content display field 2414.

In step S22306, the schedule management unit 2100 carries out a new-registration process to receive the information thus input in the fields by the operator 1000.

Thereafter, in the new-registration screen page 2410, the operator 1000 presses a registration button 2415 so that the new-registration process is completed. Thus, the schedule management unit 2100 stores a newly generated set of schedule information in the schedule information management unit 377, and the process returns to step S22301. Thus, the set of schedule information, where content to be projected, a time range during which projection is carried out, and, so forth, are specified as a projection plan, is stored. Note that, if the operator 1000 presses a return button 2416 in the new-registration screen page 2410, the schedule management unit 2100 returns to step S22301 without a storing projection schedule.

If it is determined in step S22304 that a new-registration instruction has not been input (No in step S22304), the process proceeds to step S22307.

In step S22307, the schedule management unit 2100 determines whether the operator 1000 has selected a projection schedule and has input an instruction to edit the selected projection schedule. In step S22307, if the schedule management unit 2100 determines that the operator 1000 has selected a projection schedule and has input an instruction to edit the selected projection schedule projection (Yes in step S22307), the schedule management unit 2100 proceeds to step S22308.

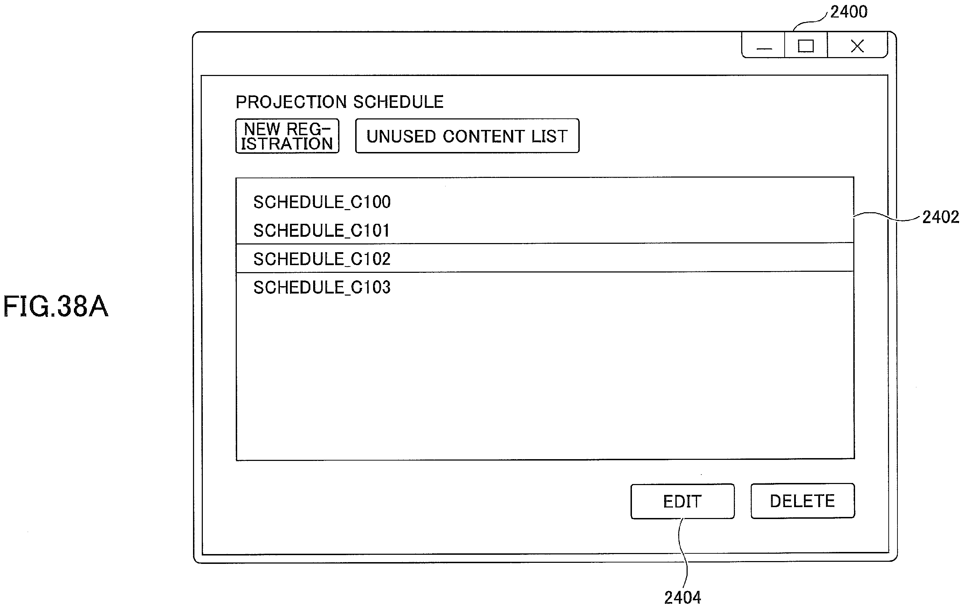

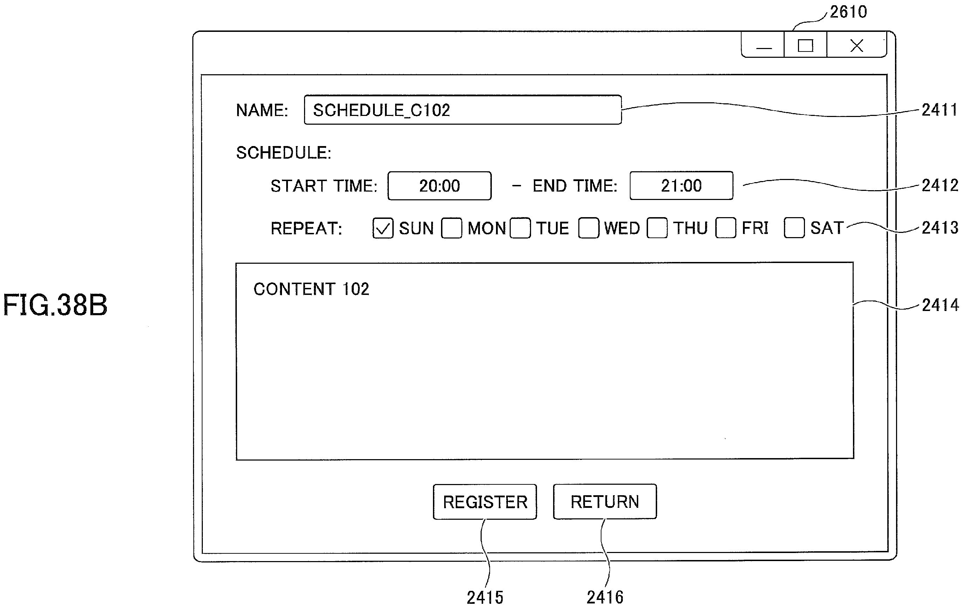

In step S22308, the schedule management unit 2100 displays a schedule editing screen page. FIGs. 38A and 38B illustrate examples of the projection schedule screen page and the schedule editing screen page.

As illustrated in FIG. 38A, in the projection schedule list 2402 of the projection schedule screen page 2400, file names of projection schedules included in the schedule information 710-730, and so forth, stored in the schedule information management unit 377 are displayed. According to the example of FIG. 38A, as the file names of the projection schedules, "schedule_C100" through "schedule_C103" are displayed.

In response to the operator 1000 selecting the file name of one projection schedule, and pressing an edit button 2404, the schedule management unit 2100 determines that a projection schedule editing instruction has been input. Here, as illustrated in FIG. 38A, it is assumed that, in the projection schedule list 2402, the operator 1000 selects the file name "schedule_C102", and presses the edit button 2404. Thus, on the display unit 405, the schedule editing screen page 2610 illustrated in FIG. 38B is displayed.

As illustrated in FIG. 38B, in the schedule editing screen page 2610, a name input field 2411, start time and end time input fields 2412, day of week input fields 2413, and a content display field 2414 are included.

In the name input field 2411, the file name of the selected projection schedule ("schedule_C102") is displayed. In the start time and end time input fields 2412, the projection start time and the projection end time of the selected projection schedule are displayed. In the day of week input fields 2413, the day of week specified for the selected projection schedule is displayed. In the content display field 2414, the content name (the identifier) to be projected in the selected projection schedule is displayed.

In step S22309, the operator 1000 performs a schedule editing process by editing the displayed information in the fields of the schedule editing screen page 2610.

Thereafter, in response to the operator 1000 pressing a registration button 2415, the schedule editing process is completed. Thus, the schedule management unit 2100 stores the thus edited projection schedule in the schedule information management unit 377 as schedule information, and the process returns to step S22301. Note that, if the operator 1000 presses a return button 2416 in the schedule editing screen page 2610, the schedule management unit 2100 returns to step S22301 without storing the edited projection schedule.

On the other hand, if the schedule management unit 2100 determines in step S22307 that an editing instruction has not been input for the selected projection schedule (No in step S22307), the process proceeds to step S22310.

In step S22310, the schedule management unit 2100 determines whether the operator 1000 has selected a projection schedule and has input an instruction to delete the selected projection schedule. If, in step S22310, the schedule management unit 2100 determines that the operator 1000 has selected a projection schedule and has input an instruction to delete the selected projection schedule (Yes in step S22310), the schedule management unit 2100 proceeds to step S22311.

In step S22311, the schedule management unit 2100 carries out a schedule deletion process to delete the selected projection schedule from the schedule information management unit 377, and then, the schedule management unit 2100 returns to step S22301. Note that, the schedule deletion process (step S22311) will be described later in detail.

On the other hand, if, in step S22310, the schedule management unit 2100 determines that the operator 1000 has not input an instruction to delete the selected projection schedule (No in step S22310), the schedule management unit 2100 proceeds to step S22312.

In step S22312, the schedule management unit 2100 determines whether a content deletion instruction has been input. If, in step S22312, the schedule management unit 2100 determines that a content deletion instruction has been input (Yes in step S22312), the schedule management unit 2100 proceeds to step S22313.

In step S22313, the schedule management unit 2100 carries out a content deletion process to transmit deletion instructions to the projectors 310_1a-310_30b to delete the projection dynamic images identified by the content of a selected content name. Also, the schedule management unit 2100 rewrites the image information 600 according to the deletion of the projection dynamic images. After the completion of the content deletion process in step S22313, the process returns to step S22301. Note that the content deletion process (step S22313) will be described later in detail.

On the other hand, in step S22312, if the schedule management unit 2100 determines that a content deletion instruction has not been input (No in step S22312), the process returns to step S22301 directly.

Thereafter, until the schedule management unit 2100 determines in step S22301 that an instruction to stop the schedule management unit 2100 has been input, steps S22302-S2313 are repeated. Then, in response to the schedule management unit 2100 determining in step S22301 that the operator 1000 has input an instruction to stop the schedule management unit 2100, the schedule management process is ended.

(4) Details of schedule deletion process

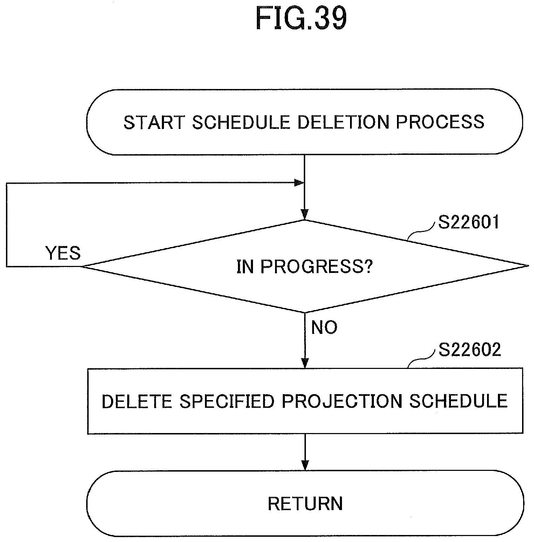

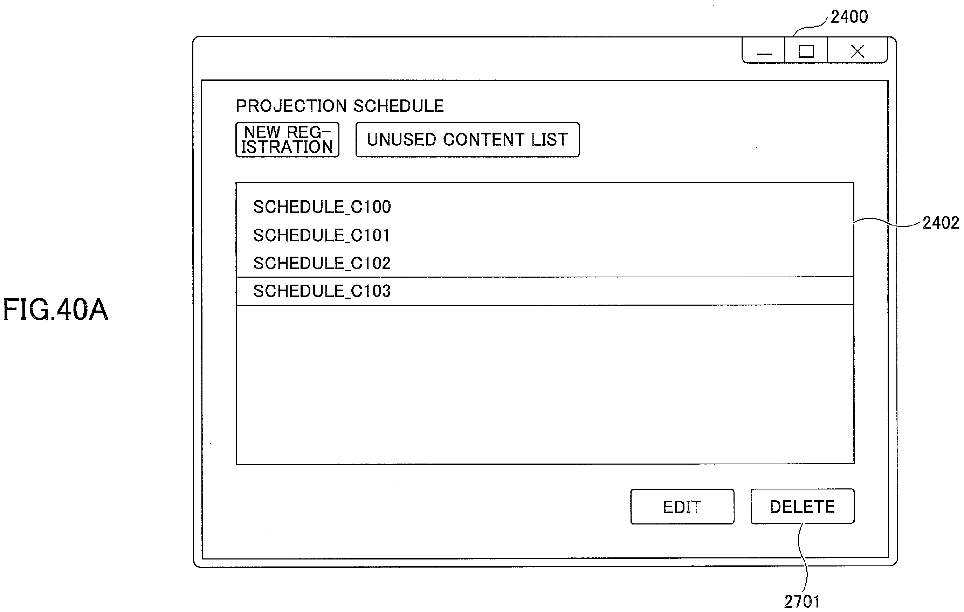

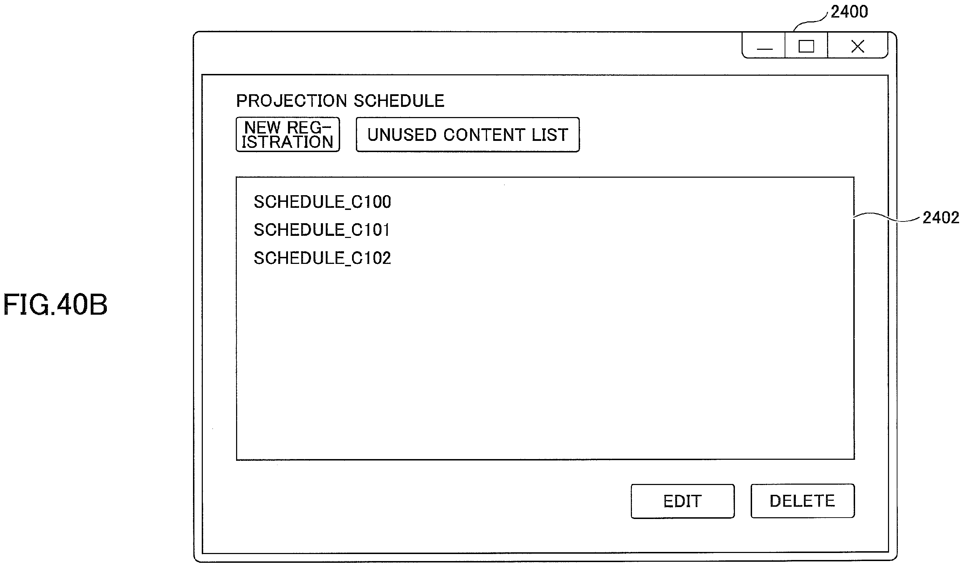

Next, the schedule deletion process (step S22311 of FIG. 36) will be described in detail using FIGs. 39, 40A and 40B. FIG. 39 is a flowchart illustrating a flow of the schedule deletion process. FIGs. 40A and 40B illustrate states where the schedule deletion process is carried out on the projection schedule screen page.

As illustrated in FIG. 40A, in the projection schedule list 2402 of the projection schedule screen page 2400, the file names of the projection schedules included in the schedule information 710-730, and so forth, stored in the schedule information management unit 377, are displayed. According to the example of FIG. 40A, as the file names of the projection schedules, "schedule_C100" through "schedule_C103" are displayed.

In response to the operator 1000 selecting the file name of a projection schedule from the projection schedule list 2402 and pressing a deletion button 2701, the schedule management unit 2100 determines that an instruction to delete the selected projection schedule has been input. Here, it is assumed that, from the projection schedule list 2402, the operator 1000 selects the file name "schedule_C103" and presses the deletion button 2701.

Thus, the schedule management unit 2100 carries out the schedule deletion process illustrated in FIG. 39. More specifically, in step S22601, the schedule management unit 2100 determines whether the selected projection schedule is currently being implemented. The schedule management unit 2100 determines whether the projection schedule "schedule_C103" is currently being implemented by determining whether the current time is included in the time range defined by the projection start time and the projection end time for the projection schedule.

If the schedule management unit 2100 determines in step S22601 of FIG. 39 that the projection schedule "schedule_C103" is currently being implemented (Yes in step S22601), the schedule management unit 2100 waits until the current time has passed the projection end time. On the other hand, if it is determined in step S22601 of FIG. 39 that the projection schedule "schedule_C103" is not currently being implemented (No in step S22601), the schedule management unit 2100 proceeds to step S22602.

In step S22602, the schedule management unit 2100 deletes the selected projection schedule "schedule_C103" from the schedule information management unit 377, and returns to step S22301 of FIG. 36. Thus, it is possible to avoid an erroneous operation in the signage control process, by deleting a projection schedule under the conditions that the projection schedule is not currently being implemented.

FIG. 40B illustrates the projection schedule screen page 2400 where, in response to the schedule deletion process in FIG. 39 being carried out, the selected projection schedule has been deleted. As illustrated in FIG. 40B, from the projection schedule list 2402 of the projection schedule screen page 2400, the schedule information having the file name "schedule_C103" has been deleted.

(5) Details of content deletion process

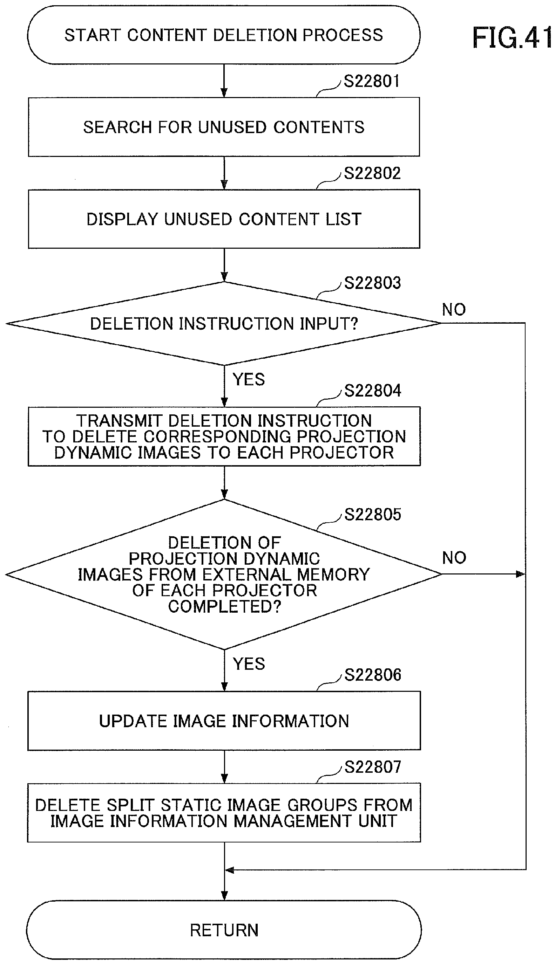

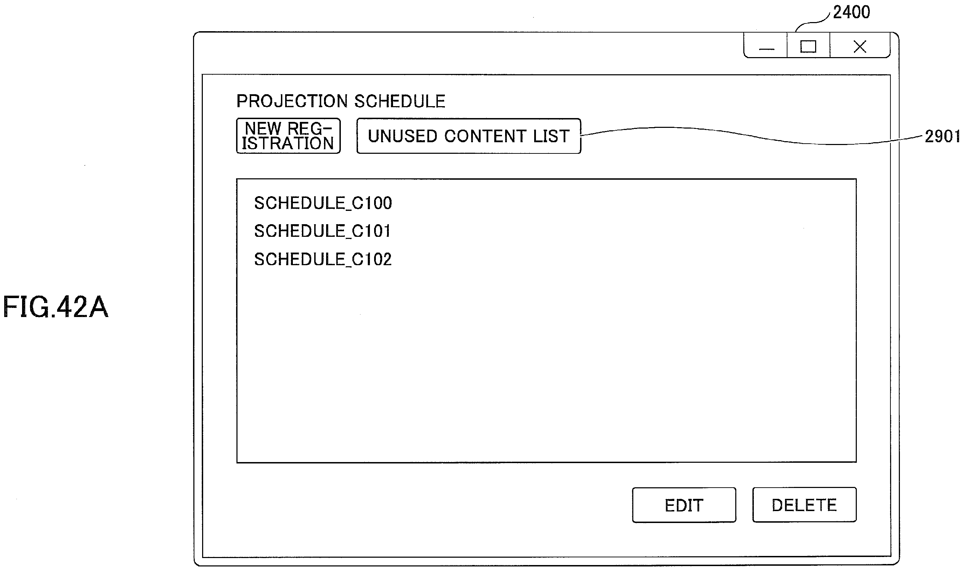

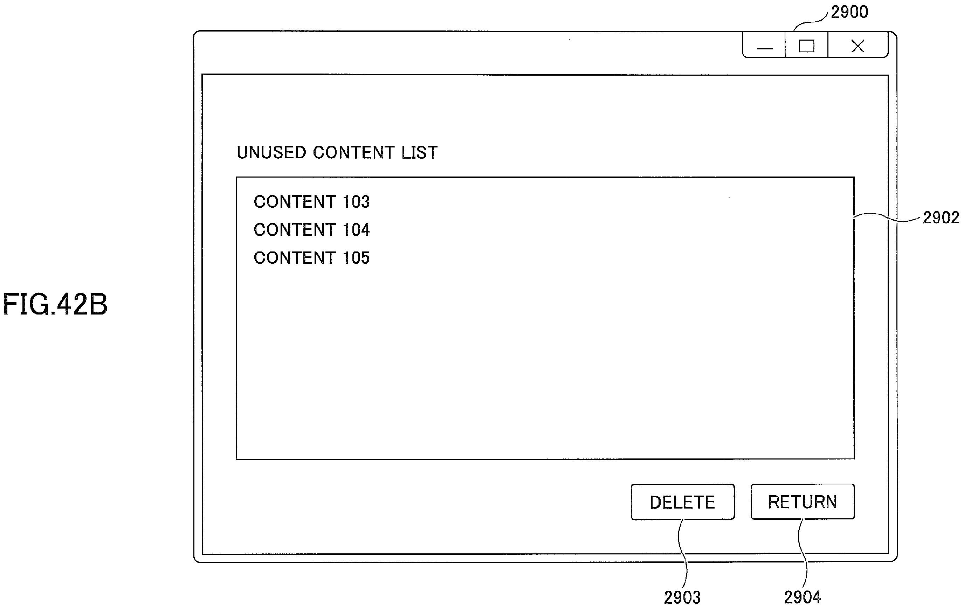

Next, the content deletion process (step S22313 of FIG. 36) will be described in detail using FIG. 41, with reference to FIGs. 42A and 42B. FIG. 41 is a flowchart illustrating a flow of the content deletion process.

In step S22801 of FIG. 41, the schedule management unit 2100 searches the image information management unit 376 for a content not specified to be projected in any projection schedule. In this regard, it is assumed that the image information management unit 376 already stores "content 100" through "content 105" (see FIG. 6).

As illustrated in FIGs. 7A-7C, "content 100" is specified to be projected in each of the projection schedules of the schedule information 710-730. Also, "content 101" is specified to be projected in the projection schedule of the schedule information 720. Also, "content 102" is specified to be projected in the projection schedule of the schedule information 730.

On the other hand, "content 103" through "content 105" are not specified to be projected in any one of the projection schedules of the schedule information 710-730. Therefore, the schedule management unit 2100 acquires, as content names of unused content, the content names "content 103" through "content 105".

In step S22802, the schedule management unit 2100 displays an unused content list screen page, and displays the content names of unused content acquired in step S22801 in a selectable way.

FIGs. 42A and 42B illustrate examples of the projection schedule screen page and the unused content list screen page. In the projection schedule screen page 2400 of FIG. 42A, in response to an unused content list button 2901 being pressed, the schedule management unit 2100 displays the unused content list screen page on the display unit 405.

As illustrated in FIG. 42B, the unused content list screen page 2900 includes an unused content list 2902. According to the example of FIG. 42B, as unused content, the content names "content 103", "content 104", and "content 105" are displayed.

In the unused content list screen page 2900, a deletion button 2903 and a return button 2904 are included. The operator 1000 selects the content name of content from among the unused content included in the unused content list 2902, and presses the deletion button 2903, to input a deletion instruction for the selected content. Note that, in response to the return button 2904 being pressed, the schedule management unit 2100 determines that a deletion instruction has not been input, and returns to the projection schedule screen page 2400 of FIG. 40A.

In step S22803, the schedule management unit 2100 determines whether the operator 1000 has selected a content name of any content and has input a deletion instruction. If the return button 2904 has been pressed, the schedule management unit 2100 determines in step S22803 that a deletion instruction has not been input (No in step S22803), and returns to step S22301 of FIG. 36.

On the other hand, in response to a content name of any content being selected and the deletion button 2903 being pressed, the schedule management unit 2100 determines in step S22803 that a deletion instruction for the content having the selected content name has been input (Yes in step S22803). In this case, the schedule management unit 2100 proceeds to step S22804.

In step S22804, the schedule management unit 2100 identifies the projection dynamic image group on the basis of the selected content name, and transmits deletion instructions to delete the projection dynamic images included in the identified projection dynamic image group to the projectors 310_1a-310_30b.

Thus, the projectors 310_1a-310_30b delete the projection dynamic images concerning the deletion instruction from their connected external memories 320_1a-320_30b. After the completion of deletion of the projection dynamic images, the projectors 310_1a-310_30b send information indicating that deletion of the projection dynamic images has been completed to the information processing apparatus 370.

In step S22805, the schedule management unit 2100 determines whether the schedule management unit 2100 has received information indicating that deletion of the projection dynamic images has been completed, from the projectors 310_1a-310_30b.

If the schedule management unit 2100 determines in step S22805 that the schedule management unit 2100 has not received information indicating that deletion of the projection dynamic images has been completed (No in step S22805), the schedule management unit 2100 returns to step S22301 of FIG. 36.

On the other hand, if the schedule management unit 2100 determines in step S22805 that the schedule management unit 2100 has received information indicating that deletion of the projection dynamic images has been completed (Yes in step S22805), the schedule management unit 2100 proceeds to step S22806 of FIG. 41.

In step S22806, the schedule management unit 2100 deletes the information concerning the projection dynamic images, for which the schedule management unit 2100 has sent the deletion instruction, from the image information 600.

In step S22807, the schedule management unit 2100 deletes split static image groups from the image information management unit 376, the split static image groups being thus deleted being those that were generated when the projection dynamic images for which the schedule management unit 2100 has sent the deletion instruction were generated.

Thus, the schedule management unit 2100 does not display the content names of content, specified to be projected in projection schedules, in the unused content list screen page 2900. Thus, even if the operator 1000 erroneously presses the deletion button 2903 in the unused content list screen page 2900, it is possible to avoid a situation that content to be projected is deleted.

On the other hand, in response to the operator 1000 selecting a displayed content name of content and pressing the deletion button 2903, the schedule management unit 2100 deletes the projection dynamic image group identified by the selected content. Thus, the operator 1000 can delete projection dynamic images from the external memories 320_1a-320_30b without performing an operation to transmit deletion instructions to the respective projectors 310_1a-310_30b. Therefore, even if the number of projection dynamic images is very large, it is possible to delete the projection dynamic images with a simple operation.

<10. Summary of third embodiment>

As can be seen from the above description, the image projection system 300 according to the present embodiment has the following features.

- The image projection system 300 reverses a dynamic image given by an advertiser, and splits a static image at each frame of the reversed dynamic image on the basis of the positions and the sizes of a plurality of windowpanes included in a given area of the outside surface of a building, to generate a plurality of split static images from the static image.
- The image projection system 300 generates the number of split static image groups, the number being equal to the number of the windowpanes, using the split static images corresponding to each windowpane at each frame, and stores the generated split static image groups in the image information management unit.
- The image projection system 300 corrects each of the split static image groups using the corresponding correction parameter generated from carrying out a calibration process on projectors installed at positions corresponding to each of the windowpanes included in the given area of the outside surface of the building.
- The image projection system 300 further splits each split static image included in each of the corrected split static image groups according to the number of projectors installed at positions corresponding to each windowpane, and encodes the thus-acquired split static images to generate projection dynamic image groups in projector units.
- The image projection system 300 projects the respective projection dynamic images included in the generated projection dynamic image group using the corresponding projectors onto the motor-driven screens corresponding to the windowpanes, at times according to schedule information.

As a result, it is possible to implement a digital signage combining the plurality of light transmission members.

Also, the image projection system 300 according to the present embodiment further has the following features.

- In response to an operator selecting content and pressing a deletion button, the image projection system 300 transmits deletion instructions to the respective projectors to delete respective projection dynamic images identified by the selected content.
- The image projection system 300 reads projection schedules at a time of displaying a screen page from which an operator selects content and presses the deletion button. Then, the image projection system 300 does not display the content name of content specified to be projected in the projection schedules, and displays the content names of content not specified to be projected in any projection schedule.

Thus, it is possible to ensure high operability concerning operation to delete projection dynamic images. Also, because the content specified to be projected is not displayed on the screen page, it is possible to avoid a situation of erroneously deleting content specified to be projected.

That is, according to the image projection system 300 of the present embodiment, it is possible to avoid erroneous operation concerning a digital signage using a combination of light transmission members.

[Variants of third embodiment]

Concerning the above-mentioned third embodiment, the process flows and the screen pages used in the processes of newly-registering, editing, or deleting a projection schedule in the schedule management process have been described. In this regard, process flows and screen pages used in processes of newly-registering, editing, or deleting a screen schedule are the same as or similar to the process flows and the screen pages used in the processes of newly-registering, editing, or deleting a projection schedule. Also, process flows and screen pages used in processes of newly-registering, editing, or deleting an illumination schedule are the same as or similar to the process flows and the screen pages used in the processes of newly-registering, editing, or deleting a projection schedule.

Also, according to the above-mentioned third embodiment, an input of a deletion instruction to delete content is controlled by not displaying the content name of content specified in a projection schedule to be projected, in the unused content list 2902.

However, an actual method to control an input of a deletion instruction to delete content is not limited to the above-mentioned method. For example, it is also possible that an input of a deletion instruction to delete content is controlled by displaying the content name of content specified to be projected in a projection schedule in an un-selectable manner. Alternatively, it is also possible that, in response to a selection of content specified to be projected in a projection schedule, pressing the deletion button is not accepted. That is, any method can be used as long as an input of a deletion instruction is allowed for content not specified to be projected in projection schedules, whereas an input of a deletion instruction is not allowed for content specified to be projected in projection schedules.

Also, according to the above-mentioned third embodiment, the information processing apparatus 370 has the calibration unit 371, the image processing unit 372, and the signage control unit 373. However, some of these units can be implemented in another signage apparatus.

Also, according to the above-mentioned third embodiment, the windowpanes installed in the given area of the outer surface of the building 110 are used as the projection media. However, projection media are not limited to windowpanes, and other light transmission members can be used as projection media. Also, light transmission members used as projection media are not limited to light transmission members installed in an outer surface of a building 110 in a given area. It is also possible to use light transmission members installed inside a building 110 in a given area. Further, it is also possible to use light transmission members installed on a body other than buildings.

Also, according to the above-mentioned third embodiment, the signage apparatuses include the projectors (the projection apparatuses), the motor-driven screens, and the illumination apparatuses. However, the signage apparatuses are not limited to these. For example, the signage apparatuses can include any apparatuses/devices/things that are already installed in the building 110 such as lighting equipment installed inside the building 110, lighting equipment that emits light to a wall or a signboard of the building 110 from the outside, objects or signboards installed in the building 110, and so forth.

According to the third embodiment, it is possible to avoid an erroneous operation otherwise occurring in a digital signage using a combination of a plurality of surfaces.

[Fourth Embodiment]

An image projection system according to a fourth embodiment will now be described. For the elements having substantially the same functional configurations as those of the first, second or third embodiment, the same reference numerals are given, and duplicate description will be omitted.

In order to implement a digital signage using a plurality of windowpanes, projection dynamic images corresponding to the respective positions of the windowpanes are projected by corresponding image projection apparatuses. Therefore, the number of projection dynamic images to be generated may be very large, and therefore, a certain time is taken until the digital signage can be actually started from when a corresponding request is given by an advertiser.

On the other hand, in order to increase an advertising effect, it is desired to start the digital signage from an appropriate time, and, for this purpose, it is desired to calculate the time at which the digital signage can be actually started, with high accuracy.

The present embodiment has been devised in consideration of this point, and an object is to calculate a time taken for generating projection dynamic images to implement a digital signage using a plurality of surfaces, with high accuracy.

<1. Example of application of image projection system>

An example of an application of an image projection system according to the fourth embodiment is the same as or similar to the application of the image projection system according to the first, second or third embodiment described above, and duplicate description will be omitted.

<2. Operations of signage apparatuses>

Operations of the signage apparatuses are the same as or similar to the operations of the signage apparatuses according to the first, second or third embodiment described above, and duplicate description will be omitted.

<3. System configuration of image projection system>

A system configuration of the image projection system is generally the same as the system configuration of the image projection system according to the first, second or third embodiment described above, and duplicate description will be omitted.

According to the fourth embodiment, as mentioned above, the image processing unit 372 includes the generation time calculation unit 1620 illustrated in FIG. 16. The generation time calculation unit 1620 calculates a time taken for generating projection dynamic images, using attribute information of the original dynamic image and the signage medium information, before actually generating the projection dynamic images. Thereby, the image processing unit 372 can clearly show the time taken for generating the projection dynamic images to the advertiser. As a result, the advertiser can determine such a digital signage start time as to acquire a higher advertising effect.

<4. Hardware configuration of information processing apparatus>

A hardware configuration of the information processing apparatus is the same as or similar to the hardware configuration of the information processing apparatus according to the first, second or third embodiment described above, and duplicate description will be omitted.

<5. Information stored in management units>

Information stored in the management units is the same as or similar to the information stored in the management units according to the first, second or third embodiment described above, and duplicate description will be omitted.

<6. Flow of signage process in image projection system>

A flow of the signage process carried out in the image projection system 300 is the same as or similar to the flow of the signage process carried out in the image projection system 300 according to the first, second or third embodiment, and duplicate description will be omitted.

<7. Details of calibration process>

The calibration process (step S801) carried out by the image projection system 300 is the same as or similar to the calibration process according to the first, second or third embodiment, and duplicate description will be omitted.

<8. Details of image processing>

Next, image processing (step S802 of FIG. 8) carried out by the image projection system 300 will be described in detail.

(1) Functional configuration of image processing unit

The functions of the image processing unit 372 of the information processing apparatus 370 carrying out image processing are generally the same as those of the image processing unit 372 according to the first, second or third embodiment, and duplicate description will be omitted.

As mentioned above, according to the fourth embodiment, the image processing unit 372 additionally includes the generation time calculation unit 1620 as illustrated in FIG. 16.

The medium information acquisition unit 1611 of the image processing unit 372 according to the fourth embodiment additionally includes a function of retrieving signage information 500 from the signage medium information management unit 375 and sends the retrieved information to the generation time calculation unit 1620.

The image information acquisition unit 1612 according to the fourth embodiment additionally includes a function of retrieving attribute information from a header part of the dynamic image given by the advertiser and stored in the image information management unit 376, and of sending the retrieved information to the generation time calculation unit 1620.

The generation time calculation unit 1620 is one example of a calculation means, calculates a time to be taken for generating projection dynamic images, using the attribute information sent from the image information acquisition unit 1612 and the signage medium information 500 sent from the medium information acquisition unit 1611, and displays the calculated time on the display unit 405.

The transmission unit 1619 additionally includes a function of, before transmitting the projection dynamic images to the respective projectors, determining whether it is a time included in a time range in which projection dynamic images can be transmitted. The time range in which projection dynamic images can be transmitted is a time range outside time ranges in which the projectors project other projection dynamic images. The time range in which projection dynamic images can be transmitted is previously set by the operator 1000 with reference to the schedule information 710-730.

If the transmission unit 1619 determines that the current time is included in the time range in which projection dynamic images can be transmitted, the transmission unit 1619 transmits the projection dynamic images to the respective projectors. On the other hand, if the transmission unit 1619 determines that the current time is not included in the time range in which projection dynamic images can be transmitted, the transmission unit 1619 waits until the current time comes to be included in the time range in which projection dynamic images can be transmitted. Then, when the current time comes to be included in the time range in which projection dynamic images can be transmitted, the transmission unit 1619 transmits the projection dynamic images to the respective projectors.

During the time range in which the respective projectors project other projection dynamic images, the projectors carry out processes including a process of retrieving the other projection dynamic images from the external memories, a decoding process, and so forth. Therefore, if the transmission unit 1619 transmits projection dynamic images during the time range, the loads of the projectors increase. As a result, in the projectors, the processes including a process of retrieving the other projection dynamic images from the external memories, a decoding process, and so forth, may be delayed, and therefore, defects such as missing frames, image distortion, or the like, may occur at a time of projecting the other projection dynamic images. For avoiding such a problematic situation, the transmission unit 1619 determines a time range in which other projection dynamic images are not projected as a "time range in which projection dynamic images can be transmitted", for transmitting projection dynamic images.

(2) Actual example of image processing

An actual example of image processing (step S802) carried out by the image processing unit 372 is the same as or similar to the actual example of image processing (step S802) carried out by the image processing unit 372 described above for the first, second or third embodiment, and duplicate description will be omitted.

(3) Flow of image processing

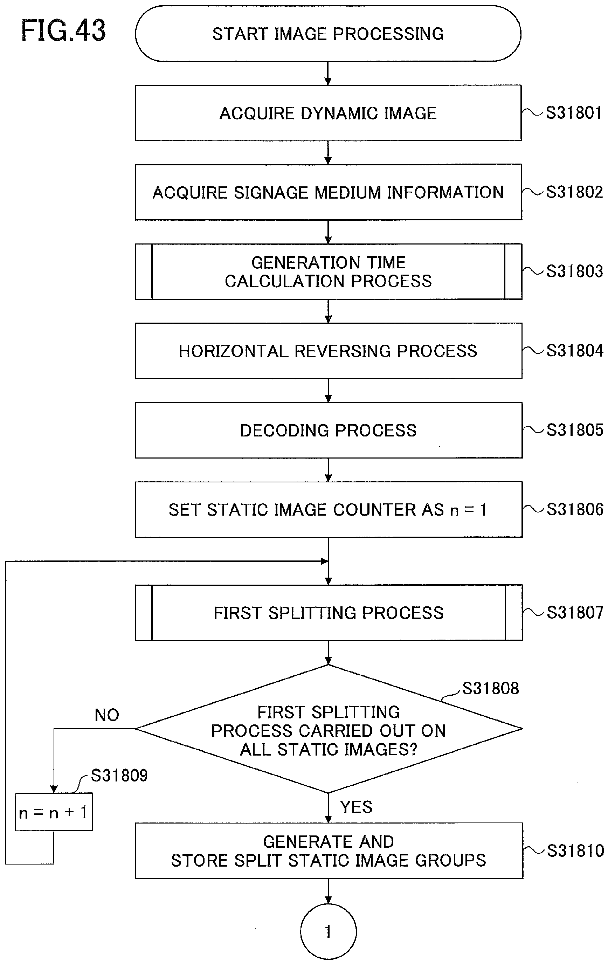

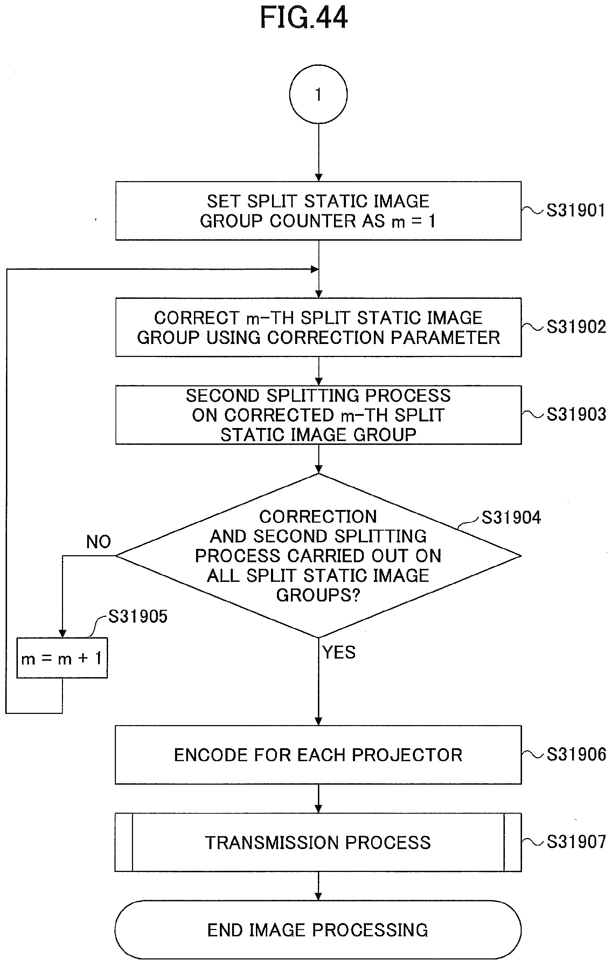

Next, a flow of image processing (step S802) will be described on the basis of a flowchart of FIGs. 43 and 44. FIGs. 43 and 44 are a flowchart of image processing.

In FIG. 43, steps S31801 and S31802 are the same as steps S1801 and S1802 of FIG. 18, and therefore, duplicate description will be omitted.

In step S31803, the generation time calculation unit 1620 calculates a time to be taken for generating the projection dynamic images, with the use of the attribute information of the dynamic image and the signage medium information, and displays the calculated time on the display unit 405. Note that a flowchart of the generation time calculation process (step S31803) will be described later in detail.

Steps S31804-S31906 in FIGs. 43 and 44 are the same as or similar to steps S1803-S1815 in FIG. 18, and therefore, duplicate description will be omitted.

In step S31907 in FIG. 44, the transmission unit 1619 transmits the projection dynamic images included in the generated projection dynamic image group to the corresponding projectors. Note that the transmission process (step S31907) will be described later in detail.

(4) Details of generation time calculation process (step S31803)

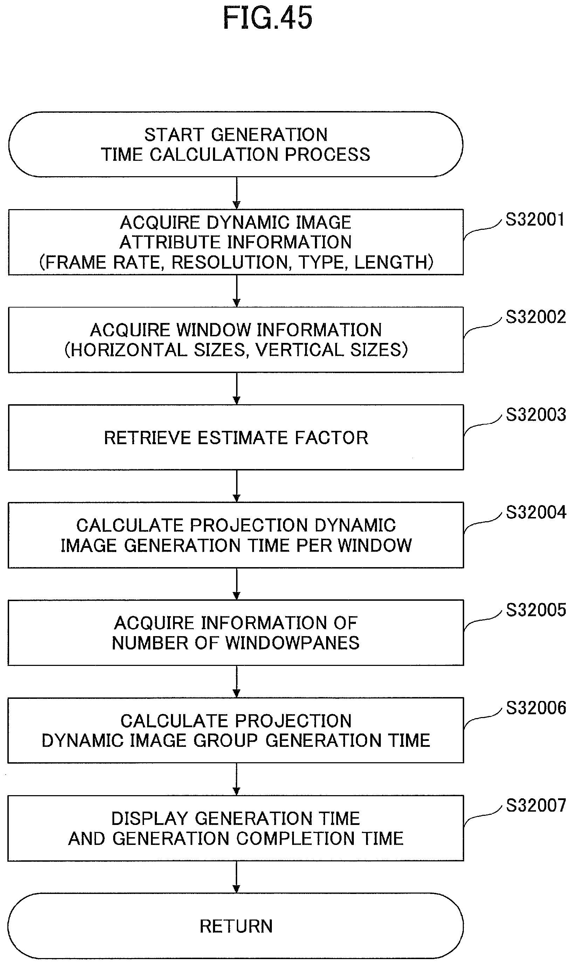

Next, the generation time calculation process (step S31803 of FIG. 43) will be described in detail with reference to FIG. 45. FIG. 45 is a flowchart illustrating a flow of the generation time calculation process.

In step S32001, the generation time calculation unit 1620 acquires the attribute information of the dynamic image sent from the image information acquisition unit 1612. The generation time calculation unit 1620 acquires, as the attribute information of the dynamic image, the frame rate, the resolution, the type of the image, and the length.

In step S32002, the generation time calculation unit 1620 acquires signage medium information 500 from the medium information acquisition unit 1611, and extracts the "horizontal sizes" and the "vertical sizes" (as layout information) of the "window information" from the signage medium information (in this regard, see FIG. 5A).

In step S32003, the generation time calculation unit 1620 retrieves an estimate factor that has been previously set.

In step S32004, the generation time calculation unit 1620 uses the attribute information of the dynamic image, the window information, and the estimate factor, to calculate a time to be taken for generating projection dynamic images per windowpane.

In step S32005, the generation time calculation unit 1620 acquires information of the number of windowpanes, as layout information, on the basis of the window information included in the signage medium information 500 sent from the medium information acquisition unit 1611.

In step S32006, the generation time calculation unit 1620 calculates the time to be taken for generating a projection dynamic image group (the content) by multiplying the time to be taken for generating projection dynamic images per windowpane by the number of windowpanes. That is, the generation time calculation unit 1620 calculates the time to be taken for generating a projection dynamic image group (the content) using the attribute information (the frame rate, the resolution, the type of the image, and the length) of the dynamic image and the layout information (the number of windowpanes, the horizontal sizes and the vertical sizes of the windowpanes).

In step S32007, the generation time calculation unit 1620 displays the calculated time, to be taken for generating a projection dynamic image group, on the display unit 405. Also, the generation time calculation unit 1620 adds the calculated time to be taken for generating a projection dynamic image group to the current time, to calculate a time at which generation of the projection dynamic image group is completed (i.e., a "generation completion time"), and displays the generation completion time on the display unit 405.

(5) Details of transmission process (step S31907)

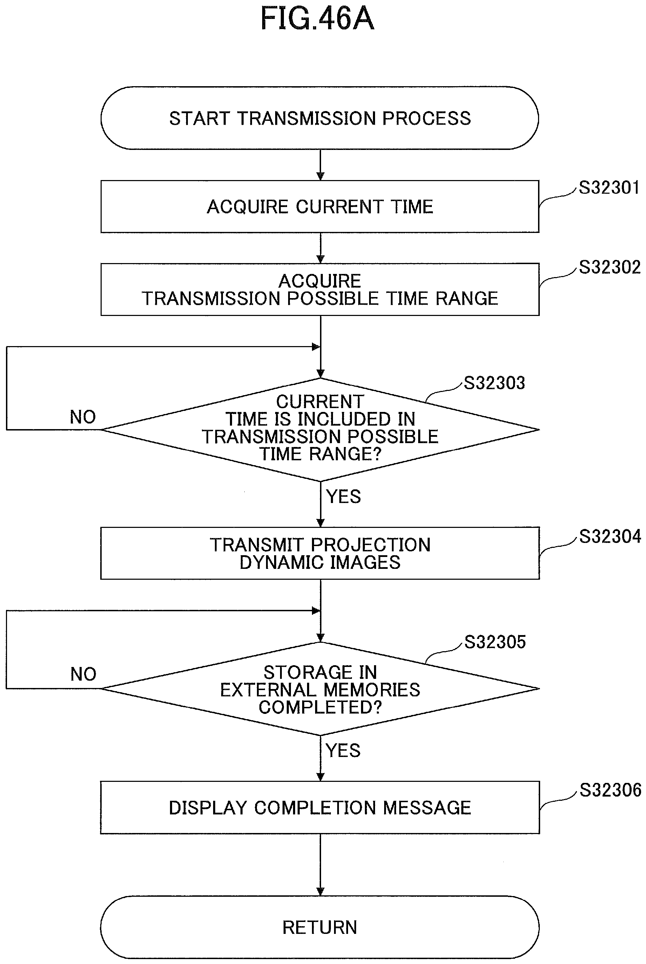

Next, the transmission process (step S31907 of FIG. 44) will be described in detail with reference to FIG. 46A. FIG. 46A is a flowchart illustrating a flow of the transmission process.

As illustrated in FIG. 46A, in step S32301, the transmission unit 1619 acquires the current time.

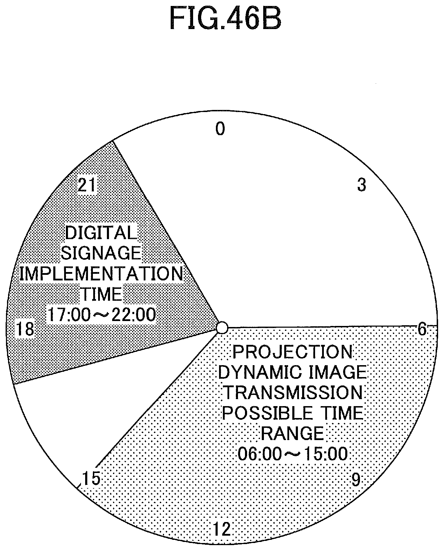

In step S32302, the transmission unit 1619 acquires a "transmission possible time range", i.e., the above-mentioned "time range in which projection dynamic images can be transmitted" to the projectors. FIG. 46B illustrates one example of a time range previously set as the time range in which projection dynamic images can be transmitted. The example of FIG. 46B is set on the basis of the schedule information 710-730 illustrated in FIGs. 7A-7C.

According to the schedule information 710-730 illustrated in FIGs. 7A-7C, projection of the projection dynamic image group of the "content 100" is carried out for a time range between 18:00 and 19:00. Projection of the projection dynamic image group of the "content 101" or the "content 102" is carried out for a time range between 20:00 and 21:30.

Therefore, the operator 1000 determines, for example, a time range between 17:00 and 22:00 as a time range in which the digital signage is implemented, and the operator 1000 sets, for example, a time range between 6:00 and 15:00, outside than the time range in which the digital signage is implemented, as the "time range in which projection dynamic images can be transmitted", i.e., the "transmission possible time range".

In step S32303, the transmission unit 1619 determines whether the current time is included in the transmission possible time range. If the current time is not included in the time range between 6:00 and 15:00, the transmission unit 1619 determines that the current time is not included in the transmission possible time range (No in step S32303). In this case, the transmission unit 1619 waits for when the current time comes to be included in the transmission possible time range.

On the other hand, if the transmission unit 1619 determines that the current time is included in the transmission possible time range (Yes in step S32303), the transmission unit 1619 proceeds to step S32304.

In step S32304, the transmission unit 1619 transmits the projection dynamic images to the respective projectors. The projectors that have received the projection dynamic images transmitted by the transmission unit 1619 stores the received projection dynamic images in the external memories, respectively. After the storage in the external memories are completed, the projectors transmit storage completion reports to the transmission unit 1619.

In step S32305, the transmission unit 1619 determines whether the transmission unit 1619 has received the storage completion reports from the respective projectors. If the transmission unit 1619 determines in step S32305 that there are projectors from which the storage completion reports have not been received (No in step S32305), the transmission unit 1619 waits until the transmission unit 1619 receives the storage completion reports from all the projectors.

On the other hand, if the transmission unit 1619 determines in step S32305 that the transmission unit 1619 has received the storage completion reports from all the respective projectors (Yes in step S32305), the transmission unit 1619 proceeds to step S32306. In step S32306, the transmission unit 1619 displays a message indicating that storage of the projection dynamic images has been completed on the display unit 405.

<9. Details of signage control process>

Next, the signage control process (step S803) carried out by the image projection system 300 will be described in detail.

(1) Functional configuration of signage control unit

The functions of the signage control unit 373 of the information processing apparatus 370 are the same as or similar to those of the signage control unit 373 according to the first, second or third embodiment, and duplicate description will be omitted.

(2) Flow of signage control process

A flow of the signage control process (step S803) by the signage control unit 373 is generally the same as the flow of the signage control process of FIG. 35 for the third embodiment described above, and duplicate description will be omitted.

According to the fourth embodiment, from among the steps of the flow of FIG. 35, step S22201 is not carried out, and steps S22202-S22213 are carried out.

<10. Summary of fourth embodiment>

As can be seen from the above description, the image projection system 300 according to the present embodiment has the following features.

- The image projection system 300 reverses a dynamic image given by an advertiser, and splits a static image at each frame of the reversed dynamic image on the basis of the positions and the sizes of a plurality of windowpanes included in a given area of the outside surface of a building, to generate a plurality of split static images from the static image.
- The image projection system 300 generates the number of split static image groups, the number being equal to the number of the windowpanes, using the split static images corresponding to each windowpane at each frame, and stores the generated split static image groups in the image information management unit.
- The image projection system 300 corrects each of the split static image groups using the corresponding correction parameter generated from carrying out a calibration process on projectors installed at positions corresponding to each of the windowpanes included in the given area of the outside surface of the building.
- The image projection system 300 further splits each split static image included in each of the corrected split static image groups according to the number of projectors installed at positions corresponding to each windowpane, and encodes the thus-acquired split static images to generate projection dynamic image groups in projector units.
- The image projection system 300 projects the respective projection dynamic images included in the generated projection dynamic image group using the corresponding projectors onto the motor-driven screens corresponding to the windowpanes, at times according to schedule information.

As a result, it is possible to implement a digital signage combining a plurality of light transmission members.

Also, the image projection system 300 according to the present embodiment further has the following features.

- Before generating the projection dynamic image group, the image projection system 300 calculates a time to be taken for generating the projection dynamic image group using attribute information of the dynamic image given by the advertiser, and layout information of the plurality of windowpanes, and displays the calculated time.

Thus, it is possible to calculate a time taken for generating a projection dynamic image group to implement a digital signage using a plurality of light transmission members, with high accuracy.

As a result, the advertiser can determine such a digital signage start time so as to acquire a higher advertising effect.

[Variant of fourth embodiment]

According to the above-mentioned fourth embodiment, the generation time calculation unit 1620 calculates a time to be taken for generating a projection dynamic image group and a generation completion time. However, if a generation completion time calculated by the generation time calculation unit 1620 is not included in a time range in which projection dynamic images can be transmitted (i.e., a transmission possible time range), the transmission unit 1619 waits, after the generation completion time, until the current time comes to be included in the transmission possible time range. In this case, a time when the digital signage can be actually started comes to be further delayed from the generation completion time.

Therefore, the generation time calculation unit 1620 according to the variant displays, in addition to the generation completion time, a transmission completion time (which is further calculated) at which transmission of all the projection dynamic images will be completed, on the display unit 405.

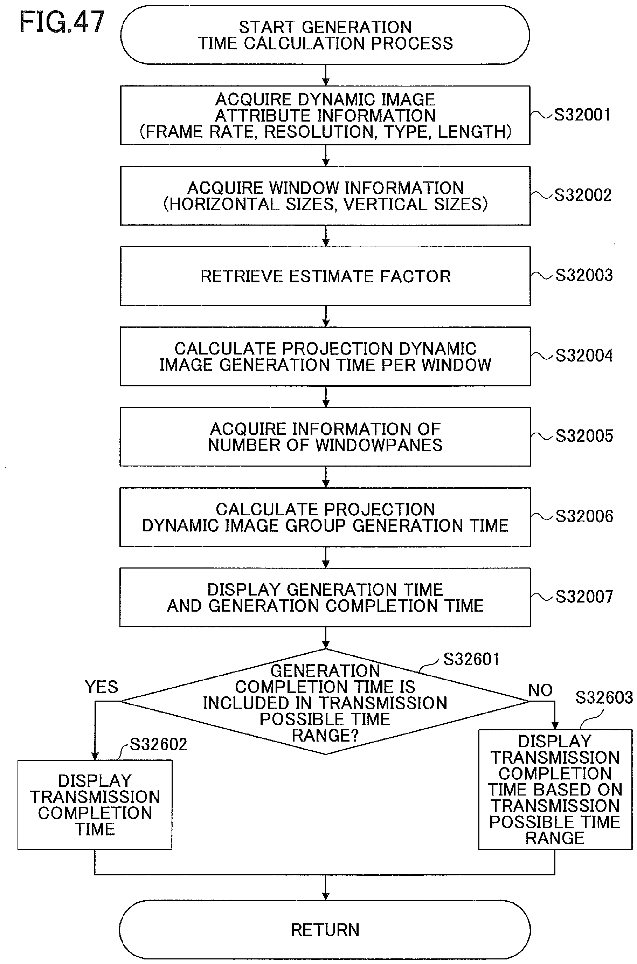

FIG. 47 is a flowchart illustrating a flow of a generation time calculation process according to the variant. What is different from the flowchart of FIG. 45 is that steps S32601-S32603 are additionally carried out.

In step S32601, the generation time calculation unit 1620 determines whether the calculated generation completion time is included in the transmission possible time range. If the generation time calculation unit 1620 determines in step S32601 that the calculated generation completion time is included in transmission possible time range (Yes in step S32601), the generation time calculation unit 1620 proceeds to step S32602.

In step S32602, the generation time calculation unit 1620 adds a time to be taken for transmitting the projection dynamic images to the calculated generation completion time, and displays the addition result on the display unit 405 as a "transmission completion time".

On the other hand, if the generation time calculation unit 1620 determines in step S32601 that the calculated generation completion time is not included in the transmission possible time range (No in step S32601), the generation time calculation unit 1620 proceeds to step S32603.

In step S32603, the generation time calculation unit 1620 extracts, from the transmission possible time range, a time range nearest to the calculated generation completion time, and calculates a transmission completion time that is calculated for a case where the projection dynamic images are transmitted in the thus extracted time range. Also, the generation time calculation unit 1620 displays the calculated transmission completion time on the display unit 405.

Thus, according to the variant of the fourth embodiment, the transmission completion time is calculated in consideration of the transmission possible time range, and is displayed. Therefore, it is possible to calculate the time at which the digital signage can be actually implemented, with high accuracy.

[Other variants of fourth embodiment]

According to the fourth embodiment, a time to be taken for generating a projection dynamic image group and a generation completion time are calculated and displayed. However, the functions of the generation time calculation unit 1620 are not limited to these functions. It is also possible that the generation time calculation unit 1620 further has a function of warning the operator on the basis of the calculated time to be taken for generating a projection dynamic image group and a generation completion time.

According to the fourth embodiment, a single time range is set as a transmission possible time range in which projection dynamic images can be transmitted, on the basis of the schedule information 710-730. However, the number of transmission possible time ranges is not limited to one. It is also possible to set a plurality of transmission possible time ranges, depending on each particular day of the week, on the basis of the schedule information 710-730.

According to the fourth embodiment, the operator 1000 sets a transmission possible time range in which projection dynamic images can be transmitted, on the basis of the schedule information 710-730. However, an actual method of setting a transmission possible time range is not limited to this method. It is also possible that the transmission unit 1619 automatically sets a transmission possible time range on the basis of the schedule information 710-730.

Also, according to the above-mentioned fourth embodiment, the information processing apparatus 370 has the calibration unit 371, the image processing unit 372, and the signage control unit 373. However, some of these units can be implemented in another signage apparatus.

Also, according to the above-mentioned fourth embodiment, the windowpanes installed in the given area of the outer surface of the building 110 are used as the projection media. However, projection media are not limited to windowpanes, and other light transmission members can be used as projection media. Also, light transmission members used as projection media are not limited to light transmission members installed in an outer surface of a building 110 in a given area. It is also possible to use light transmission members installed inside a building 110 in a given area. Further, it is also possible to use light transmission members installed on a body other than buildings.

Also, according to the above-mentioned fourth embodiment, the signage apparatuses include the projectors (the projection apparatuses), the motor-driven screens, and the illumination apparatuses. However, the signage apparatuses are not limited to these. For example, the signage apparatuses can include any apparatuses/devices/things that are already installed in the building 110 such as lighting equipment installed inside the building 110, lighting equipment that emits light to a wall or a signboard of the building 110 from the outside, objects or signboards installed in the building 110, and so forth.

Thus, according to the fourth embodiment, it is possible to calculate a time taken for generating projection dynamic images to implement a digital signage using a plurality of surfaces, with high accuracy.

## Claims

1. An image projection system (300) comprising:

   an image processing unit (372) configured to split a static image into a plurality of split images on the basis of positions and sizes of a plurality of surfaces included in an area (510); and
   a signage control unit (373) configured to control said image projection system to project the split images respectively onto projection surfaces corresponding to the plurality of surfaces, using projection apparatuses (310) corresponding to the plurality of surfaces;
   wherein the image processing unit (372) comprises a first splitting unit (1615) configured to split the static image into first split images (1720) on the basis of the positions and the sizes of the plurality of surfaces included the area (510),
   wherein the first split images (1720) are horizontally reversed images,
   **characterized in that** the image processing unit (372) further comprises:

   a decoding unit (1614) configured to extract the static image from a decoded dynamic image;
   a second splitting unit (1617) configured to further split each of the first split images (1720) corresponding to one of the plurality of surfaces, on the basis of a number of projection apparatuses (310) installed at the one of the plurality of surfaces, so as to generate second split images (1740), the number of second split images for the one of the plurality of surfaces corresponding to the number of projection apparatuses (310) installed at the one of the plurality of surfaces;
   an encoding unit (1618) configured to encode, for each projection apparatus (310), the second split image (1740) corresponding to the projection apparatus (310) into a projection dynamic image (1750); and
   a transmission unit (1619) configured to transmit the projection dynamic images (1750) to their corresponding projection apparatuses (310);

   the system being also **characterized in that** the signage control unit (373) is further configured to control said image projection system (300) to project the projection dynamic images (1750) onto their corresponding projection surfaces by transmitting instructions to the projection apparatuses corresponding to the one of the plurality of surfaces at a given time, said instructions causing each projection apparatus (310) to project the corresponding projection dynamic image (1750).

2. The image projection system according to claim 1, wherein the image processing unit (372) further comprises:

   a correction unit (1616) configured to geometrically correct the first split images (1720),
   wherein the second splitting unit (1617) is further configured to split each of the first split images (1720), geometrically corrected by the correction unit (1616), on the basis of the number of projection apparatuses (310) installed at the one of the plurality of surfaces, so as to generate the corresponding number of second split images (1740).

3. The image projection system according to claim 2, further comprising:

a parameter calculation means configured to calculate, for each of the plurality of surfaces, a correction parameter (1730) for correcting the corresponding one of the first split images (1720),
a storage means configured to store the first split images (1720), and
a re-generation unit (2602) configured to, in response to the parameter calculation means calculating updated correction parameters after the correction unit (1616) corrects the first split images (1720), re-correct the first split images (1720) using the updated correction parameters calculated by the parameter calculation means, and to split each of the re-corrected first split images corresponding to the one of the plurality of surfaces, on the basis of the number of projection apparatuses (310) installed at the one of the plurality of surfaces, so as to re-generate the corresponding number of second split images (1740).

4. The image projection system according to claim 1,
wherein the signage control unit (373) is further configured to transmit the instructions to the projection apparatuses corresponding to the one of the plurality of surfaces at the given time calculated on the basis of schedule information that indicates projection times.

5. The image projection system according to claim 1,
wherein the surfaces are arranged in the area at specified intervals, and the first splitting unit (1615) is further configured to split the static image into the first split images according to a comparison between the static image and the area (510).

6. An image projection method for splitting a static image into a plurality of split images on the basis of positions and sizes of a plurality of surfaces included in an area, said method comprising:

projecting the split images respectively onto projection surfaces corresponding to the plurality of surfaces, using projection apparatuses respectively corresponding to the plurality of surfaces;
splitting (S1806) the static image into first split images (1720) on the basis of the positions and the sizes of the plurality of surfaces included in the area,
wherein the first split images (1720) are horizontally reversed images;
**characterized in that** the method further comprises the steps of:

decoding (S1804) a dynamic image to extract the static image;
splitting (S1812) each of the first split images (1720) corresponding to one of the plurality of surfaces, on the basis of a number of projection apparatuses (310) installed at the one of the plurality of surfaces,
so as to generate second split images (1740), the number of second split images for the one of the plurality of surfaces corresponding to the number of projection apparatuses (310) installed at the one of the plurality of surfaces;
encoding (S1815) for each projection apparatus (310) the second split image (1740) corresponding to the projection apparatus (310) into a projection dynamic image (1750);
transmitting (S1816) the projection dynamic images (1750) to their corresponding projection apparatuses (310);
transmitting instructions to the projection apparatuses corresponding to the one of the plurality of surfaces at a given time to cause each projection apparatus (310) to project the corresponding projection dynamic image (1750).

**Patentansprüche**

1. Bildprojektionsanlage (300), die Folgendes umfasst:

eine Bildverarbeitungseinheit (372), die dafür konfiguriert ist, ein statisches Bild auf der Grundlage von Positionen und Größen mehrerer Flächen, die in einem Bereich (510) eingeschlossen sind, in mehrere geteilte Bilder zu teilen, und
eine Beschilderungssteuereinheit (373), die dafür konfiguriert ist, die Bildprojektionsanlage so zu steuern, dass sie die geteilten Bilder jeweils auf Projektionsflächen projiziert, die den mehreren Flächen entsprechen, unter Verwendung von Projektionsvorrichtungen (310), die den mehreren Flächen entsprechen,
wobei die Bildverarbeitungseinheit (372) eine erste Teilungseinheit (1615) umfasst, die dafür konfiguriert ist, das statische Bild auf der Grundlage der Positionen und der Größen der mehreren Flächen, die in dem Bereich (510) eingeschlossen sind, in erste geteilte Bilder (1720) zu teilen,
wobei die ersten geteilten Bilder (1720) in Horizontalrichtung umgekehrte Bilder sind,
**dadurch gekennzeichnet, dass** die Bildverarbeitungseinheit (372) ferner Folgendes umfasst:

eine Decodierungseinheit (1614), die dafür konfiguriert ist, das statische Bild aus einem decodierten dynamischen Bild zu extrahieren,
eine zweite Teilungseinheit (1617), die dafür konfiguriert ist, jedes der ersten geteilten Bilder (1720), das einer der mehreren Flächen entspricht, auf der Grundlage einer Anzahl von Projektionsvorrichtungen (310), die an der einen der mehreren Flächen installiert sind, weiter zu teilen, um so zweite geteilte Bilder (1740) zu erzeugen, wobei die Anzahl von zweiten geteilten Bildern für die eine der mehreren Flächen der Anzahl von Projektionsvorrichtungen (310), die an der einen der mehreren Flächen installiert sind, entspricht,
eine Codierungseinheit (1618), die dafür konfiguriert ist, für jede Projektionsvorrichtung (310) das zweite geteilte Bild (1740), das der Projektionsvorrichtung (310) entspricht, zu einem dynamischen Projektionsbild (1750) zu codieren, und
eine Übertragungseinheit (1619), die dafür konfiguriert ist, die dynamischen Projektionsbilder (1750) zu ihren entsprechenden Projektionsvorrichtungen (310) zu übertragen,

wobei die Anlage ebenfalls **dadurch gekennzeichnet ist, dass** die Beschilderungssteuereinheit (373) ferner dafür konfiguriert ist, die Bildprojektionsanlage (300) so zu steuern, dass sie die dynamischen Projektionsbilder (1750) auf ihre entsprechenden Projektionsflächen projiziert, durch Übermitteln von Anweisungen an die Projektionsvorrichtungen, die zu einer gegebenen Zeit der einen der mehreren Flächen entsprechen, wobei die Anweisungen veranlassen, dass jede Projektionsvorrichtung (310) das entsprechende dynamische Projektionsbild (1750) projiziert.

2. Bildprojektionsanlage nach Anspruch 1, wobei die Bildverarbeitungseinheit (372) ferner Folgendes umfasst:

eine Berichtigungseinheit (1616), die dafür konfiguriert ist, die ersten geteilten Bilder (1720) geometrisch zu berichtigen,
wobei die zweite Teilungseinheit (1617) ferner dafür konfiguriert ist, jedes der ersten geteilten Bilder (1720), die durch die Berichtigungseinheit (1616) geometrisch berichtigt sind, auf der Grundlage der Anzahl von Projektionsvorrichtungen (310), die an der einen der mehreren Flächen installiert sind, zu teilen, um so die entsprechende Anzahl von zweiten geteilten Bildern (1740) zu erzeugen.

3. Bildprojektionsanlage nach Anspruch 2, die ferner Folgendes umfasst:

ein Parameterberechnungsmittel, das dafür konfiguriert ist, für jede der mehreren Flächen einen Berichtigungsparameter (1730) zum Berichtigen des entsprechenden der ersten geteilten Bilder (1720) zu berechnen,
ein Speicherungsmittel, das dafür konfiguriert ist, die ersten geteilten Bilder (1720) zu speichern, und
eine Neuerzeugungseinheit (2602), die dafür konfiguriert ist, in Reaktion darauf, dass das Parameterberechnungsmittel aktualisierte Berichtigungsparameter berechnet, nachdem die Berichtigungseinheit (1616) die ersten geteilten Bilder (1720) berichtigt, die ersten geteilten Bilder (1720) unter Verwendung der durch das Parameterberechnungsmittel berechneten aktualisierten Berichtigungsparameter neu zu berichtigen und jedes der neuberichtigten ersten geteilten Bilder entsprechend der einen der mehreren Flächen, auf der Grundlage der Anzahl von Projektionsvorrichtungen (310), die an der einen der mehreren Flächen installiert sind, zu teilen, um so die entsprechende Anzahl von zweiten geteilten Bildern (1740) neu zu erzeugen.

4. Bildprojektionsanlage nach Anspruch 1,
wobei die Beschilderungssteuereinheit (373) ferner dafür konfiguriert ist, die Anweisungen an die Projektionsvorrichtungen, die zu der gegebenen Zeit, berechnet auf der Grundlage von Zeitplaninformationen, die Projektionszeiten angeben, der einen der mehreren Flächen entsprechen, zu übermitteln.

5. Bildprojektionsanlage nach Anspruch 1,
wobei die Flächen in dem Bereich in festgelegten Abständen angeordnet sind und die erste Teilungseinheit (1615) ferner dafür konfiguriert ist, das statische Bild gemäß einem Vergleich zwischen dem statischen Bild und dem Bereich (510) zu teilen.

# EP 3 300 360 B1

6. Bildprojektionsverfahren zum Teilen eines statischen Bildes auf der Grundlage von Positionen und Größen mehrerer Flächen, die in einem Bereich eingeschlossen sind, in mehrere geteilte Bilder, wobei das Verfahren Folgendes umfasst:

Projizieren der geteilten Bilder jeweils auf Projektionsflächen, die den mehreren Flächen entsprechen, unter Verwendung von Projektionsvorrichtungen, die jeweils den mehreren Flächen entsprechen,
Teilen (S1806) des statischen Bildes auf der Grundlage der Positionen und der Größen der mehreren Flächen, die in dem Bereich eingeschlossen sind, in erste geteilte Bilder (1720),
wobei die ersten geteilten Bilder (1720) in Horizontalrichtung umgekehrte Bilder sind,
**dadurch gekennzeichnet, dass** das Verfahren ferner die folgenden Schritte umfasst:

Decodieren (S1804) eines dynamischen Bildes, um das statische Bild zu extrahieren,
Teilen (S1812) jedes der ersten geteilten Bilder (1720), das einer der mehreren Flächen entspricht, auf der Grundlage einer Anzahl von Projektionsvorrichtungen (310), die an der einen der mehreren Flächen installiert sind, um so zweite geteilte Bilder (1740) zu erzeugen, wobei die Anzahl von zweiten geteilten Bildern für die eine der mehreren Flächen der Anzahl von Projektionsvorrichtungen (310), die an der einen der mehreren Flächen installiert sind, entspricht,
Codieren (S1815), für jede Projektionsvorrichtung (310), des zweiten geteilten Bildes (1740), das der Projektionsvorrichtung (310) entspricht, zu einem dynamischen Projektionsbild (1750),
Übermitteln (S1816) der dynamischen Projektionsbilder (1750) zu ihren entsprechenden Projektionsvorrichtungen (310),
Übermitteln von Anweisungen an die Projektionsvorrichtungen, die zu einer gegebenen Zeit der einen der mehreren Flächen entsprechen, um zu veranlassen, dass jede Projektionsvorrichtung (310) das entsprechende dynamische Projektionsbild (1750) projiziert.

## Revendications

1. Système de projection d'images (300) comprenant :

une unité de traitement des images (372) configurée pour diviser une image statique en plusieurs images divisées sur la base de positions et de tailles de plusieurs surfaces incluses dans une zone (510) ; et
une unité de commande de signalisation (373) configurée pour contrôler ledit système de projection d'images pour projeter respectivement les images divisées sur des surfaces de projection correspondant aux plusieurs surfaces en utilisant des appareils de projection (310) correspondant aux plusieurs surfaces ;
dans lequel l'unité de traitement des images (372) comprend une première unité de division (1615) configurée pour diviser l'image statique en plusieurs premières images statiques divisées (1720) sur la base des positions et des tailles des plusieurs surfaces incluses dans la zone (510)
dans lequel les premières images divisées (1720) sont des images inversées horizontalement ;
**caractérisé en ce que** l'unité de traitement des images (372) comprend en outre :

une unité de décodage (1614) configurée pour extraire l'image statique d'une image dynamique décodée ;
une deuxième unité de division (1617) configurée pour diviser davantage chacune des premières images divisées (1720) correspondant à l'une des plusieurs surfaces, sur la base d'un nombre d'appareils de projection (310) installés au niveau de ladite une des plusieurs surfaces, de sorte à générer des deuxièmes images divisées (1740), le nombre des deuxièmes images divisées pour ladite une des plusieurs surfaces correspondant au nombre des appareils de projection (310) installés au niveau de ladite une des plusieurs surfaces ;
une unité de codage (1618) configurée pour coder, pour chaque appareil de projection (310), la deuxième image divisée (1740) correspondant à l'appareil de projection (310) en une image dynamique de projection (1750) ; et
une unité de transmission (1619) configurée pour transmettre les images dynamiques de projection (1750) vers leurs appareils de projection correspondants (310) ;

le système étant **caractérisé en outre en ce que** l'unité de commande de signalisation (373) est en outre configurée pour transmettre des instructions d'images (300) pour projeter les images dynamiques de projection (1750) sur leurs surfaces de projection correspondantes en transmettant des instructions aux appareils de projection correspondant à ladite une des surfaces à un moment donné, lesdites instructions entraînant chaque appareil de projection (310) à projeter l'image dynamique de projection correspondante (1750).

2. Système de projection d'images selon la revendication 1, dans lequel l'unité de projection d'images (372) comprend en outre :

une unité de correction (1616) configurée pour corriger géométriquement les premières images divisées (1720) ;
dans lequel la deuxième unité de division (1617) est en outre configurée pour diviser chacune des premières images divisées (1720), corrigées géométriquement par l'unité de correction (1616), sur la base du nombre des appareils de projection (310) installés au niveau de ladite une des plusieurs surfaces, de sorte à générer le nombre correspondant de deuxièmes images divisées (1740).

3. Système de projection d'images selon la revendication 2, comprenant en outre :

un moyen de calcul de paramètres configuré pour calculer, pour chacune des plusieurs surfaces, un paramètre de correction (1730) pour corriger l'image correspondante de premières mages divisées (1720) ;
un moyen de stockage configuré pour stocker les premières images divisées (1720) ; et
une unité de régénération (2602) configurée pour recorriger, en réponse au moyen de calcul de paramètres calculant des paramètres de correction mis à jour après la correction par l'unité de correction (1616) des premières images divisées (1720), les premières images divisées (1720) en utilisant les paramètres de corrections mis à jour calculés par le moyen de calcul de paramètres, et pour diviser chacune des premières images divisées recorrigées correspondant à ladite une des plusieurs surfaces, sur la base du nombre d'appareils de projection (310) installés au niveau de ladite une des plusieurs surfaces, de sorte à regénérer le nombre correspondant de deuxièmes images divisées (1740).

4. Système de projection d'images selon la revendication 1,
dans lequel l'unité de commande de signalisation (373) est en outre configurée pour transmettre les instructions aux appareils de projection correspondant à ladite une des plusieurs surfaces au moment donné, calculé sur la base d'informations planifiées indiquant les temps de projection.

5. Système de projection d'images selon la revendication 1,
dans lequel les surfaces sont agencées dans la zone à des intervalles spécifiés, la première unité de la première unité de division (1615) étant en outre configurée pour diviser l'image statique en des premières images divisées sur la base d'une comparaison entre l'image statique et la zone (510).

6. Procédé de projection d'images pour diviser une image statique en plusieurs images divisées sur la base des positions et des tailles de plusieurs surfaces incluses dans une zone, ledit procédé comprenant les étapes ci-dessous :

projection des images divisées respectivement sur des surfaces de projection correspondant aux plusieurs surfaces en utilisant des appareils de projection correspondant respectivement aux plusieurs surfaces ;
division (S 1806) de l'image statique en des premières images divisées (1720) sur la base des positions et des tailles des plusieurs surfaces incluses dans la zone ;
dans lequel les premières images divisées (1720) sont des images inversées horizontalement ;
**caractérisé en ce que** le procédé comprend en outre les étapes ci-dessous :

décodage (S1804) d'une image dynamique pour extraire l'image dynamique ;
division (S1812) de chacune des premières images divisées (1730) correspondant à l'une des plusieurs surfaces, sur la base d'un nombre d'appareils de projection (310) installés sur ladite une des plusieurs surfaces, de sorte à générer des deuxièmes images divisées (1740), le nombre des deuxièmes images divisées pour ladite une des plusieurs surfaces correspondant au nombre d'appareils de projection (310) installés au niveau de ladite une des plusieurs surfaces ;
codage (S1815) pour chaque appareil de projection (310), de la deuxième image divisée (1740) correspondant à l'appareil de projection (310) en une image dynamique de projection (1750) ;
transmission (S1816) des images dynamiques de projection (1750) vers leurs appareils de projection respectifs (310) ;
transmission d'instructions vers les appreils de projection correspondant à ladite une des plusieurs surface à un moment donné pour entraîner chaque appareil de projection (310) à projeter l'image dynamique de projection correspondante (1750).

# FIG.1

# FIG.2A

# FIG.2B

140_1

140_2

140_3

140_4

140_5

140_6

FIG.3

EP 3 300 360 B1

# FIG.4

INFORMATION PROCESSING APPARATUS

370

| 401 | 402 | 403 | 404 |
|-----|-----|-----|-----|
| CPU | ROM | RAM | AUXILIARY STORAGE UNIT |

409

| 405 | 406 | 407 | 408 |
|-----|-----|-----|-----|
| DISPLAY UNIT | INPUT UNIT | NETWORK I/F UNIT | USB I/F UNIT |

# FIG.5A

EP 3 300 360 B1

500

| SIGNAGE MEDIUM INFORMATION (SIGNAGE MEDIUM ID: S001) | | | | | | | |
|---|---|---|---|---|---|---|---|
| FLOOR | WINDOW ID | WINDOW INFORMATION | | | PROJECTOR ID | MOTOR-DRIVEN SCREEN ID | ILLUMINATION APPARATUS ID |
| | | POSITION | HORIZON-TAL SIZE | VERTICAL SIZE | | | |
| 2F | W201 | $(0, 0)$ | $x_{12}$ | $y_{12}$ | PJ201A | SC201 | E200 |
| | | | | | PJ201B | | |
| | W202 | $(x_{21}, 0)$ | $x_{22} - x_{21}$ | $y_{12}$ | PJ202A | SC202 | |
| | | | | | PJ202B | | |
| | W203 | $(x_{31}, 0)$ | $x_{32} - x_{31}$ | $y_{12}$ | PJ203A | SC203 | |
| | | | | | PJ203B | | |
| | W204 | $(x_{41}, 0)$ | $x_{42} - x_{41}$ | $y_{12}$ | PJ204A | SC204 | |
| | | | | | PJ204B | | |
| | W205 | $(x_{51}, 0)$ | $x_{52} - x_{51}$ | $y_{12}$ | PJ205A | SC205 | |
| | | | | | PJ205B | | |
| 3F | W301 | $(0, y_{21})$ | $x_{12}$ | $y_{22} - y_{21}$ | PJ301A | SC301 | |
| | | | | | PJ301B | | |

# FIG.5B

## FIG.6

600

| IMAGE INFORMATION | | | | | | | | |
|---|---|---|---|---|---|---|---|---|
| DYNAMIC IMAGE ID | SIGNAGE MEDIUM ID | WINDOW ID | PROJEC-TOR ID | CORRECTION PARAMETER ID | CALCULA-TION DATE AND TIME | SPLIT STATIC IMAGE GROUP ID | PROJECTION DYNAMIC IMAGE ID | GENERA-TION DATE AND TIME |
| C100 | S001 | W201 | PJ201A | P201 | 2016.5.25 | C201 | M201A | 2016.6.10 |
| | | | PJ201B | | | | M201B | |
| | | W202 | PJ202A | P202 | 2016.5.25 | C202 | M202A | 2016.6.10 |
| | | | PJ202B | | | | M202B | |
| | | W203 | PJ203A | P203 | 2016.5.25 | C203 | M203A | 2016.6.10 |
| | | | PJ203B | | | | M203B | |
| | | W204 | PJ204A | P204 | 2016.5.25 | C204 | M204A | 2016.6.10 |
| | | | PJ204B | | | | M204B | |
| | | W205 | PJ205A | P205 | 2016.6.20 | C205 | M205A | 2016.6.10 |
| | | | PJ205B | | | | M205B | |
| | | W301 | PJ301A | P301 | 2016.5.25 | C301 | M301A | 2016.6.10 |
| | | | PJ301B | | | | M301B | |
| | | | | | | | | |

⋮

| C105 | S001 | W705 | | P705 | 2016.7.15 | C705 | | 2016.7.31 |
|---|---|---|---|---|---|---|---|---|
| | | | PJ705B | | | | M705B | |

EP 3 300 360 B1

# FIG.7A

710

EP 3 300 360 B1

| SCHEDULE INFORMATION (SIGNAGE MEDIUM ID: S001)<br>(FRIDAY) | | | | | | | |
| --- | --- | --- | --- | --- | --- | --- | --- |
| SIGNAGE APPARATUS / TIME | 10:00 | 12:00 | 14:00 | 16:00 | 18:00 | 20:00 | 22:00 |
| PROJECTOR | | | | | CONTENT 100 ⟺ | | |
| MOTOR-DRIVEN SCREEN | | | | | ⟺ | | |
| ILLUMINATION APPARATUS | | | | | ⟺ | ⟸⟹ | |

# FIG.7B

720

SCHEDULE INFORMATION (SIGNAGE MEDIUM ID: S001)
(SATURDAY)

| SIGNAGE APPARATUS \ TIME | 10:00 | 12:00 | 14:00 | 16:00 | 18:00 | 20:00 | 22:00 |
|---|---|---|---|---|---|---|---|
| PROJECTOR | | | | | CONTENT 100 ⟺ | CONTENT 101 ⟺ | |
| MOTOR-DRIVEN SCREEN | | | | | ⟺ | ⟺ | |
| ILLUMINATION APPARATUS | | | | | ⟺ | ⟺ | ⟺ |

EP 3 300 360 B1

# FIG.7C

730

| SCHEDULE INFORMATION (SIGNAGE MEDIUM ID: S001) (SUNDAY) | | | | | | | |
|---|---|---|---|---|---|---|---|
| SIGNAGE APPARATUS ＼ TIME | 10:00 | 12:00 | 14:00 | 16:00 | 18:00 | 20:00 | 22:00 |
| PROJECTOR | | | | | CONTENT 100 ⇔ | CONTENT 102 ⇔ | |
| MOTOR-DRIVEN SCREEN | | | | | ⇔ | ⇔ | |
| ILLUMINATION APPARATUS | | | | | ⇔ | ⇔ | ⇔ |

EP 3 300 360 B1

# FIG.8

```
          ┌─────────────────────────────┐
          │    SIGNAGE PROCESS          │
          │         START               │
          └─────────────────────────────┘
                        │
                        │           S801
                        ▼
    ┌────────────────────────────────────────┐
    │         CALIBRATION PROCESS              │
    └────────────────────────────────────────┘
                        │
                        │           S802
                        ▼
    ┌────────────────────────────────────────┐
    │           IMAGE PROCESSING               │
    └────────────────────────────────────────┘
                        │
                        │           S803
                        ▼
    ┌────────────────────────────────────────┐
    │        SIGNAGE CONTROL PROCESS           │
    └────────────────────────────────────────┘
                        │
                        ▼
          ┌─────────────────────────────┐
          │    SIGNAGE PROCESS          │
          │         END                 │
          └─────────────────────────────┘
```

# FIG.9

INFORMATION PROCESSING APPARATUS /370

CALIBRATION UNIT /371

FIRST CALIBRATION UNIT /911

SECOND CALIBRATION UNIT /912

IMAGE PROCESSING UNIT /372

SIGNAGE CONTROL UNIT /373

MONITORING UNIT /374

SIGNAGE MEDIUM INFORMATION MANAGEMENT UNIT /375

IMAGE INFORMATION MANAGEMENT UNIT /376

SCHEDULE INFORMATION MANAGEMENT UNIT /377

FIG.10

EP 3 300 360 B1

# FIG.11

1100

PLEASE SELECT WINDOW FOR CALIBRATION.

1110

|     | 1 | 2 | 3 | 4 | 5 |
|-----|---|---|---|---|---|
| 7F  | ☐ | ☐ | ☐ | ☐ | ☐ |
| 6F  | ☐ | ☐ | ☐ | ☐ | ☐ |
| 5F  | ☐ | ☐ | ☐ | ☐ | ☐ |
| 4F  | ☐ | ☐ | ☐ | ☐ | ☐ |
| 3F  | ☐ | ☐ | ☐ | ☐ | ☐ |
| 2F  | ☐ | ☐ | ☐ | ☐ | ☐ |

1111

1120

END

370

310_28a

1128

330_28

310_28b

# FIG.12

370

FIRST CALIBRATION
PATTERN IMAGE

310_28a

1128

PHOTO-
GRAPHING
RESULT

330_28

381

SECOND CALIBRATION
PATTERN IMAGE

310_28b

# FIG.13

370

SECOND CALIBRATION
PATTERN IMAGE

310_28a

PHOTO-
GRAPHING
RESULT

1128

330_28

381

FIRST CALIBRATION
PATTERN IMAGE

310_28b

# FIG.14

EP 3 300 360 B1

# FIG.15

370

WHITE IMAGE
RGB LEVELS

310_28a

1128

MEASURE-
MENT
RESULT
(COLOR
TEMPER-
ATURE)

330_28

382

310_28b

# FIG.16

**370**

## INFORMATION PROCESSING APPARATUS

**371**
### CALIBRATION UNIT

**372**
### IMAGE PROCESSING UNIT

**1611**
#### MEDIUM INFORMATION ACQUISITION UNIT

**1612**
#### IMAGE INFORMATION ACQUISITION UNIT

**1613**
#### REVERSING UNIT

**1614**
#### DECODING UNIT

**1615**
#### FIRST SPLITTING UNIT

**1616**
#### CORRECTION UNIT

**1617**
#### SECOND SPLITTING UNIT

**1618**
#### ENCODING UNIT

**1619**
#### TRANSMISSION UNIT

**1620**
#### GENERATION TIME CALCULATION UNIT

**375**
### SIGNAGE MEDIUM INFORMATION MANAGEMENT UNIT

**376**
### IMAGE INFORMATION MANAGEMENT UNIT

**377**
### SCHEDULE INFORMATION MANAGEMENT UNIT

**373**
### SIGNAGE CONTROL UNIT

**374**
### MONITORING UNIT

FIG.17

DYNAMIC IMAGE (MPEG4) — 1710
(DYNAMIC IMAGE ID = C100)

DYNAMIC IMAGE (MPEG4) — 1711

HORIZONTAL REVERSING PROCESS

DECODING PROCESS (STATIC IMAGE EXTRACTION PROCESS) AND FIRST SPLIT-TING PROCESS

CORRECTION PROCESS

SECOND SPLITTING PROCESS

ENCODING PROCESS

1720_1 (SPLIT STATIC IMAGE GROUP ID = C201)

1720_2 (SPLIT STATIC IMAGE GROUP ID = C202)

1720_30 (SPLIT STATIC IMAGE GROUP ID = C705)

STATIC IMAGE (JPEG)

STATIC IMAGE (JPEG)

STATIC IMAGE (JPEG)

CORRECTION PARAMETER

CORRECTION PARAMETER

CORRECTION PARAMETER

1730_1 (CORRECTION PARAMETER ID = P201)

1730_2 (CORRECTION PARAMETER ID = P202)

1730_30 (CORRECTION PARAMETER ID = P705)

STATIC IMAGE (BMP)

STATIC IMAGE (BMP)

STATIC IMAGE (BMP)

STATIC IMAGE (BMP)

1740_1a    1740_1b

1740_30a    1740_30b

DYNAMIC IMAGE (MPEG4)

DYNAMIC IMAGE (MPEG4)

DYNAMIC IMAGE (MPEG4)

DYNAMIC IMAGE (MPEG4)

1750_1a (PROJECTION DYNAMIC IMAGE ID = M201A)

1750_1b (PROJECTION DYNAMIC IMAGE ID = M201B)

1750_30a (PROJECTION DYNAMIC IMAGE ID = M705A)

1750_30b (PROJECTION DYNAMIC IMAGE ID = M705B)

FOR EACH WINDOW

FOR EACH PROJEC-TOR

FIG.18

START IMAGE PROCESSING

S1801 — ACQUIRE DYNAMIC IMAGE

S1802 — ACQUIRE SIGNAGE MEDIUM INFORMATION

S1803 — HORIZONTAL REVERSING PROCESS

S1804 — DECODING PROCESS

S1805 — SET STATIC IMAGE COUNTER AS n = 1

S1806 — FIRST SPLITTING PROCESS

S1807 — FIRST SPLITTING PROCESS CARRIED OUT ON ALL STATIC IMAGES?

NO

n = n + 1 — S1808

YES

S1809 — GENERATE AND STORE SPLIT STATIC IMAGE GROUPS

S1810 — SET SPLIT STATIC IMAGE GROUP COUNTER AS m = 1

S1811 — CORRECT m-TH SPLIT STATIC IMAGE GROUP USING CORRECTION PARAMETER

S1812 — SECOND SPLITTING PROCESS ON CORRECTED m-TH SPLIT STATIC IMAGE GROUP

S1813 — CORRECTION AND SECOND SPLITTING PROCESS CARRIED OUT ON ALL SPLIT STATIC IMAGE GROUPS?

NO

m = m + 1 — S1814

YES

S1815 — ENCODE FOR EACH PROJECTOR

S1816 — TRANSMIT TO EACH PROJECTOR

END IMAGE PROCESSING

FIG.19

```
        ┌─────────────────────────────┐
        │           START             │
        │   FIRST SPLITTING PROCESS   │
        └─────────────────────────────┘
                     │
                     ▼           S1901
        ┌─────────────────────────────┐
        │   RETRIEVE n-TH STATIC IMAGE │
        └─────────────────────────────┘
                     │
                     ▼           S1902
        ┌─────────────────────────────┐
        │   SET FLOOR COUNTER AS f = 2 │
        └─────────────────────────────┘
                     │
                     ▼           S1903
        ┌─────────────────────────────┐
        │   INITIALIZE WINDOW COUNTER  │
        │   FOR ONE FLOOR AS g = 1     │
        └─────────────────────────────┘
                     │
                     ▼           S1904
        ┌─────────────────────────────────────┐
        │  RETRIEVE POSITION, HORIZONTAL SIZE, │
        │  AND VERTICAL SIZE FOR WINDOW ID = Wf0g │
        └─────────────────────────────────────┘
                     │
                     ▼           S1905
        ┌─────────────────────────────┐
        │  DETERMINE CORRESPONDING PIXELS │
        └─────────────────────────────┘
                     │
                     ▼           S1906
        ┌─────────────────────────────┐
        │        EXTRACT PIXELS        │
        └─────────────────────────────┘
                     │
                     ▼           S1907
              ╱─────────────╲
     NO      ╱      ALL       ╲
    ◄───────  WINDOWS ON "f"    
             ╲  FLOOR PROCESSED? ╱
              ╲─────────────╱
                     │ YES
       S1908         ▼           S1909
   ┌─────────┐   ╱─────────────╲
   │ g = g+1 │  ╱                ╲   NO
   └─────────┘  ╲ ALL FLOORS      ╱ ◄──
                 ╲  PROCESSED?    ╱
                  ╲─────────────╱
       S1910             │ YES
   ┌─────────┐          ▼
   │ f = f+1 │   ┌──────────────┐
   └─────────┘   │    RETURN     │
                 └──────────────┘
```

70

# FIG.20A

# FIG.20B

# FIG.21

INFORMATION PROCESSING APPARATUS /370

CALIBRATION UNIT /371

IMAGE PROCESSING UNIT /372

SIGNAGE CONTROL UNIT /373

SCHEDULE MANAGEMENT UNIT /2100

SYNCHRONIZATION UNIT /2101

START CONTROL UNIT /2102

END CONTROL UNIT /2103

RECOVERY UNIT /2104

MONITORING UNIT /374

SIGNAGE MEDIUM INFORMATION MANAGEMENT UNIT /375

IMAGE INFORMATION MANAGEMENT UNIT /376

SCHEDULE INFORMATION MANAGEMENT UNIT /377

# FIG.22

START SIGNAGE CONTROL PROCESS
(FOR STARTING)

S2201

TRANSMIT TIME INFORMATION

S2202

RETRIEVE SCHEDULE INFORMATION

S2203

RETRIEVE REQUIRED TIME INFORMATION

S2204

CALCULATE TIMES TO SEND INSTRUCTIONS
TO SIGNAGE APPARATUSES FOR
STARTING PROJECTION

S2205

TIME TO
SEND INSTRUCTION
TO SIGNAGE APPARATUS FOR
STARTING PROJECTION
HAS COME?

NO

YES S2206

TRANSMIT INSTRUCTION

S2207

INSTRUCTIONS HAVE
BEEN TRANSMITTED TO ALL
SIGNAGE APPARATUSES
?

NO

YES

END SIGNAGE CONTROL PROCESS
(FOR STARTING)

# FIG.23A

EP 3 300 360 B1

2300

| REQUIRED TIME INFORMATION (FOR STARTING PROJECTION) | | |
|---|---|---|
| INSTRUCTION ITEM FOR SIGNAGE APPARATUS | REQUIRED TIME | CONTROL PATTERN |
| LAMP TURNING-ON INSTRUCTION | 90 SECONDS | ALL FLOORS AT SAME TIME |
| PROJECTION START INSTRUCTION | 10 SECONDS | ALL FLOORS AT SAME TIME |
| ILLUMINATION TURNING-OFF INSTRUCTION | 10 SECONDS | FROM LOWER FLOOR |
| SCREEN TURNING-ON INSTRUCTION | 10 SECONDS | FROM LOWER FLOOR |

# FIG.23B

PROJECTION START TIME

LAMP TURNING-ON INSTRUCTION
ON — 2310 — 90 SECONDS
OFF

PROJECTION START INSTRUCTION
ON — 2320 — 10 SECONDS
OFF

ILLUMINATION TURNING-OFF INSTRUCTION
ON — 2330 — 20 SECONDS
OFF

SCREEN TURNING-ON INSTRUCTION
ON — 2340 — 10 SECONDS | 10 SECONDS
OFF

# FIG.24

START SIGNAGE CONTROL PROCESS
(FOR ENDING)

S2401
RETRIEVE SCHEDULE INFORMATION

S2402
RETRIEVE REQUIRED TIME INFORMATION

S2403
CALCULATE TIMES TO SEND INSTRUCTIONS
TO SIGNAGE APPARATUSES FOR
ENDING PROJECTION

S2404
TIME TO
SEND INSTRUCTION
TO SIGNAGE APPARATUS FOR
ENDING PROJECTION
HAS COME?

NO

YES S2405
TRANSMIT INSTRUCTION

S2406
INSTRUCTIONS HAVE
BEEN TRANSMITTED TO ALL
SIGNAGE APPARATUSES?

NO

YES
END SIGNAGE CONTROL PROCESS
(FOR ENDING)

# FIG.25A

REQUIRED TIME INFORMATION (FOR ENDING PROJECTION) — 2500

| INSTRUCTION ITEM FOR SIGNAGE APPARATUS | REQUIRED TIME | CONTROL PATTERN |
|---|---|---|
| SCREEN TURNING-OFF INSTRUCTION | 10 SECONDS | FROM LOWER FLOOR |
| ILLUMINATION TURNING-ON INSTRUCTION | 10 SECONDS | FROM LOWER FLOOR |
| PROJECTION END INSTRUCTION | 10 SECONDS | FROM LOWER FLOOR |
| LAMP TURNING-OFF INSTRUCTION | 10 SECONDS | FROM LOWER FLOOR |

# FIG.25B

PROJECTION END TIME

SCREEN TURNING-OFF INSTRUCTION — ON / OFF — 2510 — 20 SECONDS

ILLUMINATION TURNING-ON INSTRUCTION — ON / OFF — 2520 — 10 SECONDS | 10 SECONDS

PROJECTION END INSTRUCTION — ON / OFF — 2530 — 20 SECONDS

LAMP TURNING-OFF INSTRUCTION — ON / OFF — 2540 — 20 SECONDS

EP 3 300 360 B1

# FIG.26

**INFORMATION PROCESSING APPARATUS** /370

**CALIBRATION UNIT** /371

**IMAGE PROCESSING UNIT** /372

**SIGNAGE CONTROL UNIT** /373

**MONITORING UNIT** /374

**INFORMATION MONITORING UNIT** /2601

**RE-GENERATION UNIT** /2602

**SIGNAGE MEDIUM INFORMATION MANAGEMENT UNIT** /375

**IMAGE INFORMATION MANAGEMENT UNIT** /376

**SCHEDULE INFORMATION MANAGEMENT UNIT** /377

FIG.27

START
MONITORING PROCESS

S2701
CALCULATION
DATE AND TIME HAVE BEEN
UPDATED?

NO

↓ YES

S2702
RETRIEVE SPLIT STATIC IMAGE GROUP

S2703
RE-CORRECT SPLIT STATIC IMAGE GROUP
USING CORRECTION PARAMETER

S2704
SET SPLIT STATIC IMAGE COUNTER AS p = 1

S2705
SECOND SPLITTING PROCESS ON
p-TH SPLIT STATIC IMAGE

S2706
SECOND
SPLITTING PROCESS
HAS BEEN CARRIED OUT
ON ALL SPLIT STATIC
IMAGES?

NO

S2707
p = p + 1

↓ YES

S2708
ENCODING PROCESS

S2709
TRANSMIT TO PROJECTORS

S2710
UPDATE GENERATION
DATES AND TIMES FOR RE-GENERATED
PROJECTION DYNAMIC IMAGES

END
MONITORING PROCESS

# FIG.28

700

| SCHEDULE INFORMATION (SIGNAGE MEDIUM ID: S001) | | | | | | | |
|---|---|---|---|---|---|---|---|
| SIGNAGE APPARATUS \ TIME | 10:00 | 12:00 | 14:00 | 16:00 | 18:00 | 20:00 | 22:00 |
| PROJECTOR | | | | | | C100 ⟺ | |
| MOTOR-DRIVEN SCREEN | | | | | | ⟺ | |
| ILLUMINATION APPARATUS | | | | | ⟵————⟶ | ⟸ | |

EP 3 300 360 B1

FIG.29

START SIGNAGE
CONTROL PROCESS

"START
CONTROL PROCESS" — S12201

MONITORING
RESULT RECEIVED
? — S12202

YES → TRANSMIT PROJECTION
END INSTRUCTIONS
TO PROJECTORS — S12203

NO

AUTOMATIC
RECOVERY FROM
TROUBLE POSSIBLE
? — S12204

NO

YES — S12205

TRANSMIT RE-START
INSTRUCTION TO PROJECTOR
THAT HAS TROUBLE

AUTOMATIC
RECOVERY
PROCESS

RE-STARTED
PROPERLY? — S12206

NO

YES — S12207

TRANSMIT PROJECTION
START INSTRUCTION
TO PROJECTORS

NEAR
PROJECTION END
TIME? — S12208

NO

YES

SWITCHING
PROCESS

TRANSMIT LAMP
TURNING-OFF INSTRUCTIONS
TO PROJECTORS — S12210

TRANSMIT SCREEN
TURNING-OFF INSTRUCTIONS
TO MOTOR-DRIVEN SCREENS — S12211

TRANSMIT ILLUMINATION
TURNING-ON INSTRUCTION TO
ILLUMINATION APPARATUSES — S12212

"END CONTROL PROCESS" — S12209

SEND MONITORING RESULT
TO MONITORING SERVER — S12213

END SIGNAGE CONTROL
PROCESS

# FIG.30A

START "START CONTROL PROCESS"

S12301

RETRIEVE SCHEDULE INFORMATION
TO ACQUIRE PROJECTION START TIME

S12302

TRANSMIT LAMP
TURNING-ON INSTRUCTIONS

S12303

TRANSMIT TIME INFORMATION

S12304

TRANSMIT PROJECTION
START INSTRUCTIONS

S12305

TRANSMIT ILLUMINATION
TURNING-OFF INSTRUCTIONS

S12306

TRANSMIT SCREEN
TURNING-ON INSTRUCTIONS

RETURN

# FIG.30B

START "END CONTROL PROCESS"

S12311

TRANSMIT PROJECTION END INSTRUCTIONS

S12312

TRANSMIT SCREEN
TURNING-OFF INSTRUCTIONS

S12313

TRANSMIT ILLUMINATION
TURNING-ON INSTRUCTIONS

S12314

TRANSMIT LAMP
TURNING-OFF INSTRUCTIONS

RETURN

EP 3 300 360 B1

FIG.31

85

# FIG.32

MONITORING APPARATUS /351

MONITORING UNIT /2501

MONITORING RESULT REPORTING UNIT /2502

MONITORING OBJECT MANAGEMENT UNIT /2503

LOG STORAGE UNIT /2504

# FIG.33

2600

| MONITORING OBJECT MANAGEMENT INFORMATION | | | |
|---|---|---|---|
| MONITORING OBJECT | TROUBLE ITEM | TROUBLE TYPE | TIME-RELATED CONDITIONS |
| INFORMATION PROCESSING APPARATUS | NO PING RESPONSE | AUTOMATIC RECOVERY NOT POSSIBLE | ANY TIME |
| | SOFTWARE | AUTOMATIC RECOVERY NOT POSSIBLE | ANY TIME |
| CONTROL APPARATUS | NO PING RESPONSE | AUTOMATIC RECOVERY NOT POSSIBLE | ANY TIME |
| | SOFTWARE | AUTOMATIC RECOVERY NOT POSSIBLE | ANY TIME |
| PROJECTOR | FAN | AUTOMATIC RECOVERY POSSIBLE | BEFORE PROJECTION OR DURING PROJECTION |
| | LAMP | AUTOMATIC RECOVERY POSSIBLE | BEFORE PROJECTION OR DURING PROJECTION |
| | INTERNAL TEMPERATURE | AUTOMATIC RECOVERY POSSIBLE | BEFORE PROJECTION OR DURING PROJECTION |
| | FILTER | AUTOMATIC RECOVERY NOT POSSIBLE | BEFORE PROJECTION OR DURING PROJECTION |
| | EXTERNAL MEMORY ABSENT | AUTOMATIC RECOVERY NOT POSSIBLE | BEFORE PROJECTION |
| | EXTERNAL MEMORY FULL | AUTOMATIC RECOVERY NOT POSSIBLE | BEFORE PROJECTION |
| | CONNECTION TO Web API NOT POSSIBLE | AUTOMATIC RECOVERY POSSIBLE | BEFORE PROJECTION OR DURING PROJECTION |
| | Web API RESPONSE TIMEOUT | AUTOMATIC RECOVERY POSSIBLE | BEFORE PROJECTION OR DURING PROJECTION |
| | OUT OF TIME SYNCHRONIZATION | AUTOMATIC RECOVERY POSSIBLE | BEFORE PROJECTION OR DURING PROJECTION |
| | DISPLAY IMAGE NOT UPDATED | AUTOMATIC RECOVERY POSSIBLE | BEFORE PROJECTION OR DURING PROJECTION |

**FIG.34**

```
                    ┌─────────────────────────────┐
                    │  START MONITORING PROCESS   │
                    └─────────────────────────────┘
                                  │
        ┌─────────────────────────┤
        │                         ▼
        │                                              S12701
        │  NO      ◇ MONITORING TIME HAS COME? ◇
        │◄─────────
        │                         │ YES
        │                         ▼
        │                                              S12702
        │          ◇        ANY TROUBLE?        ◇──── NO ──┐
        │                                                   │
        │                         │ YES                     │
        │                         ▼          S12703         │
        │          ┌─────────────────────────────┐         │
        │          │   DETERMINE CORRESPONDING    │         │
        │          │       MONITORING OBJECT      │         │
        │          └─────────────────────────────┘         │
        │                         │          S12704         │
        │                         ▼                         │
        │          ┌─────────────────────────────┐         │
        │          │     DETERMINE TROUBLE TYPE   │         │
        │          └─────────────────────────────┘         │
        │                         │          S12705         │
        │                         ▼                         │
        │  ┌─────────────────────────────────────────┐     │
        │  │ TRANSMIT DETERMINED MONITORING OBJECT    │     │
        │  │ AND DETERMINED TROUBLE TYPE TO           │     │
        │  │ INFORMATION PROCESSING APPARATUS         │     │
        │  └─────────────────────────────────────────┘     │
        │                         │          S12706         │
        │                         ▼                         │
        │          ┌─────────────────────────────┐         │
        │          │          RECORD LOG          │         │
        │          └─────────────────────────────┘         │
        │                         │◄────────────────────────┘
        │                         ▼          S12707
        │  NO      ◇       END MONITORING?      ◇
        └──────────
                                  │ YES
                                  ▼
                    ┌─────────────────────────────┐
                    │    END MONITORING PROCESS   │
                    └─────────────────────────────┘
```

# FIG.35

START SIGNAGE CONTROL PROCESS

SCHEDULE MANAGEMENT PROCESS — S22201

RETRIEVE SCHEDULE INFORMATION
TO ACQUIRE PROJECTION START TIME — S22202

TRANSMIT LAMP
TURNING-ON INSTRUCTIONS — S22203

TRANSMIT TIME INFORMATION — S22204

TRANSMIT PROJECTION
START INSTRUCTIONS — S22205

TRANSMIT ILLUMINATION
TURNING-OFF INSTRUCTIONS — S22206

TRANSMIT SCREEN
TURNING-ON INSTRUCTIONS — S22207

NEAR PROJECTION
END TIME? — S22208
NO / YES

TRANSMIT PROJECTION END INSTRUCTIONS — S22209

TRANSMIT SCREEN
TURNING-OFF INSTRUCTIONS — S22210

TRANSMIT ILLUMINATION
TURNING-ON INSTRUCTIONS — S22211

TRANSMIT LAMP
TURNING-OFF INSTRUCTIONS — S22212

ALL SCHEDULES
IMPLEMENTED? — S22213
NO / YES

END SIGNAGE CONTROL PROCESS

# FIG.36

START SCHEDULE MANAGEMENT PROCESS

END? S22301

YES

NO

RETRIEVE PROJECTION SCHEDULES S22302

DISPLAY PROJECTION SCHEDULE LIST S22303

NEW-REGISTRATION INSTRUCTION INPUT? S22304

NO

YES

EDITING INSTRUCTION FOR SPECIFIED SCHEDULE INPUT? S22307

NO

YES

DELETION INSTRUCTION FOR SPECIFIED SCHEDULE INPUT? S22310

NO

YES

CONTENT DELETION INSTRUCTION INPUT? S22312

NO

YES

DISPLAY NEW-REGISTRATION SCREEN PAGE S22305

DISPLAY SCHEDULE EDITING SCREEN PAGE S22308

NEW-REGISTRATION PROCESS S22306

SCHEDULE EDITING PROCESS S22309

SCHEDULE DELETION PROCESS S22311

CONTENT DELETION PROCESS S22313

END SCHEDULE MANAGEMENT PROCESS

FIG.37A

EP 3 300 360 B1

2400

PROJECTION SCHEDULE

2403 — NEW REG-
ISTRATION    UNUSED CONTENT LIST

2402

EDIT    DELETE

FIG.37B

EP 3 300 360 B1

2410

NAME: ———— 2411

SCHEDULE:

START TIME: [_____] – END TIME: [_____] ———— 2412

REPEAT: ☐ SUN ☐ MON ☐ TUE ☐ WED ☐ THU ☐ FRI ☐ SAT ———— 2413

———— 2414

REGISTER  RETURN

2415  2416

# FIG.38A

EP 3 300 360 B1

PROJECTION SCHEDULE

| NEW REG-ISTRATION | | UNUSED CONTENT LIST |

SCHEDULE_C100
SCHEDULE_C101
SCHEDULE_C102
SCHEDULE_C103

EDIT    DELETE

2400

2402

2404

## FIG.38B

EP 3 300 360 B1

NAME: | SCHEDULE_C102 | ——2411

SCHEDULE:

START TIME: | 20:00 | – END TIME: | 21:00 | ——2412

REPEAT: ☑ SUN ☐ MON ☐ TUE ☐ WED ☐ THU ☐ FRI ☐ SAT ——2413

CONTENT 102 ——2414

2610

| REGISTER | | RETURN |

2415      2416

# FIG.39

START SCHEDULE DELETION PROCESS

S22601

YES

IN PROGRESS?

NO

S22602

DELETE SPECIFIED PROJECTION SCHEDULE

RETURN

FIG.40A

EP 3 300 360 B1

PROJECTION SCHEDULE

| NEW REG-ISTRATION | UNUSED CONTENT LIST |

SCHEDULE_C100

SCHEDULE_C101

SCHEDULE_C102

SCHEDULE_C103

| EDIT | DELETE |

FIG.40B

PROJECTION SCHEDULE

[NEW REG-ISTRATION]  [UNUSED CONTENT LIST]

SCHEDULE_C100
SCHEDULE_C101
SCHEDULE_C102

2400

2402

[EDIT]  [DELETE]

FIG.41

START CONTENT DELETION PROCESS

／S22801

SEARCH FOR UNUSED CONTENTS

／S22802

DISPLAY UNUSED CONTENT LIST

／S22803

DELETION INSTRUCTION INPUT? — NO

YES

／S22804

TRANSMIT DELETION INSTRUCTION TO DELETE CORRESPONDING PROJECTION DYNAMIC IMAGES TO EACH PROJECTOR

／S22805

DELETION OF PROJECTION DYNAMIC IMAGES FROM EXTERNAL MEMORY OF EACH PROJECTOR COMPLETED? — NO

YES

／S22806

UPDATE IMAGE INFORMATION

／S22807

DELETE SPLIT STATIC IMAGE GROUPS FROM IMAGE INFORMATION MANAGEMENT UNIT

RETURN

FIG.42A

PROJECTION SCHEDULE

NEW REG-
ISTRATION

UNUSED CONTENT LIST

SCHEDULE_C100
SCHEDULE_C101
SCHEDULE_C102

EDIT      DELETE

2400

2901

EP 3 300 360 B1

FIG.42B

UNUSED CONTENT LIST

CONTENT 103
CONTENT 104
CONTENT 105

DELETE    RETURN

2900
2902
2903
2904

EP 3 300 360 B1

FIG.43

START IMAGE PROCESSING

ACQUIRE DYNAMIC IMAGE — S31801

ACQUIRE SIGNAGE MEDIUM INFORMATION — S31802

GENERATION TIME
CALCULATION PROCESS — S31803

HORIZONTAL REVERSING PROCESS — S31804

DECODING PROCESS — S31805

SET STATIC IMAGE COUNTER AS n = 1 — S31806

FIRST SPLITTING PROCESS — S31807

FIRST SPLITTING
PROCESS CARRIED OUT ON
ALL STATIC IMAGES? — S31808

NO

S31809

n = n + 1

YES

GENERATE AND
STORE SPLIT STATIC IMAGE GROUPS — S31810

1

# FIG.44

( 1 )

SET SPLIT STATIC IMAGE
GROUP COUNTER AS m = 1 　～S31901

CORRECT m-TH SPLIT STATIC IMAGE
GROUP USING CORRECTION PARAMETER 　～S31902

SECOND SPLITTING PROCESS
ON CORRECTED m-TH SPLIT
STATIC IMAGE GROUP 　～S31903

CORRECTION
AND SECOND SPLITTING
PROCESS CARRIED OUT ON
ALL SPLIT STATIC IMAGE
GROUPS? 　S31904

NO

S31905

m = m + 1

YES

ENCODE FOR EACH PROJECTOR 　～S31906

TRANSMISSION PROCESS 　～S31907

END IMAGE PROCESSING

# FIG.45

```
        START GENERATION
     TIME CALCULATION PROCESS
```

```
         ACQUIRE DYNAMIC IMAGE                    S32001
          ATTRIBUTE INFORMATION
  (FRAME RATE, RESOLUTION, TYPE, LENGTH)
```

```
      ACQUIRE WINDOW INFORMATION                  S32002
   (HORIZONTAL SIZES, VERTICAL SIZES)
```

```
        RETRIEVE ESTIMATE FACTOR                  S32003
```

```
     CALCULATE PROJECTION DYNAMIC                 S32004
   IMAGE GENERATION TIME PER WINDOW
```

```
        ACQUIRE INFORMATION OF                    S32005
        NUMBER OF WINDOWPANES
```

```
        CALCULATE PROJECTION                      S32006
  DYNAMIC IMAGE GROUP GENERATION TIME
```

```
        DISPLAY GENERATION TIME                   S32007
   AND GENERATION COMPLETION TIME
```

```
              RETURN
```

# FIG.46A

```
┌─────────────────────────────────┐
│   START TRANSMISSION PROCESS    │
└─────────────────────────────────┘
                │
                ▼
┌─────────────────────────────────┐  S32301
│      ACQUIRE CURRENT TIME       │
└─────────────────────────────────┘
                │
                ▼
┌─────────────────────────────────┐  S32302
│           ACQUIRE               │
│ TRANSMISSION POSSIBLE TIME RANGE│
└─────────────────────────────────┘
                │
                ▼
         ◇─────────────◇  S32303
  NO    ╱  CURRENT       ╲
 ◄──────  TIME IS INCLUDED IN
        ╲ TRANSMISSION POSSIBLE ╱
         ╲  TIME RANGE?  ╱
          ◇───────────◇
                │ YES
                ▼
┌─────────────────────────────────┐  S32304
│     TRANSMIT PROJECTION         │
│       DYNAMIC IMAGES            │
└─────────────────────────────────┘
                │
                ▼
         ◇─────────────◇  S32305
  NO    ╱  STORAGE IN    ╲
 ◄──────  EXTERNAL MEMORIES
        ╲   COMPLETED?   ╱
          ◇───────────◇
                │ YES
                ▼
┌─────────────────────────────────┐  S32306
│   DISPLAY COMPLETION MESSAGE    │
└─────────────────────────────────┘
                │
                ▼
         ┌──────────┐
         │  RETURN  │
         └──────────┘
```

# FIG.46B

**FIG.47**

```
┌─────────────────────────────────────┐
│         START GENERATION            │
│     TIME CALCULATION PROCESS        │
└─────────────────────────────────────┘
```

```
┌─────────────────────────────────────┐
│       ACQUIRE DYNAMIC IMAGE          │      ~S32001
│     ATTRIBUTE INFORMATION            │
│ (FRAME RATE, RESOLUTION, TYPE, LENGTH)│
└─────────────────────────────────────┘
```

```
┌─────────────────────────────────────┐
│     ACQUIRE WINDOW INFORMATION       │      ~S32002
│  (HORIZONTAL SIZES, VERTICAL SIZES)  │
└─────────────────────────────────────┘
```

```
┌─────────────────────────────────────┐
│        RETRIEVE ESTIMATE FACTOR      │      ~S32003
└─────────────────────────────────────┘
```

```
┌─────────────────────────────────────┐
│    CALCULATE PROJECTION DYNAMIC      │      ~S32004
│  IMAGE GENERATION TIME PER WINDOW    │
└─────────────────────────────────────┘
```

```
┌─────────────────────────────────────┐
│      ACQUIRE INFORMATION OF          │      ~S32005
│     NUMBER OF WINDOWPANES            │
└─────────────────────────────────────┘
```

```
┌─────────────────────────────────────┐
│       CALCULATE PROJECTION           │      ~S32006
│  DYNAMIC IMAGE GROUP GENERATION TIME │
└─────────────────────────────────────┘
```

```
┌─────────────────────────────────────┐
│      DISPLAY GENERATION TIME         │      ~S32007
│  AND GENERATION COMPLETION TIME      │
└─────────────────────────────────────┘
```

S32601

```
            GENERATION
         COMPLETION TIME IS
YES      INCLUDED IN TRANSMISSION     NO    S32603
           POSSIBLE TIME
              RANGE?
```

S32602

```
┌──────────────┐                    ┌──────────────┐
│   DISPLAY    │                    │   DISPLAY    │
│ TRANSMISSION │                    │ TRANSMISSION │
│ COMPLETION   │                    │ COMPLETION   │
│    TIME      │                    │ TIME BASED ON│
└──────────────┘                    │ TRANSMISSION │
                                    │ POSSIBLE TIME│
                                    │    RANGE     │
                                    └──────────────┘
```

```
┌─────────────────────────────────────┐
│              RETURN                  │
└─────────────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015026992 A
- JP 2016085435 A
- US 2006248768 A1

- KR 20030022515 A
- WO 2004086755 A1
- WO 2007065694 A1